(19) Europäisches Patentamt
European Patent Office
Office européen des brevets

(11) EP 4 083 085 A1

(12) **EUROPEAN PATENT APPLICATION**
published in accordance with Art. 153(4) EPC

(43) Date of publication:
**02.11.2022 Bulletin 2022/44**

(21) Application number: **20906825.3**

(22) Date of filing: **25.12.2020**

(51) International Patent Classification (IPC):
***C08F 214/18*** *(2006.01)* ***C08F 2/24*** *(2006.01)*
***C08F 2/38*** *(2006.01)*

(52) Cooperative Patent Classification (CPC):
**C08F 2/24; C08F 2/38; C08F 214/18**

(86) International application number:
**PCT/JP2020/048933**

(87) International publication number:
**WO 2021/132635 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2019 JP 2019239491**
**01.05.2020 JP 2020081030**

(71) Applicant: **Daikin Industries, Ltd.**
**Osaka-shi, Osaka 530-8323 (JP)**

(72) Inventors:
- **TAMAI, Rina**
  **Osaka-shi, Osaka 530-8323 (JP)**
- **MORIKAWA, Tatsuya**
  **Osaka-shi, Osaka 530-8323 (JP)**
- **YUASA, Souta**
  **Osaka-shi, Osaka 530-8323 (JP)**
- **TSUCHIYA, Soushi**
  **Osaka-shi, Osaka 530-8323 (JP)**
- **TAKEMURA, Kouhei**
  **Osaka-shi, Osaka 530-8323 (JP)**
- **KAWASAKI, Kazuyoshi**
  **Osaka-shi, Osaka 530-8323 (JP)**
- **IRIE, Masaki**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

# (54) METHOD FOR PRODUCING FLUORINE-CONTAINING POLYMER, FLUORINE-CONTAINING ELASTOMER AND AQUEOUS DISPERSION LIQUID

(57) Provided is a method for producing a fluorine-containing polymer, comprising polymerizing a fluorine-containing monomer in the presence of a fluorine-free compound (1) represented by general formula (1), a polymerization initiator, and an aqueous medium to produce the fluorine-containing polymer:

General formula (1): $CX^1X^2=CX^3\text{-}R\text{-}Z$

wherein $X^1$, $X^2$, and $X^3$ are each independently H or an alkyl group; R is a single bond or an alkylene group; the total number of carbon atoms of $X^1$, $X^2$, $X^3$, and R is 0 to 5; Z is $-SO_3M$, $-OSO_3M$, $-P(=O)(CM)_2$, $-OP(O)(CM)_2$, or - $B(OM)_2$; M is H, a metal atom, $NR^1_4$, optionally substituted imidazolium, optionally substituted pyridinium, or optionally substituted phosphonium; and $R^1$ is independently H or an organic group, and any two $R^1$ may be bonded to each other to form a ring.



Processed by Luminess, 75001 PARIS (FR)

**Description**

TECHNICAL FIELD

The present disclosure relates to a method for producing a fluorine-containing polymer, a fluorine-containing elastomer, and an aqueous dispersion.

BACKGROUND ART

A known method for producing a fluorine-containing polymer such as a fluorine-containing elastomer is a polymerization method involving a fluorine-containing surfactant or a fluorine-free surfactant.

For example, Patent Document 1 proposes the use of a predetermined amount of an aqueous solution comprising a surfactant of the formula $CH_3-(CH_2)_n-SO_3M$ [wherein n is an integer from 6 to 17 or mixtures thereof, and M is a cation having a valence of 1] or a predetermined amount of an aqueous solution comprising a surfactant of the formula $CH_3-(CH_2)_n-CH=CH-CH_2-SO_3M$ [wherein n is an integer from 6 to 17 or mixtures thereof, and M is a cation having a valence of 1] in an emulsion polymerization process for producing a fluoroelastomer having at least 58 weight percent fluorine.

RELATED ART

PATENT DOCUMENTS

Patent Document 1: Japanese Translation of PCT International Application Publication No. 2004-510850

SUMMARY OF THE INVENTION

PROBLEM TO BE SOLVED BY THE INVENTION

An object of the present disclosure is to provide a method for producing a fluorine-containing polymer, the method being capable of producing a sufficient number of fluorine-containing polymer particles at a sufficient polymerization rate, while suppressing adhesion of the fluorine-containing polymer to a polymerization tank, even in the absence of a conventionally used surfactant.

MEANS FOR SOLVING THE PROBLEM

The present disclosure provides a method for producing a fluorine-containing polymer, comprising polymerizing a fluorine-containing monomer in the presence of a fluorine-free compound (1) represented by general formula (1), a polymerization initiator, and an aqueous medium to produce the fluorine-containing polymer:

General formula (1) : $CX^1X^2=CX^3-R-Z$

wherein $X^1$, $X^2$, and $X^3$ are each independently H or an alkyl group; R is single bond or an alkylene group; the total number of carbon atoms of $X^1$, $X^2$, $X^3$, and R is 0 to 5; Z is $-SO_3M$, $-OSO_3M$, $-P(=O)(CM)_2$, $-OP(O)(CM)_2$, or $-B(OM)_2$; M is H, a metal atom, $NR^1_4$, optionally substituted imidazolium, optionally substituted pyridinium, or optionally substituted phosphonium; and $R^1$ is independently H or an organic group, and any two $R^1$ may be bonded to each other to form a ring.

In the production method of the present disclosure, the fluorine-containing polymer is preferably a fluorine-containing elastomer.

In the production method of the present disclosure, the fluorine-containing elastomer preferably has a Mooney viscosity (ML1 + 10 (100°C)) of 10 to 130.

In the production method of the present disclosure, the amount of the fluorine-free compound (1) is preferably 3 to 5,000 mass ppm based on the aqueous medium.

In the production method of the present disclosure, the fluorine-free compound (1) is preferably a fluorine-free compound represented by general formula (1-1):

General formula (1-1) : $CH_2=CX^4-R^2-Z$

wherein $X^4$ is H or $CH_3$, $R^2$ is single bond or an alkylene group having 1 to 3 carbon atoms, and Z is as described above.

In general formula (1) or general formula (1-1), Z is preferably $-SO_3M$ or $-OSO_3M$, wherein M is as described

above.

In the production method of the present disclosure, the fluorine-containing polymer preferably contains vinylidene fluoride unit or tetrafluoroethylene unit.

In the production method of the present disclosure, the fluorine-containing polymer preferably contains vinylidene fluoride unit.

In the production method of the present disclosure, preferably, the fluorine-containing monomer is polymerized also in the presence of a fluorine-containing compound (A) represented by general formula (A):

General formula (A): $CX^iX^k{=}CX^jR^a\text{-}(CZ^1Z^2)_k\text{-}Y^3$ (A)

wherein $X^i$, $X^j$, and $X^k$ are each independently F, Cl, H, or $CF_3$; $Y^3$ is a hydrophilic group; $R^a$ is a linking group; $Z^1$ and $Z^2$ are each independently H, F, or $CF_3$; and k is 0 or 1, provided that at least one of $X^i$, $X^k$, $X^j$, $R^a$, $Z^1$, and $Z^2$ comprises fluorine atom, and provided that when k is 0, Ra is a linking group other than single bond.

In the production method of the present disclosure, preferably, the fluorine-containing monomer is polymerized also in the presence of a chain transfer agent.

Also, the present disclosure provides a fluorine-containing elastomer comprising a monomer unit based on the fluorine-free compound (1) represented by general formula (1).

Further, the present disclosure provides an aqueous dispersion comprising the fluorine-containing elastomer and an aqueous medium.

## EFFECTS OF INVENTION

The present disclosure can provide a method for producing a fluorine-containing polymer, the method being capable of producing a sufficient number of fluorine-containing polymer particles at a sufficient polymerization rate, while suppressing adhesion of the fluorine-containing polymer to a polymerization tank, even in the absence of a conventionally used surfactant.

## DESCRIPTION OF EMBODIMENTS

Before describing specific embodiments of the present disclosure, some terms used herein are defined or explained.

Herein, the fluorine-containing elastomer is an amorphous fluoropolymer. Being "amorphous" means that the size of a melting peak (ΔH) appearing in differential scanning calorimetry (DSC) (temperature-increasing rate 10°C/min) or differential thermal analysis (DTA) (temperature-increasing rate 10°C/min) of the fluoropolymer is 4.5 J/g or less. The fluorine-containing elastomer exhibits elastomeric characteristics by being crosslinked. Elastomeric characteristics mean such characteristics that the polymer can be stretched, and retain its original length when the force required to stretch the polymer is no longer applied.

Herein, the perfluoromonomer is a monomer that does not contain a carbon atom-hydrogen atom bond within the molecule. In addition to carbon atoms and fluorine atoms, the perfluoromonomer may be a monomer in which some fluorine atoms bonded to carbon atoms are replaced with chlorine atoms, or may be a monomer having a nitrogen atom, an oxygen atom, a sulfur atom, a phosphorus atom, a boron atom, or a silicon atom in addition to carbon atoms. The perfluoromonomer is preferably a monomer in which all hydrogen atoms are replaced with fluorine atoms. The perfluoromonomer does not include a monomer that provides a crosslinkable group.

The monomer that provides a crosslinking site is a monomer (a cure site monomer) that provides a fluoropolymer with a crosslinking site for forming a crosslink by a curing agent (a cross-linking agent). The monomer that provides a crosslinking site includes a monomer that provides a crosslinkable group.

Herein, the contents of the respective monomer units constituting the fluorine-containing polymer can be calculated by a suitable combination of NMR, FT-IR, elemental analysis, and X-ray fluorescence analysis in accordance with the types of the monomers.

Herein, the term "organic group" means a group containing one or more carbon atoms or a group formed by removing one hydrogen atom from an organic compound.

Examples of the "organic group" include:

an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,

a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents,
a cyano group,
a formyl group,
RaO-,
RaCO-,
$RaSO_2$-,
RaCOO-,
RaNRaCO-,
RaCONRa-,
RaOCO-,
$RaOSO)_2$-, and
$RaNRbSO_2$-
wherein each Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents, and Rb is independently H or an alkyl group optionally having one or more substituents.

The organic group is preferably an alkyl group optionally having one or more substituents.

The term "substituent" as used herein means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxy amino group, a carbamoylamino group, a sulfamoylamino group, a halogen atom, a sulfamoylcarbamoyl group, a carbamoyl sulfamoyl group, a dialiphatic oxyphosphinyl group, and a diaromatic oxyphosphinyl group.

The aliphatic group may be saturated or unsaturated, and may have a hydroxyl group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8 and preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 carbon atoms and preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include 5- or 6-membered heterocyclic groups having 2 to 12 and preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl

group, an aliphatic thio group, an amino group, an aliphatic amino group, an acylamino group, a carbamoylamino group, or the like. Examples of the acyl group include acyl groups having 2 to 8 and preferably 2 to 4 carbon atoms in total, such as an acetyl group, a propanoyl group, a benzoyl group, and a 3-pyridinecarbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group include acylamino groups having 2 to 12 and preferably 2 to 8 carbon atoms in total and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group include alkoxycarbonyl groups having 2 to 8 and preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group, or the like. Examples of the carbamoyl group include an unsubstituted carbamoyl group and alkylcarbamoyl groups having 2 to 9 carbon atoms in total, and preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include alkylsulfonyl groups having 1 to 6 carbon atoms in total and preferably 1 to 4 carbon atoms in total, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups having 2 to 12 carbon atoms in total and preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, the aromatic sulfonamide group, and the heterocyclic sulfonamide group may be, for example, a methanesulfonamide group, a benzenesulfonamide group, and a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8 and preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group may have an aliphatic group, an aliphatic oxy group, a halogen atom, a carbamoyl group, a heterocyclic group having a ring condensed with the aryl group, or an aliphatic oxycarbonyl group, and preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples include alkylthio groups having 1 to 8 carbon atoms in total and more preferably 1 to 6 carbon atoms in total, such as a methylthio group, an ethylthio group, a carbamoylmethylthio group, and a t-butylthio group.

The carbamoylamino group may have an aliphatic group, an aryl group, a heterocyclic group, or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups

having 7 to 13 carbon atoms in total, and heterocyclic carbamoylamino groups having 3 to 12 carbon atoms in total, and preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino groups having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

A range indicated by endpoints as used herein includes all numerical values within the range (for example, the range of 1 to 10 includes 1.4, 1.9, 2.33, 5.75, 9.98, and the like).

The phrase "at least one" as used herein includes all numerical values equal to or greater than 1 (for example, at least 2, at least 4, at least 6, at least 8, at least 10, at least 25, at least 50, at least 100, and the like).

Hereinafter, specific embodiments of the present disclosure will now be described in detail, but the present disclosure is not limited to the following embodiments.

In the production method of the present disclosure, a fluorine-containing monomer is polymerized in the presence of a fluorine-free compound (1), a polymerization initiator, and an aqueous medium to produce a fluorine-containing polymer.

As for a conventional method for producing a fluorine-containing polymer or, in particular, method for producing a fluorine-containing elastomer, for example, a method involving a surfactant having a relatively large number of carbon atoms as described in Patent Document 1 is known. However, the conventional method is problematic in that the fluorine-containing elastomer produced by polymerization likely adheres to a polymerization tank. Moreover, with the conventional method, a sufficient polymerization rate is not obtained, the number of fluorine-containing elastomer particles produced is small, and it is thus difficult to produce a fluorine-containing elastomer with high productivity.

The production method of the present disclosure is a method for producing a fluorine-containing polymer, involving a compound that is not a polymer such as polyvinyl sulfonic acid, that is a low molecular weight compound, and that has a specific structure not containing a fluorine atom, and, therefore, the method is capable of producing a sufficient number of fluorine-containing polymer particles or, in particular, fluorine-containing elastomer particles, at a sufficient polymerization rate, while suppressing adhesion of the fluorine-containing polymer to a polymerization tank, even in the absence of a conventionally used surfactant.

The fluorine-free compound (1) is a compound that does not contain a fluorine atom within the molecule and that is represented by general formula (1). In the production method of the present disclosure, one or two or more fluorine-free compounds (1) may be used.

General formula (1) : $CX^1X^2=CX^3\text{-}R\text{-}Z$

wherein $X^1$, $X^2$, and $X^3$ are each independently H or an alkyl group; R is a single bond or an alkylene group; the total number of carbon atoms of $X^1$, $X^2$, $X^3$, and R is 0 to 5; Z is $-SO_3M$, $-OSO_3M$, $-P(=O)(OM)_2$, $-OP(O)(OM)_2$, or $-B(OM)_2$; M is H, a metal atom, $NR^1_4$, optionally substituted imidazolium, optionally substituted pyridinium, or optionally substituted phosphonium; and $R^1$ is independently H or an organic group, and any two $R^1$ may be bonded to each other to form a ring.

In general formula (1), $X^1$, $X^2$, and $X^3$ are each independently H or an alkyl group. The alkyl group is not limited as long as it is an alkyl group that does not contain a fluorine atom, and examples include linear or branched alkyl groups. Examples of the alkyl group include $-CH_3$, $-CH_2CH_3$, $-CH_2CH_2CH_3$, and $-CH(CH_3)CH_3$, and, in particular, $-CH_3$ is preferable.

In general formula (1), $X^1$ and $X^2$ are each preferably H. In general formula (1), $X^3$ is preferably -H or $-CH_3$, and more preferably -H.

In general formula (1), R is a single bond or an alkylene group. The alkylene group is not limited as long as it is an alkylene group that does not contain a fluorine atom, and examples include linear or branched alkylene groups. Examples of the alkylene group include $-CH_2-$, $-CH_2CH_2-$, $-CH_2CH_2CH_2-$, and $-CH(CH_3)CH_2-$, and, in particular, $-CH_2-$ is preferable.

In general formula (1), R is preferably a single bond or $-CH_2-$, and more preferably a single bond.

In general formula (1), the total number of carbon atoms of $X^1$, $X^2$, $X^3$, and R is 0 to 5, preferably 0 to 4, more preferably 0 to 3, even more preferably 0 to 2, particularly preferably 0 or 1, and most preferably 0. When the total number of carbon atoms is excessive, the amount of the fluorine-containing polymer adhering to a polymerization tank can be large, a sufficient polymerization rate cannot be obtained, and a sufficient number of fluorine-containing polymer particles cannot be produced.

In general formula (1), Z is $-SO_3M$, $-OSO_3M$, $-P(=O)(CM)_2$, $-OP(O)(OM)_2$, or $-B(OM)_2$. Z is preferably $-SO_3M$, $-OSO_3M$, or $-P(=O)(OM)_2$, and more preferably $-SO_3M$ or $-OSO_3M$ because an even greater number of fluorine-containing polymer particles can be produced at a higher polymerization rate while further suppressing adhesion of the fluorine-containing polymer to a polymerization tank.

M is H, a metal atom, $NR^1_4$, optionally substituted imidazolium, optionally substituted pyridinium, or optionally

substituted phosphonium.

$R^1$ is independently H or an organic group, and any two $R^1$ may be bonded to each other to form a ring. The organic group is preferably an alkyl group. $R^1$ is preferably H or a $C_{1-10}$ organic group, more preferably H or a $C_{1-4}$ organic group, even more preferably H or a $C_{1-4}$ alkyl group, and most preferably H.

Examples of the metal atom include monovalent or divalent metal atoms, an alkali metal (Group 1) or an alkaline earth metal (Group 2) is preferable, and Na, K, or Li is more preferable.

M is preferably H, a metal atom, or $NR^1_4$, more preferably H, Na, K, Li, or $NR^1_4$, even more preferably Na, K, Li, or $NR^1_4$, particularly preferably Na, K, Li, or $NR_4$, and most preferably Na or NH4 because an even greater number of fluorine-containing polymer particles can be produced at a higher polymerization rate while further suppressing adhesion of the fluorine-containing polymer to a polymerization tank and, moreover, the fluorine-containing polymer that provides a molded article having excellent physical properties can be obtained.

The fluorine-free compound (1) is preferably a fluorine-free compound represented by general formula (1-1) because an even greater number of fluorine-containing polymer particles can be produced at a higher polymerization rate while further suppressing adhesion of the fluorine-containing polymer to a polymerization tank:

General formula (1-1) : $CH_2=CX^4-R^2-Z$

wherein $X^4$ is H or $CH_3$, $R^2$ is a single bond or an alkylene group having 1 to 3 carbon atoms, and Z is as described above.

In general formula (1-1), $X^4$ is preferably H. In general formula (1-1), $R^2$ is preferably a single bond or $-CH_2-$, and more preferably a single bond.

The fluorine-free compound (1) is preferably

$CH_2=CHSO_3M$,

$CH_2=CHCH_2SO_3M$,

$CH_2=C(CH_3)CH_2SO_3M$,

$CH_2=C(CH_3)SO_3M$,

$CH_2=CHOSO_3M$,

$CH_2=CHCH_2OSO_3M$,

$CH_2=C(CH_3)CH_2OSO_3M$,

$CH_2=C(CH_3)OSO_3M$,

$CH_2=CHP(O)(OM)_2$,

$CH_2=CHCH_2P(O)(OM)_2$,

$CH_2=C(CH_3)CH_2P(O)(OM)_2$,

$CH_2=C(CH_3)P(O)(OM)_2$,

$CH_2=CHOP(O)(OM)_2$,

$CH_2=CHCH_2OP(O)(OM)_2$,

$CH_2=C(CH_3)CH_2OP(O)(OM)_2$,

$CH_2=C(CH_3)OP(O)(OM)_2$,

$CH_2=CHB(OM)_2$,

$CH_2=CHCH_2B(OM)_2$,

$CH_2=C(CH_3)CH_2B(OM)_2$, or

$CH_2=C(CH_3)B(OM)_2$,

more preferably $CH_2=CHSO_3M$ or $CH_2=CHCH_2SO_3M$, and even more preferably $CH_2=CHSO_3M$.

The fluorine-free compound (1) has a functional group capable of reaction by radical polymerization, and it is thus conjectured that when used in the above polymerization, the fluorine-free compound (1) reacts with a fluorine-containing monomer at the initial stage of the polymerization reaction to form highly stable particles having a hydrophilic group derived from the fluorine-free compound (1). Therefore, it is considered that when polymerization is carried out in the presence of the fluorine-free compound (1), the number of particles of the fluorine-containing polymer produced during polymerization is increased.

The amount of the fluorine-free compound (1) when polymerizing the fluorine-containing monomer may be 3 to 5,000 mass ppm and is preferably 1 to 1,000 mass ppm, more preferably 3 mass ppm or more, even more preferably 5 mass ppm or more, particularly preferably 10 mass ppm or more, and most preferably 15 mass ppm or more, and is more preferably 800 mass ppm or less, even more preferably 500 mass ppm or less, particularly preferably 250 mass ppm or less, and most preferably 150 mass ppm or less, based on the aqueous medium. By regulating the amount of the fluorine-free compound (1) when polymerizing the fluorine-containing monomer to the above range, an even greater number of fluorine-containing polymer particles can be produced at a higher polymerization rate while further suppressing adhesion of the fluorine-containing polymer to a polymerization tank.

Herein, the amount of the fluorine-free compound (1) is the amount of the fluorine-free compound (1) added to the polymerization system. Accordingly, the amount of the fluorine-free compound (1) can be different from the amount of the fluorine-free compound (1) present in the polymerization system. For example, when the fluorine-free compound (1) is incorporated into a fluorine-containing polymer chain by being copolymerized with the fluorine-containing monomer, the amount of the fluorine-free compound (1) is the total amount of the fluorine-free compound (1) present in the polymerization system without being incorporated into the fluorine-containing polymer chain and the fluorine-free compound (1) incorporated into the fluorine-containing polymer chain.

The amount of the fluorine-free compound (1) is also preferably regulated according to the type of the polymerization initiator used in the polymerization and the polymerization temperature. When using a non-redox polymerization initiator as the polymerization initiator and performing the polymerization at 40 to 70°C, the amount of the fluorine-free compound (1) may be 1 to 300 mass ppm and is preferably 1 to 250 mass ppm, more preferably 3 to 150 mass ppm, even more preferably 5 to 100 mass ppm, and most preferably 8 to 80 mass ppm based on the aqueous medium.

When using a non-redox polymerization initiator as the polymerization initiator and performing the polymerization at higher than 70°C and 98°C or lower, the amount of the fluorine-free compound (1) may be 1 to 500 mass ppm and is preferably 1 to 250 mass ppm, more preferably 3 to 250 mass ppm, even more preferably 5 to 200 mass ppm, and most preferably 8 to 100 mass ppm based on the aqueous medium.

When using a redox polymerization initiator as the polymerization initiator and performing the polymerization at 10°C or higher and lower than 40°C, the amount of the fluorine-free compound (1) may be 1 to 300 mass ppm and is preferably 1 to 250 mass ppm, more preferably 3 to 100 mass ppm, even more preferably 5 to 100 mass ppm, and most preferably 8 to 70 mass ppm based on the aqueous medium.

When using a redox polymerization initiator as the polymerization initiator and performing the polymerization at 40 to 70°C, the amount of the fluorine-free compound (1) may be 1 to 500 mass ppm and is preferably 1 to 250 mass ppm, more preferably 3 to 200 mass ppm, even more preferably 5 to 180 mass ppm, and most preferably 8 to 80 mass ppm based on the aqueous medium.

When using a redox polymerization initiator as the polymerization initiator and performing the polymerization at higher than 70°C and 98°C or lower, the amount of the fluorine-free compound (1) may be 1 to 500 mass ppm and is preferably 1 to 300 mass ppm, more preferably 3 to 250 mass ppm, even more preferably 5 to 180 mass ppm, and most preferably 8 to 100 mass ppm based on the aqueous medium.

By regulating the amount of the fluorine-free compound (1) when polymerizing the fluorine-containing monomer to the above range, an even greater number of fluorine-containing polymer particles can be produced at a higher polymerization rate while further suppressing adhesion of the fluorine-containing polymer to a polymerization tank.

In the production method of the present disclosure, the polymerization of the fluorine-containing monomer can be carried out by, for example, introducing the fluorine-free compound (1) and an aqueous medium into a pressure-tight polymerization tank equipped with a stirrer, deoxygenating the polymerization tank, then introducing the monomer, heating the polymerization tank to a predetermined temperature, and adding a polymerization initiator to start the reaction. Since the pressure decreases as the reaction progresses, an additional monomer is continuously or intermittently fed to maintain the initial pressure, the feeding is stopped when a predetermined amount of the monomer is fed, the monomer in the reaction container is purged, and the temperature is returned to room temperature to terminate the reaction.

In the production method of the present disclosure, when to add the fluorine-free compound (1) is not limited,

and the fluorine-free compound (1) is added at any time during the polymerization reaction such that the fluorine-free compound (1) and the polymerization initiator are concomitantly present.

In the production method of the present disclosure, the fluorine-free compound (1) is preferably present in the polymerization system before the solid concentration of the polymer (the fluorine-containing polymer) produced by the polymerization reaches 1.0 mass%, more preferably before the solid concentration reaches 0.8 mass%, even more preferably before the solid concentration reaches 0.5 mass%, particularly preferably before the solid concentration reaches 0.1 mass%, and most preferably before the solid concentration reaches 0 mass%. By adding the fluorine-free compound (1) to the polymerization system before the polymer is produced by the polymerization or when the amount of the polymer produced by the polymerization is small, an even greater number of fluorine-containing polymer particles can be produced at a higher polymerization rate while further suppressing adhesion of the fluorine-containing polymer to a polymerization tank. The solid concentration is the concentration of the polymer (the fluorine-containing polymer) based on the total amount of the aqueous medium and the polymer.

The most preferable time to add the fluorine-free compound (1) in the production method of the present disclosure is before the solid concentration of the polymer (the fluorine-containing polymer) produced by the polymerization reaches 0 mass% because the polymerization reaction can be readily controlled. That is to say, in the production method of the present disclosure, the fluorine-free compound (1) is preferably caused to be present before the polymerization initiator is caused to be present in the polymerization system to start the polymerization reaction.

In the production method of the present disclosure, even when the fluorine-free compound (1) is added to the polymerization system before the polymer is produced by the polymerization or when the amount of the polymer produced by the polymerization is small, the fluorine-free compound (1) may be further added to the polymerization system thereafter. By further adding the fluorine-free compound (1), a high polymerization rate can be maintained while further suppressing adhesion of the fluorine-containing polymer to a polymerization tank. When further adding the fluorine-free compound (1), the total amount (the amount added) of the fluorine-free compound (1) is preferably regulated so as to be within the range of the above-described suitable amount of the fluorine-free compound (1) .

The aqueous medium means a liquid containing water. The aqueous medium is not limited as long as it contains water, and may be a medium that contains water and, for example, a fluorine-free organic solvent such as alcohol, ether, or ketone and/or a fluorine-containing organic solvent having a boiling point of 40°C or lower.

The polymerization initiator may be a radical polymerization initiator. The polymerization initiator is not limited as long as it can produce radicals at the temperature of polymerizing the fluorine-containing monomer, and an oil-soluble polymerization initiator, a water-soluble polymerization initiator, and the like can be used while a water-soluble polymerization initiator is preferable. The polymerization initiator may be combined with a reducing agent or the like to be used as a redox initiator.

The amount of the polymerization initiator when polymerizing the fluorine-containing monomer is suitably determined according to the type of the monomer, the molecular weight of the intended fluorine-containing polymer, and the reaction rate. The amount of the polymerization initiator is suitably determined according to the molecular weight of the intended fluorine-containing polymer and the polymerization reaction rate, and is preferably 0.00001 to 10 mass%, more preferably 0.0001 to 10 mass%, even more preferably 0.01 to 5 mass%, and particularly preferably 0.01 to 1 mass% based on the total amount of the monomer being 100 mass%.

The polymerization initiator may be an oil-soluble radical polymerization initiator or a water-soluble radical polymerization initiator.

The oil-soluble radical polymerization initiator may be a known oil-soluble peroxide, and representative examples include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω-hydro-dodecafluorohexanoyl)peroxide, di(ω-hydro-tetradecafluoroheptanoyl)peroxide, di(ω-hydro-hexadecafluorononanoyl)peroxide, di (perfluorobutyryl)peroxide, di (perfluorovaleryl)peroxide, di (perfluorohexanoyl)peroxide, di (perfluoroheptanoyl)peroxide, di (perfluorooctanoyl)peroxide, di (perfluorononanoyl)peroxide, di (ω-chloro-hexafluorobutyryl)peroxide, di (ω-chloro-decafluorohexanoyl)peroxide, di (ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroPperfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The water-soluble radical polymerization initiator may be a known water-soluble peroxide, and examples include ammonium salts, potassium salts, and sodium salts of persulfuric acid, perboric acid, perchloric acid, perphosphoric acid, percarbonic acid, and the like, organic peroxides such as disuccinic acid peroxide and diglutaric acid peroxide, t-butyl permaleate, and t-butyl hydroperoxide. A reducing agent such as sulfite may be contained together, and the amount thereof may be 0.1 to 20 times the amount of the peroxide.

The water-soluble peroxide is preferably a salt of persulfuric acid because the amount of radicals to be produced

can be easily regulated, and potassium persulfate ($K_2S_2O_8$) and ammonium persulfate ($(NH_4)_2S_2O_8$) are preferable, and ammonium persulfate is most preferable.

When carrying out the polymerization using a water-soluble peroxide at a polymerization temperature of 45°C or higher, the polymerization is preferably carried out without using a reducing agent.

For example, when carrying out the polymerization at a low temperature of 60°C or lower, the polymerization initiator to be used is preferably a redox initiator obtained by combining an oxidizing agent and a reducing agent. That is to say, the polymerization is preferably carried out in the presence of a redox initiator.

Examples of the oxidizing agent include persulfates, organic peroxides, potassium permanganate, manganese triacetate, ammonium cerium nitrate, and bromate. Examples of the reducing agent include sulfites, bisulfites, bromates, diimine, oxalic acid, and sulfinic acid metal salts. Examples of persulfates include ammonium persulfate and potassium persulfate. Examples of sulfites include sodium sulfite and ammonium sulfite. To increase the decomposition rate of the initiator, a copper salt or an iron salt is also preferably added to the combination of the redox initiator. The copper salt may be copper(II) sulfate, and the iron salt may be iron(II) sulfate. When a copper salt or an iron salt is used, a chelating agent is added particularly preferably. The chelating agent is preferably disodium ethylenediaminetetraacetate dihydrate.

Examples of the redox initiator include potassium permanganate/oxalic acid, ammonium persulfate/a bisulfurous acid salt/iron(II) sulfate, ammonium persulfate/a sulfurous acid salt/iron (II) sulfate, ammonium persulfate/a sulfurous acid salt, ammonium persulfate/iron(II) sulfate, manganese triacetate/oxalic acid, cerium ammonium nitrate/oxalic acid, a bromic acid salt/a sulfurous acid salt, a bromic acid salt/a bisulfurous acid salt, and ammonium persulfate/sodium hydroxymethanesulfinate dihydrate, and ammonium persulfate/sodium hydroxymethanesulfinate dihydrate is preferable.

When using a redox initiator, one of an oxidizing agent and a reducing agent may be introduced into a polymerization tank in advance, and then the other may be added continuously or intermittently to start the polymerization. For example, when using ammonium persulfate/sodium hydroxymethanesulfinate dihydrate, preferably ammonium persulfate is introduced into a polymerization tank, and then sodium hydroxymethanesulfinate dihydrate is continuously added thereto.

The amount of persulfate used in the redox initiator is preferably 0.001 to 2.0 mass%, more preferably 0.01 to 1.5 mass%, and particularly preferably 0.05 to 1.0 mass% based on the aqueous medium used in the polymerization.

The amount of the reducing agent used is preferably 1 to 30 mass%, more preferably 3 to 25 mass%, and particularly preferably 5 to 20 mass% based on the aqueous medium used in the polymerization.

The amount of the third component (such as the above copper salt or iron salt) used is preferably 0.001 to 0.5 mass%, more preferably 0.005 to 0.4 mass%, and particularly preferably 0.01 to 0.3 mass% based on the aqueous medium used in the polymerization.

In the production method of the present disclosure, the fluorine-containing monomer may be polymerized also in the presence of a chain transfer agent. The chain transfer agent may be a known chain transfer agent, and, for example, hydrocarbon, ester, ether, alcohol, ketone, a halogen-containing compound, carbonate, and the like are usable. In particular, isopentane, diethyl malonate, and ethyl acetate are preferable from the viewpoint that the reaction rate is unlikely impaired, and diiodine compounds such as $I(CF_2)_4I$, $I(CF_2)_6I$, and ICH2I are preferable from the viewpoint that the polymer terminal can be iodinated, and such a compound can be used as a reactive polymer.

The chain transfer agent used is particularly preferably a bromine compound or an iodine compound. The polymerization method involving a bromine compound or an iodine compound is, for example, iodine transfer polymerization or bromine transfer polymerization.

The iodine compound and the bromine compound are water-insoluble and are unlikely emulsified. Accordingly, their use is conventionally limited in emulsion polymerization, and there is a tendency that a large amount of a surfactant has to be used. According to the production method of the present disclosure, the fluorine-containing polymer can be obtained by polymerization involving an iodine compound or a bromine compound, such as iodine transfer polymerization or bromine transfer polymerization, even in the absence of a conventionally used surfactant.

Iodine transfer polymerization refers to a method involving living radical polymerization by a radical chain reactivation mechanism, which is radically active due to a low carbon-iodine bond dissociation energy and occurs due to the involvement of a chain transfer reaction during the course of a radical polymerization reaction. Known reaction conditions can be suitably used, and, for example, the reaction conditions described in, but are not limited to, "KOBUNSHI RONBUNSHU (Japanese Journal of Polymer Science and Technology), Vol. 49, No. 10, pp. 765-783, October 1992", Japanese Patent Laid-Cpen No. 53-3495, and the like can be suitably adopted. Similar polymerization can be carried out by using a bromine compound in place of an iodine compound, and such polymerization is referred to as bromine transfer polymerization herein.

Among these, iodine transfer polymerization is preferable in terms of polymerization reactivity, crosslinking reactivity, and the like.

Representative examples of the bromine compound and the iodine compound include compounds represented by the following general formula:

$R^8I_xBr_y$

wherein x and y are each independently an integer of 0 to 2 and satisfy $1 \leq x+y \leq 2$, and $R^8$ is a saturated or unsaturated fluorohydrocarbon group or chlorofluorohydrocarbon group having 1 to 16 carbon atoms, or a hydrocarbon group having 1 to 3 carbon atoms, and may contain an oxygen atom. Iodine or bromine is introduced into a polymer by using a bromine compound or an iodine compound, and functions as a crosslinking point.

Examples of the bromine compound and the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, CFBrClCFClBr, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodomonobromo-substituted product, a diiodomonobromo-substituted product, and a (2-iodoethyl) and (2-bromoethyl)-substituted product of benzene, and one of these compounds may be used singly, or these compounds can also be mutually combined and used.

Among these, in terms of polymerization reactivity, crosslinking reactivity, availability, and the like, compounds that do not contain bromine and solely contain iodine are preferable, and 1,4-diiodoperfluorobutane, 1,6-diiodoperfluorohexane, or 2-iodoperfluoropropane is preferably used.

The amount of the chain transfer agent is preferably $0.2\times10^{-3}$ to 2 mol%, more preferably $0.5\times10^{-3}$ to 1 mol%, even more preferably $1.0\times10^{-3}$ to $5\times10^{-3}$ mol%, and more preferably $1.0\times10^{-3}$ to $3.5\times10^{-3}$ mol% based on the total amount of the monomer used in the polymerization.

In the production method of the present disclosure, the fluorine-containing monomer is polymerized. Examples of the fluorine-containing monomer include fluorine-containing monomers such as vinylidene fluoride (VdF), tetrafluoroethylene (TFE), hexafluoropropylene (HFP), perfluoro(alkyl vinyl ether) (PAVE), chlorotrifluoroethylene (CTFE), trifluoroethylene, trifluoropropylene, tetrafluoropropylene, pentafluoropropylene, trifluorobutene, tetrafluoroisobutene, hexafluoroisobutene, vinyl fluoride, iodine-containing fluorinated vinyl ether, and fluorine-containing monomers (2) represented by general formula (2) :

$CHX^1=CX^2Rf$ (2)

wherein one of $X^1$ and $X^2$ is H, the other is F, and Rf is a linear or branched fluoroalkyl group having 1 to 12 carbon atoms.

In the production method of the present disclosure, at least vinylidene fluoride or tetrafluoroethylene is preferably polymerized as the fluorine-containing monomer, and vinylidene fluoride is more preferably polymerized.

PAVE is more preferably perfluoro(methyl vinyl ether) (PMVE), perfluoro(ethyl vinyl ether) (PEVE), or perfluoro(propyl vinyl ether) (PPVE), and particularly preferably PMVE.

PAVE may be perfluorovinyl ether represented by the formula: $CF_2=CFOCF_2ORf^c$ wherein $Rf^c$ is a linear or branched perfluoroalkyl group having 1 to 6 carbon atoms, a cyclic perfluoroalkyl group having 5 to 6 carbon atoms, or a linear or branched perfluorooxyalkyl group having 1 to 3 oxygen atoms and 2 to 6 carbon atoms. PAVE is preferably, for example, $CF_2=CFDCF_2OCF_3$, $CF_2=CFOCF_2OCF_2CF_3$, or $CF_2=CFOCF_2OCF_2CF_2OCF_3$.

The fluorine-containing monomer (2) is preferably a monomer in which Rf is a linear fluoroalkyl group, and is more preferably a monomer in which Rf is a linear perfluoroalkyl group. Rf preferably has 1 to 6 carbon atoms.

Examples of the fluorine-containing monomer (2) include $CH_2=CFCF_3$, $CH_2=CFCF_2CF_3$, $CH_2=CFCF_2CF_2CF_3$, $CH_2=CFCF_2CF_2CF_2CF_3$, $CHF=CHCF_3$ (1,3,3,3-tetrafluoropropene), $CHF=CHCF_3$ (E form), and $CHF=CHCF_3$ (Z form) and, in particular, 2,3,3,3-tetrafluoropropylene represented by $CH_2=CFCF_3$ is preferable.

In the production method of the present disclosure, a fluorine-free monomer may be polymerized together with the fluorine-containing monomer. Examples of the fluorine-free monomer include $\alpha$-olefin monomers having 2 to 10 carbon atoms, such as ethylene, propylene, butene, and pentene, and alkyl vinyl ethers having an alkyl group having 1 to 20 carbon atoms, such as methyl vinyl ether, ethyl vinyl ether, propyl vinyl ether, cyclohexyl vinyl ether, hydroxybutyl vinyl ether, and butyl vinyl ether, and one or a combination of two or more of these monomers and compounds can be used.

In the production method of the present disclosure, a fluorine-containing polymer such as a partially fluorinated elastomer is produced. In the main embodiments of the production method of the present disclosure, a fluorine-containing elastomer is produced as a fluorine-containing polymer. The fluorine-containing elastomer is preferably a partially fluorinated elastomer because polymerization of the fluorine-containing monomer proceeds more smoothly, and an even greater number of fluorine-containing elastomer particles can be produced at a higher polymerization rate while further suppressing adhesion of the fluorine-containing elastomer to a polymerization tank. The partially fluorinated elastomer is a fluoropolymer that contains a fluorine-containing monomer unit, in which the content of a perfluoromonomer unit is less than 90 mol% based on all polymerization units, and that has a glass transition temperature of 20°C or lower and a melting peak ($\Delta H$) size of 4.5 J/g or less. Hereinafter, an embodiment in which the fluorine-containing polymer is a

fluorine-containing elastomer will now be mainly described.

The fluorine-containing elastomer is preferably a fluorine-containing elastomer containing $-CH_2-$ in the main chain. Examples of the fluorine-containing elastomer containing $-CH_2-$ in the main chain include fluorine-containing elastomers described below. The fluorine-containing elastomer containing $-CH_2-$ in the main chain (a partially fluorinated elastomer) is not limited as long as it contains a chemical structure represented by $-CH_2-$, examples include fluorine-containing elastomers containing a structure such as $-CH_2-CF_2-$, $-CH_2-CH(CH_3)-$, $-CH_2-CH_2-$, or $-CH_2CF(CF_3)-$, and these can be introduced into the main chain of a fluorine-containing elastomer by polymerizing, for example, vinylidene fluoride, propylene, ethylene, and 2,3,3,3-tetrafluoropropylene. The content of the tetrafluoroethylene unit in the fluorine-containing elastomer (the content of a polymerization unit that is based on tetrafluoroethylene relative to all polymerization units of the fluorine-containing elastomer) may be less than 40 mol%.

The fluorine-containing elastomer preferably contains a structural unit derived from at least one monomer selected from the group consisting of, for example, tetrafluoroethylene (TFE), vinylidene fluoride (VdF), and a perfluoroethylenically unsaturated compound (such as hexafluoropropylene (HFP) or perfluoro(alkyl vinyl ether) (PAVE)) represented by the general formula: $CF_2=CF-Rf^a$ wherein $Rf^a$ is $-CF_3$ or $-ORf^b$ ($Rf^b$ is a perfluoroalkyl group having 1 to 5 carbon atoms). The fluorine-containing elastomer, in particular, is preferably an elastomer containing a VdF unit or a TFE unit, and is more preferably an elastomer containing a VdF unit.

More specific examples of the fluorine-containing elastomer include a VdF-based fluorine-containing elastomer, a TFE/propylene (Pr)-based fluorine-containing elastomer, a TFE/Pr/VdF-based fluorine-containing elastomer, an ethylene (Et)/HFP-based fluorine-containing elastomer, an Et/HFP/VdF-based fluorine-containing elastomer, an Et/HFP/TFE-based fluorine-containing elastomer, and an Et/TFE/PAVE-based fluorine-containing elastomer. Among these, a VdF-based fluorine-containing elastomer, a TFE/Pr-based fluorine-containing elastomer, a TFE/Pr/VdF-based fluorine-containing elastomer, and an Et/TFE/PAVE-based fluorine-containing elastomer are more suitable in terms of good heat aging resistance and oil resistance.

The VdF-based fluorine-containing elastomer is a fluorine-containing elastomer having a VdF unit. The VdF-based fluorine-containing elastomer preferably has a VdF unit that accounts for 20 mol% or more and 90 mol% or less, more preferably 40 mol% or more and 85 mol% or less, even more preferably 45 mol% or more and 80 mol% or less, and particularly preferably 50 mol% or more and 80 mol% or less of the total number of moles of the VdF unit and the monomer unit derived from further monomers.

Further monomers in the VdF-based fluorine-containing elastomer are not limited as long as they are monomers that are copolymerizable with VdF, and, for example, the above-described fluorine-containing monomers are usable.

The VdF-based fluorine-containing elastomer is preferably at least one copolymer selected from the group consisting of a VdF/HFP copolymer, a VdF/TFE/HFP copolymer, a VdF/CTFE copolymer, a VdF/CTFE/TFE copolymer, a VdF/PAVE copolymer, a VdF/TFE/PAVE copolymer, a VdF/HFP/PAVE copolymer, a VdF/HFP/TFE/PAVE copolymer, a VdF/TFE/Pr copolymer, a VdF/Et/HFP copolymer, and a copolymer of VdF/fluorine-containing monomer (2). Further monomers other than VdF more preferably have at least one monomer selected from the group consisting of TFE, HFP, and PAVE.

Among these VdF-based fluorine-containing elastomers, at least one copolymer selected from the group consisting of a VdF/HFP copolymer, a VdF/TFE/HFP copolymer, a copolymer of VdF/fluorine-containing monomer (2), a VdF/PAVE copolymer, a VdF/TFE/PAVE copolymer, a VdF/HFP/PAVE copolymer, and a VdF/HFP/TFE/PAVE copolymer is preferable, and at least one copolymer selected from the group consisting of a VdF/HFP copolymer, a VdF/HFP/TFE copolymer, a copolymer of VdF/fluorine-containing monomer (2), and a VdF/PAVE copolymer is more preferable.

The VdF/PAVE copolymer preferably has a VdF/PAVE composition of (65 to 90)/(35 to 10) (mol%).

In one preferable form, the VdF/PAVE composition is (50 to 78)/(50 to 22) (mol%).

The VdF/TFE/PAVE copolymer preferably has a VdF/TFE/PAVE composition of (40 to 80)/(3 to 40)/(15 to 35) (mol%).

The VdF/HFP/PAVE copolymer preferably has a VdF/HFP/PAVE composition of (65 to 90)/(3 to 25)/(3 to 25) (mol%).

The VdF/HFP/TFE/PAVE copolymer preferably has a VdF/HFP/TFE/PAVE composition of (40 to 90)/(0 to 25)/(0 to 40)/(3 to 35) (mol%), and more preferably (40 to 80)/(3 to 25)/(3 to 40)/(3 to 25) (mol%) .

As for the copolymer of VdF/fluorine-containing monomer (2), preferably the VdF/fluorine-containing monomer (2) unit is (85 to 20)/(15 to 80) (mol%) and the unit of further monomers other than VdF and the fluorine-containing monomer (2) is 0 to 50 mol% of all monomer units, and the mol% ratio of the VdF/fluorine-containing monomer (2) unit is more preferably (80 to 20)/(20 to 80). It is also one of the preferable forms that the composition of the VdF/fluorine-containing monomer (2) unit is (78 to 50) / (22 to 50) (mol%).

The copolymer of VdF/fluorine-containing monomer (2) in which the VdF/fluorine-containing monomer (2) unit is (85 to 50)/(15 to 50) (mol%), and the unit of further monomers other than VdF and the fluorine-containing monomer (2) is 1 to 50 mol% of all monomer units, is also preferable. Further monomers other than VdF and the fluorine-containing

monomer (2) are preferably monomers exemplified as further monomers with respect to the VdF-based fluorine-containing elastomer, such as TFE, HFP, PMVE, perfluoroethyl vinyl ether (PEVE), PPVE, CTFE, trifluoroethylene, hexafluoroisobutene, vinyl fluoride, Et, Pr, alkyl vinyl ether, and a monomer that provides a crosslinkable group, and, in particular, PMVE, CTFE, HFP, and TFE are more preferable.

The TFE/Pr-based fluorine-containing elastomer refers to a fluorine-containing copolymer composed of 45 to 70 mol% TFE and 55 to 30 mol% Pr. In addition to these two components, a specific third component may be contained.

The specific third component contained may be, for example, a fluorine-containing monomer such as fluorine-containing olefin other than TFE (such as VdF, HFP, CTFE, or perfluoro(butylethylene)), fluorine-containing vinyl ether (perfluoro(propyl vinyl ether), or perfluoro(methyl vinyl ether)); or a hydrocarbon-based monomer such as $\alpha$-olefin (such as ethylene or 1-butene), vinyl ether (such as ethyl vinyl ether, butyl vinyl ether, or hydroxybutyl vinyl ether), or vinyl ester (such as vinyl acetate, vinyl benzoate, vinyl crotonate, or vinyl methacrylate). As for the specific third component, one or a combination of two or more may be used.

The TFE/Pr-based fluorine-containing elastomer preferably contains VdF, and as for the TFE/Pr-based fluorine-containing elastomer, an elastomer composed of TFE, Pr, and VdF is referred to as a TFE/Pr/VdF-based fluorine-containing elastomer.

The TFE/Pr/VdF-based fluorine-containing elastomer may further contain the above specific third component other than VdF. As for the specific third component, one or a combination of two or more may be used. The total content of the third component in the TFE/Pr-based fluorine-containing elastomer is preferably 35 mol% or less, more preferably 33 mol% or less, and even more preferably 31 mol% or less.

The Et/HFP copolymer preferably has an Et/HFP composition of (35 to 80)/(65 to 20) (mol%), and more preferably (40 to 75)/(60 to 25) (mol%) .

The Et/HFP/TFE copolymer preferably has an Et/HFP/TFE composition of (35 to 75)/(25 to 50)/(0 to 15) (mol%), and more preferably (45 to 75)/(25 to 45)/(0 to 10) (mol%).

The Et/TFE/PAVE copolymer preferably has an Et/TFE/PAVE composition of (10-40)/(32-60)/(20-40) (mol%), and more preferably (20 to 40)/(40 to 50)/(20 to 30) (mol%). PAVE is preferably PMVE.

The fluorine-containing elastomer is preferably a fluorine-containing elastomer containing a VdF unit, more preferably a VdF/HFP copolymer or a VdF/HFP/TFE copolymer, particularly preferably a fluorine-containing elastomer having a VdF/HFP/TFE composition of (32 to 85)/(10 to 34)/(0 to 40) (mol%), and most preferably a VdF/HFP/TFE composition of (32 to 85)/(10 to 34)/(0 to 34) (mol%). The VdF/HFP/TFE composition is more preferably (32 to 85)/(15 to 34)/(0 to 34) (mol%), even more preferably (47 to 81)/(17 to 32)/(0 to 26) (mol%), and particularly preferably (47 to 81) / (17 to 29)/(0 to 26) (mol%) .

For example, the VdF/HFP copolymer preferably has a VdF/HFP composition of (45-85)/(15-55) (mol%), more preferably (50 to 83)/(17 to 50) (mol%), even more preferably (55 to 81)/(19 to 45) (mol%), and particularly preferably (60-80)/(20-40) (mol%).

The VdF/HFP/TFE copolymer preferably has a VdF/HFP/TFE composition of (32 to 80)/(10 to 34)/(4 to 34) (mol%).

The above-described configuration is the configuration of the main monomers of the fluorine-containing elastomer, and a monomer that provides a crosslinkable group may be copolymerized in addition to the main monomers. The monomer that provides a crosslinkable group is a monomer capable of introducing into the fluorine-containing elastomer a crosslinkable group suitable according to the production method and the crosslinking system, and examples include known polymerizable compounds containing a crosslinkable group such as an iodine atom, a bromine atom, a carbon-carbon double bond, a cyano group, a carboxyl group, a hydroxyl group, an amino group, or an ester group.

Preferable examples of the monomer that provides a crosslinkable group include compounds represented by general formula (3):

$$CY^1{}_2{=}CY^2R_f{}^2X^1 \qquad (3)$$

wherein $Y^1$ and $Y^2$ are each independently a fluorine atom, a hydrogen atom, or $-CH_3$; $R_f{}^2$ is a linear or branched fluorine-containing alkylene group that may have one or more ether-bonding oxygen atoms, that may have an aromatic ring, and in which some or all hydrogen atoms are replaced with fluorine atoms; and $X^1$ is an iodine atom or a bromine atom.

Specific examples of the monomer that provides a crosslinkable group include iodine or bromine-containing monomers represented by general formula (4):

CY^CY^CHR$^{L-}$X$^1$ (4)

(wherein, $Y^1$, $Y^2$, and $X^1$ are as described above; $R_f{}^3$ is a linear or branched fluorine-containing alkylene group that may have one or more ether-bonding oxygen atoms and in which some or all hydrogen atoms are replaced with fluorine atoms, or that is to say, a linear or branched fluorine-containing alkylene group in which some or all hydrogen atoms

are replaced with fluorine atoms, a linear or branched fluorine-containing oxyalkylene group in which some or all hydrogen atoms are replaced with fluorine atoms, or a linear or branched fluorine-containing polyoxyalkylene group in which some or all hydrogen atoms are replaced with fluorine atoms; and $R^1$ is a hydrogen atom or a methyl group), and iodine or bromine-containing monomers represented by general formulae (5) to (22) :

$CY^4_2{=}CY^4(CF_2)_n\text{-}X^1$ (5)

(wherein $Y^4$ is the same or different and is a hydrogen atom or a fluorine atom, and n is an integer of 1 to 8),

$CF_2{=}CFCF_2R_f^4\text{-}X^1$ (6)

(wherein $R^4$ is - $(OCF_2)_n$- or - $(OCF(CF_3))_n$-, and n is an integer of 0 to 5), $CF_2{=}CFCF_2(OCF(CF_3)CF_2)_m(OCH_2CF_2CF_2)_nOCH_2CF_2\text{-}X^1$ (7) (wherein m is an integer of 0 to 5, and n is an integer of 0 to 5),

$CF_2{=}CFCF_2(OCH_2CF_2CF_2)_m\,(OCF(CF_3)CF_2)_nOCF(CF_3)\text{-}X^1$ (8)

(wherein m is an integer of 0 to 5, and n is an integer of 0 to 5),

$CF_2{=}CF(OCF_2CF(CF_3))_mO(CF_2)_n\text{-}X^1$ (9)

(wherein m is an integer of 0 to 5, and n is an integer of 1 to 8),

$CF_2{=}CF(OCF_2CF(CF_3))_m\text{-}X^1$ (10)

(wherein m is an integer of 1 to 5),

$CF_2{=}CFOCF_2(CF\,(CF_3)OCF_2)_nCF(\text{-}X^1)CF_3$ (11)

(wherein n is an integer of 1 to 4),

$CF_2{=}CFO(CF_2)_nOCF(CF_3)\text{-}X^1$ (12)

(wherein n is an integer of 2 to 5),

$CF_2{=}CFO(CF_2)_n\text{-}(C_6H_4)\text{-}X^1$ (13)

(wherein n is an integer of 1 to 6),

$CF_2{=}CF(OCF_2CF(CF_3))_nOCF_2CF(CF_3)\text{-}X^1$ (14)

(wherein n is an integer of 1 to 2),

$CH_2{=}CFCF_2O(CF(CF_3)CF_2O)_nCF(CF_3)\text{-}X^1$ (15)

(wherein n is an integer of 0 to 5),

$CF_2{=}CFO(CF_2CF(CF_3)O)_m(CF_2)_n\text{-}X^1$ (16)

(wherein m is an integer of 0 to 5, and n is an integer of 1 to 3),

$CH_2{=}CFCF_2OCF\,(CF_3)\,OCF\,(CF_3)\,\text{-}X^1$ (17)

$CH_2{=}CFCF_2OCH_2CF_2\text{-}X^1$ (18)

$CF_2{=}CFO(CF_2CF(CF_3)O)_mCF_2CF(CF_3)\text{-}X^1$ (19)

(wherein m is an integer of 0 or more),

$$CF_2=CFOCF(CF_3)CF_2O(CF_2)_n-X^1 \qquad (20)$$

(wherein n is an integer of 1 or more),

$$CF_2=CFOCF_2OCF_2CF(CF_3)OCF_2-X^1 \qquad (21)$$

$$CH_2=CH-(CF_2)_nX^1 \qquad (22)$$

(wherein n is an integer of 2 to 8), (in general formulae (5) to (22), $X^1$ is as described above), and one of these can be used singly, or these can be used in any combination.

The iodine or bromine-containing monomer represented by general formula (4) is preferably iodine-containing fluorinated vinyl ether represented by general formula (23):

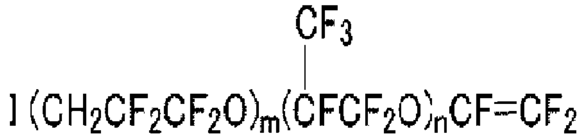

(23)

wherein m is an integer of 1 to 5, and n is an integer of 0 to 3, more specifically $ICH_1CF_2CF_2OCF=CF_2$, $I(CH_2CF_2CF_2O)_2CF=CF_2$, $I(CH_2CF_2CF_2O)_3CF = CF_2$,

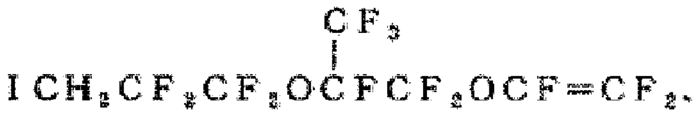

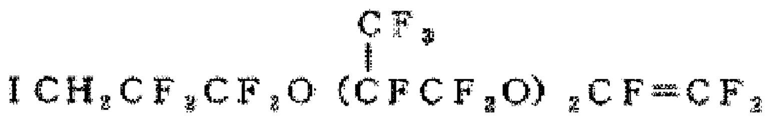

and among these, $ICH_2CF_2CF_2OCF=CF_2$ is preferable.

More specifically, the iodine or bromine-containing monomer represented by general formula (5) is preferably $ICF_2CF_2CF=CH_2$ or $I(CF_2CF_2)_2CF=CH_2$ .

More specifically, the iodine or bromine-containing monomer represented by general formula (9) is preferably $I(CF_2CF_2)_2OCF=CF_2$.

More specifically, the iodine or bromine-containing monomer represented by general formula (22) is preferably $CH_2=CHCF_2CF_2I$ or $I(CF_2CF_2)_2CH=CH_2$.

The monomer that provides a crosslinkable group is preferably a bisolefin compound represented by the formula: $R^2R^3C=CR^4-Z-CR^5=CR^6R^7$ wherein $R^2$, $R^3$, $R^4$, $R^5$, $R^6$, and $R^7$ are the same or different and are each independently H or an alkyl group having 1 to 5 carbon atoms; and Z is a linear or branched alkylene or cycloalkylene group having 1 to 18 carbon atoms that may contain an oxygen atom and that is preferably at least partially fluorinated, or a (per)fluoropolyoxyalkylene group. Herein, the "(per)fluoropolyoxyalkylene group" means "a fluoropolyoxyalkylene group or a perfluoropolyoxyalkylene group".

Z is preferably a (per)fluoroalkylene group having 4 to 12 carbon atoms, and $R^2$, $R^3$, $R^4$, $R^5$, $R^6$, and $R^7$ are preferably hydrogen atoms.

Z when being a (per)fluoropolyoxyalkylene group is preferably a (per)fluoropolyoxyalkylene group represented by the formula:

$$-(Q)_p-CF_2O-(CF_2CF_2O)_m-(CF_2O)_n-CF_2-(Q)_p-$$

wherein Q is an alkylene group having 1 to 10 carbon atoms or an oxyalkylene group having 2 to 10 carbon atoms, p is 0 or 1, and m and n are integers such that the m/n ratio is 0.2 to 5 and that the molecular weight of the (per)fluoropolyoxyalkylene group is in a range of 500 to 10,000 and preferably 1,000 to 4,000. In this formula, Q is preferably selected from $-CH_2OCH_2-$ and $-CH_2O(CH_2CH_2O)_sCH_2-$ (s = 1 to 3) .

Preferable bisolefin is

$CH_2=CH-(CF_2)_2-CH=CH_2$,

$CH_2=CH-(CF_2)_4-CH=CH_2$,

$CH_2=CH-(CF_2)_6-CH=CH_2$,

formula: $CH_2=CH-Z^1-CH=CH_2$

(wherein $Z^1$ is $-CH_2OCH_2-CF_2O-(CF_2CF_2O)_m-(CF_2O)_n-CF_2-CH_2OCH_2-$ (m/n is 0.5), and the molecular weight is preferably 2,000),
and the like.

In particular, 3,3,4,4,5,5,6,6,7,7,8,8-dodecafluoro-1,9-decadiene represented by $CH_2=CH-(CF_2)_6-CH=CH_2$ is preferable.

The number average molecular weight Mn of the fluorine-containing elastomer is preferably 1,000 to 1,000,000, more preferably 10,000 to 500,000, and particularly preferably 20,000 to 300,000.

The fluorine content of the fluorine-containing elastomer is preferably 50 mass% or more, more preferably 55 mass% or more, and even more preferably 60 mass% or more. The upper limit of the fluorine content is preferably 75 mass% or less, and more preferably 73 mass% or less. The fluorine content is calculated based on a measured value obtained by $^{19}F$-NMR, $^{1}H$-NMR, elemental analysis, or the like.

The fluorine-containing elastomer preferably has a Mooney viscosity at 100°C (ML1 + 10 (100°C)) of 130 or less. The Mooney viscosity is more preferably 110 or less, and even more preferably 90 or less. The Mooney viscosity is more preferably 10 or more, and even more preferably 20 or more. Here, the Mooney viscosity is a value measured in accordance with JIS K 6300-1.2013.

The fluorine-containing elastomer preferably has a glass transition temperature of -50 to 0°C. The glass transition temperature is more preferably -2°C or lower, and even more preferably -3°C or lower. The glass transition temperature is more preferably -45°C or higher, and even more preferably -40°C or higher. The glass transition temperature may be - 10°C or higher, and may be -9°C or higher. Here, the glass transition temperature can be determined by heating 10 mg of a sample at 20°C/min to give a DSC curve using a differential scanning calorimeter (e.g., X-DSC 7000 manufactured by Hitachi High-Tech Science Corporation) and calculating a glass transition temperature from a DSC differential curve in accordance with JIS K 6240:2011.

The fluorine-containing elastomer preferably has an iodine content of 0.05 to 1.0 mass%. The iodine content is more preferably 0.08 mass% or more, and even more preferably 0.10 mass% or more, and is more preferably 0.80 mass% or less, and even more preferably 0.60 mass% or less.

The iodine content can be determined by elemental analysis. Specifically, the iodine content can be measured by mixing 5 mg of $Na_2SO_3$ with 12 mg of the fluorine-containing elastomer, combusting the mixture in oxygen in a quartz flask using an absorbent obtained by dissolving 30 mg of a 1:1 (mass ratio) mixture of $Na_2CO_3$ and $K_2CO_3$ in 20 ml of pure water, leaving the combusted mixture to stand for 30 minutes, and then measuring the iodine content using a Shimadzu 20A ion chromatograph. A calibration curve of a KI standard solution containing 0.5 mass ppm and 1.0 mass ppm of iodine ions can be used.

The fluorine-containing elastomer preferably contains a $-CH_2I$ structure. Whether the $-CH_2I$ structure is contained can be verified by a $^{1}H$-NMR spectrum. The fluorine-containing elastomer containing a $-CH_2I$ structure can be obtained by iodine transfer polymerization.

In the fluorine-containing elastomer, the amount of the $-CH_2I$ structure is preferably 0.05 to 1.50 mol% based on 100 mol% of the $-CH_2$-structure. The amount of the $-CH_2I$ structure is more preferably 0.08 mol% or more and even more preferably 0.12 mol% or more, and is more preferably 1.20 mol% or less, even more preferably 1.00 mol% or less, and particularly preferably 0.80 mol% or less. The amount of the $-CH_2I$ structure can be determined by a $^{1}H$-NMR spectrum.

The fluorine-containing elastomer more preferably contains a $-CF_2CH_2I$ structure. The fluorine-containing elastomer containing the $-CF_2CH_2I$ structure can be obtained by producing a VdF-based fluorine-containing elastomer by iodine transfer polymerization.

In the fluorine-containing elastomer, the amount of the $-CF_2CH_2I$ structure is preferably 0.05 to 1.50 mol% based on 100 mol% of the $-CH_2$-structure. The amount of the $-CF_2CH_2I$ structure is more preferably 0.08 mol% or more and even more preferably 0.12 mol% or more, and is more preferably 1.20 mol% or less, even more preferably 1.00 mol% or less, and particularly preferably 0.80 mol% or less. The amount of the $-CF_2CH_2I$ structure is calculated by A/B*100 from integrated value A of all peak intensities observed in a chemical shift region of 3.75 to 4.05 ppm derived from $-CH_2I$ and integrated value B of all peak intensities observed in chemical shift regions of 2.3 to 2.7 ppm and 2.9 to 3.75 ppm derived from $-CH_2-$ in a $^{1}H$-NMR spectrum.

A suitable fluorine-containing monomer for use in the production method of the present disclosure may be the fluorine-containing monomer described with respect to the fluorine-containing elastomer.

In the production method of the present disclosure, the fluorine-containing monomer may be polymerized also in the presence of the fluorine-containing compound (A) containing a functional group capable of reaction by radical polymerization and a hydrophilic group because an even greater number of fluorine-containing polymer particles can be produced at a higher polymerization rate while further suppressing adhesion of the fluorine-containing polymer to a polymerization tank. In the production method of the present disclosure, one or two or more fluorine-containing compounds (A) may be used. In the production method of the present disclosure, the fluorine-containing monomer may be polymerized in the absence of the fluorine-containing compound (A) . According to the production method of the present disclosure, a sufficient number of fluorine-containing polymer particles can be produced at a sufficient polymerization rate, while suppressing adhesion of the fluorine-containing polymer to a polymerization tank, even when the fluorine-containing monomer is polymerized in the absence of the fluorine-containing compound (A) .

The fluorine-containing compound (A) is preferably a compound containing an anionic or nonionic hydrophilic group, and more preferably a compound containing an anionic hydrophilic group. For example, the fluorine-containing compound (A) may solely contain an anionic hydrophilic group or may solely contain a nonionic hydrophilic group. The fluorine-containing compound (A) may be a compound solely containing an anionic hydrophilic group, may be a compound solely containing a nonionic hydrophilic group, or may be a combination of a compound containing an anionic hydrophilic group and a compound containing a nonionic hydrophilic group.

Examples of the hydrophilic group in the fluorine-containing compound (A) include $-NH_2$, $-P(O)(OM)_2$, $-OP(O)(OM)_2$, $-SO_3M$, $-OSO_3M$, -COOM, - $B(OM)_2$, and -OB (OM) $_2$, wherein M is H, a metal atom, $NR^7_4$, optionally substituted imidazolium, optionally substituted pyridinium, or optionally substituted phosphonium; and $R^7$ is H or an organic group and may be the same or different, and any two may be bonded to each other to form a ring. In particular, the hydrophilic group is preferably $-SO_3M$ or -COOM, and more preferably -COOM. The organic group of $R^7$ is preferably an alkyl group. $R^7$ is preferably H or a $C_{1-10}$ organic group, more preferably H or a $C_{1-4}$ organic group, even more preferably H or a $C_{1-4}$ alkyl group, and most preferably H. When two M are contained in each formula, the two M are the same as or different from each other. Examples of the metal atom include monovalent or divalent metal atoms, an alkali metal (Group 1) or an alkaline earth metal (Group 2) is preferable, and Na, K, or Li is more preferable.

The "functional group capable of reaction by radical polymerization" in the fluorine-containing compound (A) may be a group containing a radically polymerizable unsaturated bond.

The group having a radically polymerizable unsaturated bond is, for example, a group having an ethylenically unsaturated bond, such as a vinyl group or an allyl group. The group having an ethylenically unsaturated bond can be represented by the following formula:

$$CX^eX^g=CX^fR-$$

wherein $X^e$, $X^f$, and $X^g$ are each independently F, Cl, H, $CF_3$, $CF_2H$, $CFH_2$, or $CH_3$; and R is a linking group. The linking group R may be the linking group $R^a$, which will be described below.

Examples of the group having a radically polymerizable unsaturated bond include $-CH=CH_2$, $-CF=CH_2$, $-CH=CF_2$, $-CF=CF_2$, $-CH_2-CH=CH_2$, - $CF_2-CF=CH_2$, $-CF_2-CF=CF_2$, - (C=O) $-CH=CH_2$, - (C=O) $-CF=CH_2$, - (C=O) $-CH=CF_2$, - (C=O) - $CF=CF_2$, - (C=O) -C $(CH_3)$ $=CH_2$, - (C=O) -C $(CF_3)$ $=CH_2$, - (C=O) -C $(CH_3)$ $=CF_2$, - (C=O) - $C(CF_3)=CF_2$, $-O-CH_2-CH=CH_2$, $-O-CF_2-CF=CH_2$, $-O-CH_2-CH=CF_2$, $-O-CF=CF_2$, and $-O-CF_2-CF=CF_2$.

The fluorine-containing compound (A) has a functional group capable of reaction by radical polymerization, and it is thus conjectured that when used in the above polymerization, the fluorine-containing compound (A) reacts with the fluorine-containing monomer and the fluorine-free compound (1) at the initial stage of the polymerization reaction to form highly stable particles having a hydrophilic group derived from the fluorine-free compound (1) and the fluorine-containing compound (A). Therefore, it is considered that when polymerization is carried out in the presence of the fluorine-free compound (1) and the fluorine-containing compound (A), the number of particles of the fluorine-containing polymer produced during polymerization is increased.

In the production method of the present disclosure, the fluorine-containing monomer may be polymerized also in the presence of the fluorine-containing compound (A) represented by general formula (A) because an even greater number of fluorine-containing polymer particles can be produced at a higher polymerization rate, while suppressing adhesion of the fluorine-containing polymer to a polymerization tank:

General formula (A): $$CX^iX^k=CX^jR^a-(CZ^1Z^2)_k-Y^3 \quad (A)$$

wherein $X^i$, $X^j$, and $X^k$ are each independently F, Cl, H, or $CF_3$; $Y^3$ is a hydrophilic group; $R^a$ is a linking group; $Z^1$ and $Z^2$ are each independently H, F, or $CF_3$; and k is 0 or 1, provided that at least one of $X^i$, $X^k$, $X^j$, $R^a$, $Z^1$, and $Z^2$ comprises a fluorine atom, and provided that when k is 0, $R^a$ is a linking group other than a single bond.

$Y^3$ in general formula (A) is a hydrophilic group. Examples of the hydrophilic group include $-NH_2$, $-P(O)(OM)_2$, $-OP(O)(OM)_2$, $-SO_3M$, $-OSO_3M$, $-COOM$, $-B(OM)_2$, and $-OB(OM)_2$, wherein M is H, a metal atom, $NR^7{}_4$, optionally substituted imidazolium, optionally substituted pyridinium, or optionally substituted phosphonium; and $R^7$ is H or an organic group and may be the same or different, and any two may be bonded to each other to form a ring. In particular, the hydrophilic group is preferably $-SO_3M$ or $-COOM$, and more preferably $-COOM$. The organic group of $R^7$ is preferably an alkyl group. $R^7$ is preferably H or a $C_{1-10}$ organic group, more preferably H or a $C_{1-4}$ organic group, even more preferably H or a $C_{1-4}$ alkyl group, and most preferably H. Examples of the metal atom include monovalent or divalent metal atoms, an alkali metal (Group 1) or an alkaline earth metal (Group 2) is preferable, and Na, K, or Li is more preferable.

$R^a$ in general formula (A) is a linking group. The "linking group" as used herein refers to a divalent linking group. The linking group is preferably a single bond or a group containing one carbon atom. However, when k is 0, $R^a$ is a linking group other than a single bond, and is preferably a group containing at least one carbon atom. The number of carbon atoms of the linking group may be 2 or more, may be 4 or more, may be 8 or more, may be 10 or more, or may be 20 or more. The upper limit of the number of carbon atoms of the linking group is not limited, and, for example, may be 100 or less, and may be 50 or less.

The linking group may be linear or branched, cyclic or acyclic, saturated or unsaturated, and substituted or unsubstituted, and, as desired, may contain one or more heteroatoms selected from the group consisting of sulfur, oxygen, and nitrogen, and, as desired, may contain one or more functional groups selected from the group consisting of ester, amide, sulfonamide, carbonyl, carbonate, urethane, urea, and carbamate. The linking group may be a group that does not contain a carbon atom and that is a catenary heteroatom such as oxygen, sulfur, or nitrogen.

$R^a$ is preferably a catenary heteroatom such as oxygen, sulfur, or nitrogen, or a divalent organic group.

When $R^a$ is a divalent organic group, the hydrogen atom bonded to the carbon atom may be replaced with halogen other than fluorine, such as chlorine, and may or may not contain a double bond. $R^a$ may be linear or branched, and may be cyclic or acyclic. $R^a$ may contain a functional group (such as ester, ether, ketone, amine, or halide).

$R^a$ may also be a fluorine-free divalent organic group or a partially fluorinated or perfluorinated divalent organic group.

$R^a$ may be, for example, a hydrocarbon group in which no fluorine atom is bonded to a carbon atom, a hydrocarbon group in which some hydrogen atoms bonded to carbon atoms are replaced with fluorine atoms, a hydrocarbon group in which all hydrogen atoms bonded to carbon atoms are replaced with fluorine atoms, -(C=O)-, -(C=O)-O-, or a hydrocarbon group containing -(C=O)-, and these may contain an oxygen atom, may contain a double bond, and may contain a functional group.

$R^a$ is preferably a hydrocarbon group that has 1 to 100 carbon atoms, that may contain -(C=O)-, -(C=O)-O-, or an ether bond, and that may contain a carbonyl group, and in the hydrocarbon group, some or all hydrogen atoms bonded to carbon atoms may be replaced with fluorine.

$R^a$ is preferably at least one selected from $-(CH_2)_a-$, $-(CF_2)_a-$, $-O-(CF_2)_a-$, $-(CF_2)_a-O-(CF_2)_b-$, $-O(CF_2)_a-O-(CF_2)_b-$, $-(CF_2)_a-[O-(CF_2)_b]_c-$, $-O(CF_2)_a-[O-(CF_2)_b]_c-$, $-[(CF_2)_a-O]_b-[(CF_2)_c-O]_d-$, $-O[(CF_2)_a-O]_b-[(CF_2)_c-O]_d-$, $-O-[CF_2CF(CF_3)O]_a-(CF_2)_b-$, $-(C=O)-$, $-(C=O)-O-$, $-(C=O)-(CH_2)_a-$, $-(C=O)-(CF_2)_a-$, $-(C=O)-O-(CH_2)_a-$, $-(C=O)-O-(CF_2)_a-$, $-(C=O)-[(CH_2)_a-O]_b-$, $-(C=O)-[(CF_2)_a-O]_b-$, $-(C=O)-O[(CH_2)_a-O]_b-$, $-(C=O)-O[(CF_2)_a-O]_b-$, $-(C=O)-O[(CH_2)_a-O]_b-(CH_2)_c-$, $-(C=O)-O[(CF_2)_a-O]_b-(CF_2)_c-$, $-(C=O)-(CH_2)_a-O-(CH_2)_b-$, $-(C=O)-(CF_2)_a-O-(CF_2)_b-$, $-(C=O)-O-(CH_2)_a-O-(CH_2)_b-$, $-(C=O)-O-(CF_2)_a-O-(CF_2)_b-$, $-(C=O)-O-C_6H_4-$, and a combination thereof.

In the formulae, a, b, c, and d are each independently at least 1 or more. a, b, c, and d may each independently be 2 or more, may be 3 or more, may be 4 or more, may be 10 or more, and may be 20 or more. The upper limit of a, b, c, and d is, for example, 100.

Suitable specific examples of $R^a$ include $-CF_2-O-$, $-CF_2-O-CF_2-$, $-CF_2-O-CH_2-$, $-CF_2-O-CH_2CF_2-$, $-CF_2-O-CF_2CF_2-$, $-CF_2-O-CF_2CH_2-$, $-CF_2-O-CF_2CF_2CH_2-$, $-CF_2-O-CF(CF_3)-$, $-CF_2-O-CF(CF_3)CF_2-$, $-CF_2-O-CF(CF_3)CF_2-O-$, $-CF_2-O-CF(CF_3)CH_2-$, $-(C=O)-$, $-(C=O)-O-$, $-(C=O)-(CH_2)-$, $-(C=O)-(CF_2)-$, $-(C=O)-O-(CH_2)-$, $-(C=O)-O-(CF_2)-$, $-(C=O)-[(CH_2)_2-O]_n-$, $-(C=O)-[(CF_2)_2-O]_n-$, $-(C=O)-O[(CH_2)_2-O]_n-$, $-(C=O)-O[(CF_2)_2-O]_n-$, $-(C=O)-O[(CH_2)_2-O]_n-(CH_2)-$, $-(C=O)-O[(CF_2)_2-O]_n-(CF_2)-$, $-(C=O)-(CH_2)_2-O-(CH_2)-$, $-(C=O)-(CF_2)_2-O-(CF_2)-$, $-(C=O)-O-(CH_2)_2-O-(CH_2)-$, $-(C=O)-O-(CF_2)_2-O-(CF_2)-$, and $-(C=O)-O-C_6H_4-$. In particular, $R^a$ is preferably $-CF_2-O-$, $-CF_2-O-CF_2-$, $-CF_2-O-CF_2CF_2-$, $-CF_2-O-CF(CF_3)-$, $-CF_2-O-CF(CF_3)CF_2-$, $-CF_2-O-CF(CF_3)CF_2-O-$, $-(C=O)-$, $-(C=O)-O-$, $-(C=O)-(CH_2)-$, $-(C=O)-O-(CH_2)-$, $-(C=O)-O[(CH_2)_2-O]_n-$, $-(C=O)-O[(CH_2)_2-O]_n-(CH_2)-$, $-(C=O)-(CH_2)_2-O-(CH_2)-$, or $-(C=O)-O-C_6H_4-$.

In the formulae, n is an integer of 1 to 10.

$-R^a-(CZ^1Z^2)_k$ in general formula (A) is preferably $-CF_2-O-CF_2-$, $-CF_2-O-CF(CF_3)-$, $-CF_2-O-C(CF_3)_2-$, $-CF_2-O-CF_2-CF_2-$, $-CF_2-O-CF_2-CF(CF_3)-$, $-CF_2-O-CF_2-C(CF_3)_2-$, $-CF_2-O-CF_2CF_2-CF_2-$, $-CF_2-O-CF_2CF_2-CF(CF_3)-$, $-CF_2-O-CF_2CF_2-C(CF_3)_2-$, $-CF_2-O-CF(CF_3)-CF_2-$, $-CF_2-O-CF(CF_3)-CF(CF_3)-$, $-CF_2-O-CF(CF_3)-C(CF_3)_2-$, $-CF_2-O-CF(CF_3)-CF_2-$, $-CF_2-O-CF(CF_3)-CF(CF_3)-$, $-CF_2-O-CF(CF_3)-C(CF_3)_2-$, $-CF_2-O-CF(CF_3)CF_2-CF_2-$, $-CF_2-O-CF(CF_3)CF_2-CF(CF_3)-$, $-CF_2-O-CF(CF_3)CF_2-C(CF_3)_2-$, $-CF_2-O-CF(CF_3)CF_2-O-CF_2-$, $-CF_2-O-CF(CF_3)CF_2-O-CF(CF_3)-$, $-CF_2-O-CF(CF_3)CF_2-O-C(CF_3)_2-$, $-(C=O)-$, $-(C=O)-O-$, $-(C=O)-(CH_2)-$, $-(C=O)-(CF_2)-$, $-(C=O)-O-(CH_2)-$, $-(C=O)-O-(CF_2)-$, $-(C=O)-[(CH_2)_2-O]_n-(CH_2)-$, $-(C=O)-[(CF_2)_2-O]_n-(CF_2)-$, $-(C=O)-[(CH_2)_2-O]_n-(CH_2)-(CH_2)-$,

$-(C=O)-[(CF_2)_2-O_n-(CF_2)-(CF_2)-$, $-(C=O)-O[(CH_2)_2-O]_n-(CF_2)-$, $-(C=O)-O[(CH_2)_2-O]_n-(CH_2)-(CH_2)-$, $-(C=O)-O[(CF_2)_2-O]_n-(CF_2)-$, $-(C=O)-O[(CF_2)_2-O]_n-(CF_2)-(CF_2)-$, $-(C=O)-(CH_2)_2-O-(CH_2)-(CH_2)-$, $-(C=O)-(CF_2)_2-O-(CF_2)-(CF_2)-$, $-(C=O)-O-(CH_2)_2-O-(CH_2)-(CH_2)-$, $-(C=O)-O-(CF_2)_2-O-(CF_2)-(CF_2)-$, $-(C=O)-O-(CH_2)_2-O-(CH_2)-C(CF_3)_2-$, $-(C=O)-O-(CF_2)_2-O-(CF_2)-C(CF_3)_2-$, or $-(C=O)-O-C_6H_4-C(CF_3)_2$, and more preferably $-CF_2-O-CF(CF_3)-$, $-CF_2-O-CF_2-CF(CF_3)-$, $-CF_2-O-CF_2CF_2-CF(CF_3)-$, $-CF_2-O-CF(CF_3)-CF(CF_3)-$, $-CF_2-O-CF(CF_3)CF_2-CF(CF_3)-$, $-CF_2-O-CF(CF_3)CF_2-O-CF(CF_3)-$, $-(C=O)-$, $-(C=O)-O-(CH_2)-$, $-(C=O)-O-(CH_2)-(CH_2)-$, $-(C=O)-O-[(CH_2)_2-O]_n-(CH_2)-(CH_2)-$, $-(C=O)-O-(CH_2)_2-O-(CH_2)-C(CF_3)_2-$, or $-(C=O)-O-C_6H_4-C(CF_3)_2-$.

In the formulae, n is an integer of 1 to 10.

Specific examples of the compound represented by general formula (A) include:

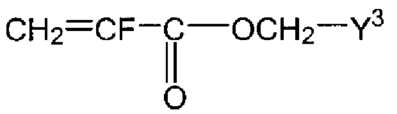

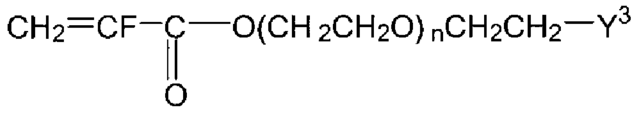

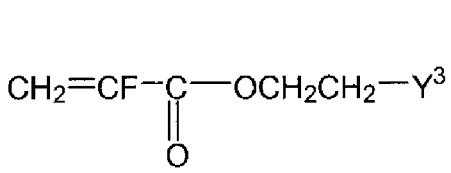

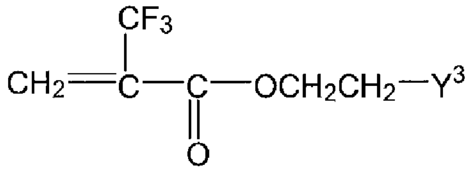

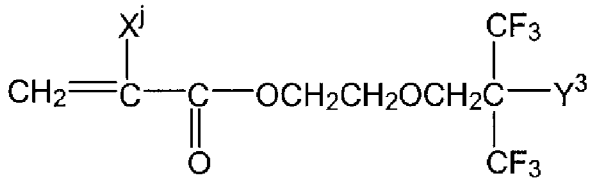

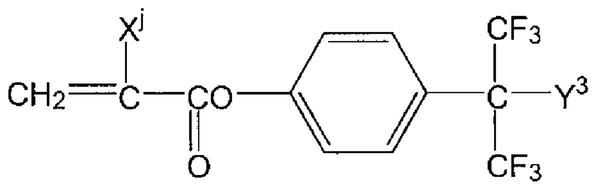

wherein $X^j$ and $Y^3$ are as described above, and n is an integer of 1 to 10.

$R^a$ is preferably a divalent group represented by the following general formula (r1):

$$-(C=O)_h-(O)_i-CF_2-O-(CX^6{}_2)_e-\{O-CF(CF_3)\}_f-(O)_g- \quad (r1)$$

(wherein $X^6$ is each independently H, F, or $CF_3$, e is an integer of 0 to 3, f is an integer of 0 to 3, g is 0 or 1, h is 0 or 1, and i is 0 or 1), and is also preferably a divalent group represented by the following general formula (r2): $-(C=O)_h-(O)_i-CF_2-O-(CX^7{}_2)_e-(O)_g-$(r2) (wherein $X^7$ is each independently H, F, or $CF_3$, e is an integer of 0 to 3, g is 0 or 1, h is 0 or 1, and i is 0 or 1) .

$-R^a-(CZ^1Z^2)_k-$ in general formula (A) is also preferably a divalent group represented by the following formula (t1):

$$-(C=O)_h-(O)_i-CF_2-O-(CX^6{}_2)_e-\{O-CF(CF_3)\}_f-(O)_g-CZ^1Z^2- \quad (t1)$$

(wherein $X^6$ is each independently H, F, or $CF_3$, e is an integer of 0 to 3, f is an integer of 0 to 3, g is 0 or 1, h is 0 or 1, i is 0 or 1, and $Z^1$ and $Z^2$ are each independently F or $CF_3$), and, more preferably, in formula (t1), one of $Z^1$ and $Z^2$ is F, and the other is $CF_3$.

In general formula (A), $-R^a-(CZ^1Z^2)_k-$ is also preferably a divalent group represented by the following formula (t2):

$$-(C=O)_h-(O)_i-CF_2-O-(CX^7{}_2)_e-(O)_g-CZ^1Z^2- \quad (t2)$$

(wherein $X^7$ is each independently H, F, or $CF_3$, e is an integer of 0 to 3, g is 0 or 1, h is 0 or 1, i is 0 or 1, and $Z^1$ and $Z^2$ are each independently F or $CF_3$), and, more preferably, in formula (t2), one of $Z^1$ and $Z^2$ is F, and the other is $CF_3$.

It is also preferable that the compound represented by general formula (A) has a C-F bond and does not have a C-H bond, excluding the hydrophilic group ($Y^3$). That is to say, in general formula (A), it is preferable that $X^i$, $X^j$, and $X^k$ are all F, and that $R^a$ is a perfluoroalkylene group having one or more carbon atoms, and the perfluoroalkylene group may be either linear or branched, may be either cyclic or acyclic, and may contain at least one catenary heteroatom. The number of carbon atoms of the perfluoroalkylene group may be 2 to 20, and may be 4 to 18.

The compound represented by general formula (A) may be partially fluorinated. That is to say, in general formula (A), it is preferable that the compound represented by general formula (A) has at least one hydrogen atom bonded to a carbon atom and at least one fluorine atom bonded to a carbon atom, excluding the hydrophilic group ($Y^3$).

The compound represented by general formula (A) is also preferably a compound represented by the following formula (Aa):

$$CF_2=CF\text{-}O\text{-}Rf^0\text{-}Y^3 \qquad \text{(Aa)}$$

wherein $Y^3$ is a hydrophilic group, and $Rf^0$ is a perfluorinated divalent linking group that is perfluorinated, that may be linear or branched, cyclic or acyclic, saturated or unsaturated, and substituted or unsubstituted, and that optionally and additionally contains one or more heteroatoms selected from the group consisting of sulfur, oxygen, and nitrogen.

The compound represented by general formula (A) is also preferably a compound represented by the following formula (Ab):

$$CH_2=CH\text{-}O\text{-}Rf^0\text{-}Y^3 \qquad \text{(Ab)}$$

wherein $Y^3$ is a hydrophilic group, and $Rf^0$ is a perfluorinated divalent linking group as defined with respect to formula (Aa).

In one preferable form of general formula (A), $Y^3$ is $-OSO_3M$. When $Y^3$ is $-OSO_3M$, examples of the compound represented by general formula (A) include $CF_2=CF(OCF_2CF_2CH_2OSO_3M)$, $CH_2=CH((CF_2)_4CH_2OSO_3M)$,

$CF_2=CF(O(CF_2)_4CH_2OSO_3M)$, $CF_2=CF(OCF_2CF(CF_3)CH_2OSO_3M)$,

$CF_2=CF(OCF_2CF(CF_3)OCF_2CF_2CH_2OSO_3M)$, $CH_2=CH((CF_2)_4CH_2OSO_3M)$,

$CF_2=CF(OCF_2CF_2SO_2N(CH_3)CH_2CH_2OSO_3M)$, $CH_2=CH(CF_2CF_2CH_2OSO_3M)$,

$CF_2=CF(OCF_2CF_2CF_2CF_2SO_2N(CH_3)CH_2CH_2OSO_3M)$, and $CH_2=CH(CF_2CF_2CH_2OSO_3M)$. In the formulae, M is as described above.

In one preferable form of general formula (A), $Y^3$ is $-SO_3M$. When $Y^3$ is $-SO_3M$, examples of the compound represented by general formula (A) include $CF_2=CF(OCF_2CF_2SO_3M)$, $CF_2=CF(O(CF_2)_4SO_3M)$, $CF_2=CF(OCF_2CF(CF_3)SO_3M)$, $CF_2=CF(OCF_2CF(CF_3)OCF_2CF_2SO_3M)$, $CH_2=CH(CF_2CF_2SO_3M)$, $CF_2=CF(OCF_2CF(CF_3)OCF_2CF_2CF_2CF_2SO_3M)$, $CH_2=CH((CF_2)_4SO_3M)$, and $CH_2=CH((CF_2)_3SO_3M)$. In the above formulae, M is as described above.

In one preferable form of general formula (A), $Y^3$ is -COOM. When $Y^3$ is -COCM, examples of the compound represented by general formula (A) include $CF_2=CF(OCF_2CF_2COCM)$, $CF_2=CF(OCF_2CF_2CF_2COCM)$, $CF_2=CF(O(CF_2)_5COCM)$, $CF_2=CF(OCF_2CF(CF_3)COCM)$, $CF_2=CF(OCF_2CF(CF_3)O(CF_2)_nCOOM)$ (n is greater than 1), $CH_2=CH(CF_2CF_2COOM)$, $CH_2=CH((CF_2)_4COOM)$, $CH_2=CH((CF_2)_3COOM)$, $CF_2=CF(OCF_2CF_2SO_2NR'CH_2COOM)$, $CF_2=CF(O(CF_2)_4SO_2NR'CH_2COOM)$, $CF_2=CF(OCF_2CF(CF_3)SD_2NR'CH_2COOM)$, $CF_2=CF(OCF_2CF(CF_3)OCF_2CF_2SD_2NR'CH_2COOM)$, $CH_2=CH(CF_2CF_2SO_2NR'CH_2COOM)$, $CF_2=CF(OCF_2CF(CF_3)OCF_2CF_2CF_2CF_2SO_2NR'CH_2COOM)$, $CH_2=CH((CF_2)_4SO_2NR'CH_2COOM)$, $CH_2=CH(CF_2CF_2SO_2NR'CH_2COOM)$, and $CH_2=CH((CF_2)_3SO_2NR'CH_2COOM)$. In the above formulae, R' is H or a $C_{1-4}$ alkyl group, and M is as described above.

It is also one preferable form of general formula (A) that $Y^3$ is $-OP(O)(OM)_2$. When $Y^3$ is $-OP(O)(OM)_2$, examples of the compound represented by general formula (A) include $CF_2=CF(OCF_2CF_2CH_2OP(O)(OM)_2)$, $CF_2=CF(O(CF_2)_4CH_2OP(O)(OM)_2)$, $CF_2=CF(OCF_2CF(CF_3)CH_2OP(O)(OM)_2)$, $CF_2=CF(OCF_2CF(CF_3)OCF_2CF_2CH_2OP(O)(OM)_2)$, $CF_2=CF(OCF_2CF_2SO_2N(CH_3)CH_2CH_2OP(O)(OM)_2)$, $CF_2=CF(OCF_2CF_2CF_2CF_2SO_2N(CH_3)CH_2CH_2OP(O)(OM)_2)$, $CH_2=CH(CF_2CF_2CH_2OP(O)(OM)_2$, $CH_2=CH((CF_2)_4CH_2OP(O)(OM)_2)$, and $CH_2=CH((CF_2)_3CH_2OP(O)(OM)_2)$. In the formulae, M is as described above.

It is also one preferable form of general formula (A) that $Y^3$ is $-P(O)(OM)_2$. When $Y^3$ is $-P(O)(OM)_2$, examples of the compound represented by general formula (A) include $CF_2=CF(OCF_2CF_2P(O)(OM)_2)$, $CF_2=CF(O(CF_2)_4P(O)(OM)_2)$, $CF_2=CF(OCF_2CF(CF_3)P(O)(OM)_2)$, $CF_2=CF(OCF_2CF(CF_3)OCF_2CF_2P(O)(OM)_2)$, $CH_2=CH(CF_2CF_2P(O)(OM)_2)$, $CH_2=CH((CF_2)_4P(O)(OM)_2)$, and $CH_2=CH((CF_2)_3P(O)(OM)_2)$, and in the formulae, M is as described above.

The compound represented by general formula (A) is preferably at least one selected from the group consisting of a compound represented by the following general formula (5):

$$CX_2=CY(-CZ_2-O-Rf-Y^3) \qquad (5)$$

(wherein X is the same or different and is -H or -F; Y is -H, -F, an alkyl group, or a fluorine-containing alkyl group; Z is the same or different and -H, -F, an alkyl group, or a fluorine-containing alkyl group; Rf is a fluorine-containing alkylene group having 1 to 40 carbon atoms or a fluorine-containing alkylene group having an ether bond and having 2 to 100 carbon atoms, and $Y^3$ is as described above), a compound represented by the following general formula (6):

$$CX_2=CY(-O-Rf-Y^3) \qquad (6)$$

(wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above), and a compound represented by the following general formula (7):

$$CX_2=CY(-Rf-Y^3) \qquad (7)$$

(wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above).

The fluorine-containing alkylene group having an ether bond and having 2 to 100 carbon atoms is an alkylene group that does not contain a structure having an oxygen atom at a terminal and that contains an ether bond between carbon carbons.

In general formula (5), each X is -H or -F. X may be both -F, or at least one may be -H. For example, one may be -F and the other may be -H, or both may be -H.

In general formula (5), Y is -H, -F, an alkyl group, or a fluorine-containing alkyl group. The alkyl group is an alkyl group that does not contain a fluorine atom, and has one or more carbon atoms. The alkyl group preferably has 6 or less carbon atoms, more preferably 4 or less carbon atoms, and even more preferably 3 or less carbon atoms. The fluorine-containing alkyl group is an alkyl group containing at least one fluorine atom, and has one or more carbon atoms. The fluorine-containing alkyl group preferably has 6 or less carbon atoms, more preferably 4 or less carbon atoms, and even more preferably 3 or less carbon atoms. Y is preferably -H, -F, or $-CF_3$, and more preferably -F.

In general formula (5), Z is the same or different and is -H, - F, an alkyl group, or a fluoroalkyl group. The alkyl group is an alkyl group that does not contain a fluorine atom, and has one or more carbon atoms. The alkyl group preferably has 6 or less carbon atoms, more preferably 4 or less carbon atoms, and even more preferably 3 or less carbon atoms. The fluorine-containing alkyl group is an alkyl group containing at least one fluorine atom, and has one or more carbon atoms. The fluorine-containing alkyl group preferably has 6 or less carbon atoms, more preferably 4 or less carbon atoms, and even more preferably 3 or less carbon atoms. Z is preferably -H, -F, or $-CF_3$, and more preferably -F.

In general formula (5), at least one of X, Y, and Z preferably contains a fluorine atom. For example, X may be -H, and Y and Z may be -F.

In general formula (5), Rf is a fluorine-containing alkylene group having 1 to 40 carbon atoms or a fluorine-containing alkylene group having 2 to 100 carbon atoms and having an ether bond. The fluorine-containing alkylene group preferably has 2 or more carbon atoms. The fluorine-containing alkylene group preferably has 30 or less carbon atoms, more preferably 20 or less carbon atoms, and even more preferably 10 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

The fluorine-containing alkylene group having an ether bond preferably has 3 or more carbon atoms. The number of carbon atoms of the fluorine-containing alkylene group having an ether bond is preferably 60 or less, more preferably 30 or less, and even more preferably 12 or less.

The fluorine-containing alkylene group having an ether bond is also preferably a divalent group represented by the following formula:

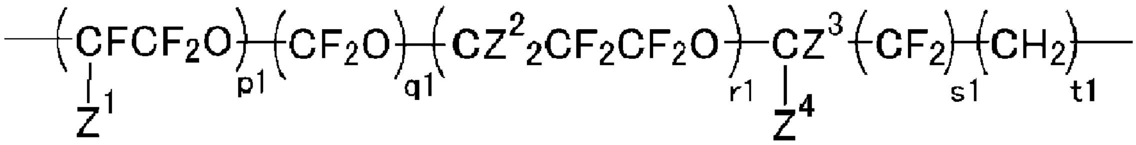

wherein $Z^1$ is F or $CF_3$; $Z^2$ and $Z^3$ are each independently H or F; $Z^4$ is H, F, or $CF_3$; p1+q1+r1 is an integer of 1 to 10; s1 is 0 or 1; and t1 is an integer of 0 to 5.

Specific examples of the fluorine-containing alkylene group having an ether bond include $-CF(CF_3)CF_2-O-CF(CF_3)-$, $-(CF(CF_3)CF_2-O)n-CF\ (CF_3)-$ (wherein n is an integer of 1 to 10), $-CF\ (CF_3)CF_2-O-CF(CF_3)CH_2-$, - $(CF(CF_3)CF_2-O)_n-CF(CF_3)CH_2-$ (wherein n is an integer of 1 to 10), - $CH_2CF_2CF_2O-CH_2CF_2CH_2-$, $-CF_2CF_2CF_2O-CF_2CF_2-$, $-CF_2CF_2CF_2O-CF_2CF_2CH_2-$, $-CF_2CF_2O-CF_2-$, and $-CF_2CF_2O-CF_2CH_2-$. The fluorine-containing alkylene group having an ether bond is preferably a perfluoroalkylene group.

In general formula (5), $Y^3$ is preferably -COCM, $-SQ_3M$, or $-OSO_3M$ (M is H, a metal atom, $NR^7{}_4$, optionally substituted imidazolium, optionally substituted pyridinium, or optionally substituted phosphonium; and $R^7$ is H or an organic group and may be the same or different, and any two may be bonded to each other to form a ring).

The organic group of $R^7$ is preferably an alkyl group. $R^7$ is preferably H or a $C_{1-10}$ organic group, more preferably H or a $C_{1-4}$ organic group, and even more preferably H or a $C_{1-4}$ alkyl group. Examples of the metal atom include alkali metals (Group 1) and alkaline earth metals (Group 2), and Na, K, or Li is preferable. M is preferably -H, a metal atom, or $-NR^7{}_4$, more preferably -H, an alkali metal (Group 1), an alkaline earth metal (Group 2), or $-NR^7{}_4$, even more preferably -H, -Na, -K, -Li, or $-NH_4$, yet more preferably -Na, -K, or $-NH_4$, particularly preferably -Na or $-NH_4$, and most preferably $-NH_4$. $Y^3$ is preferably -COOM or $-SQ_3M$, and more preferably -COOM.

The compound represented by general formula (5) is preferably a compound (5a) represented by general formula (5a):

$$CH_2=CF(-CF_2-O-Rf-Y^3) \qquad (5a)$$

wherein Rf and $Y^3$ are as described above.

Specific examples of the compound represented by general formula (5a) include compounds represented by the following formula:

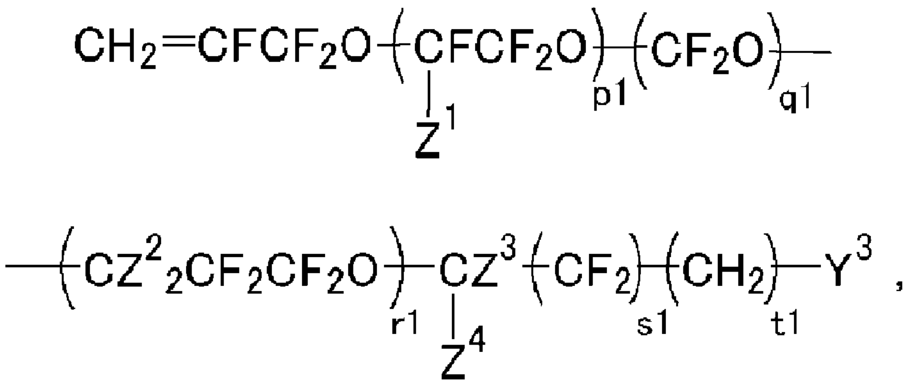

wherein $Z^1$ is F or $CF_3$; $Z^2$ and $Z^3$ are each independently H or F; $Z^4$ is H, F, or $CF_3$; p1+q1+r1 is an integer of 0 to 10; s1 is 0 or 1; t1 is an integer of 0 to 5; and $Y^3$ is as described above, provided that when $Z^3$ and $Z^4$ are both H, p1+q1+r1+s1 is not 0. More specifically, preferable examples include

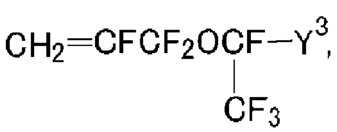

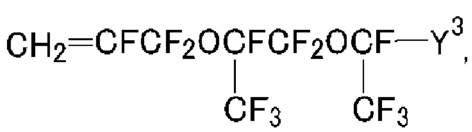

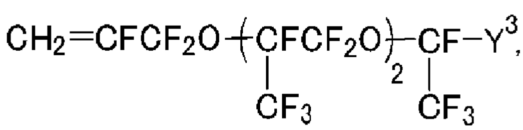

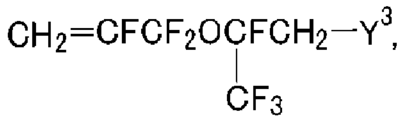

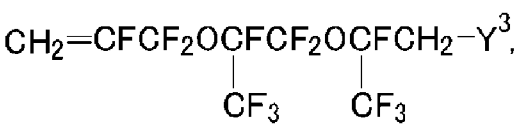

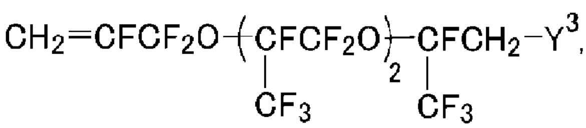

$CH_2=CFCF_2OCH_2CF_2-Y^3$, $CH_2=CFCF_2O(CH_2CF_2CF_2O)CH_2CF_2-Y^3$,

$CH_2=CFCF_2OCH_2CF_2CH_2-Y^3$,

$CH_2=CFCF_2O(CH_2CF_2CF_2O)CH_2CF_2CH_2-Y^3$,

$CH_2=CFCF_2OCF_2CF_2-Y^3$, $CH_2=CFCF_2O(CF_2CF_2CF_2O)CF_2CF_2-Y^3$,

$CH_2=CFCF_2OCF_2CF_2CH_2-Y^3$,

$CH_2=CFCF_2O(CF_2CF_2CF_2O)CF_2CF_2CH_2-Y^3$,

$CH_2=CFCF_2OCF_2-Y^3$, $CH_2=CFCF_2O(CF_2CF_2O)CF_2-Y^3$,

$CH_2=CFCF_2OCF_2CH_2-Y^3$,

$CH_2=CFCF_2OCCF_2CF_2O)CF_2CH_2-Y^3$,

and, in particular,

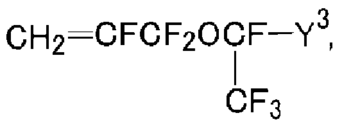 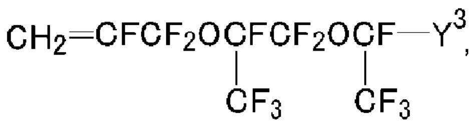

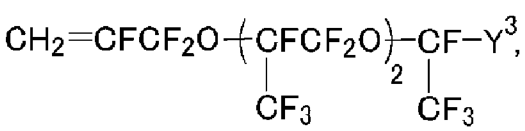 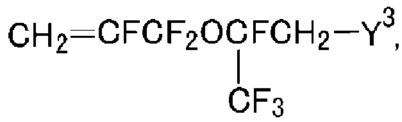

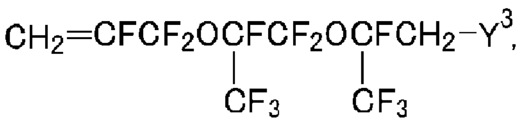 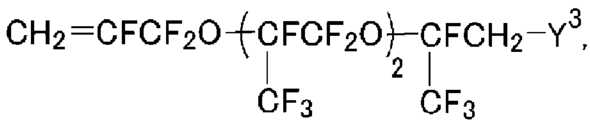

are preferable.

In the compound represented by general formula (5a), $Y^3$ in formula (5a) is preferably -COOM, and, in particular, at least one selected from the group consisting of $CH_2=CFCF_2OCF(CF_3)COOM$ and $CH_2=CFCF_2OCF(CF_3)CF_2OCF(CF_3)COOM$ (wherein M is as defined above) is preferable.

The compound represented by general formula (5) is preferably a compound (5b) represented by the following general formula (5b):

$$CX^2{}_2=CFCF_2\text{-}O\text{-}(CF\ (CF_3)CF_2O)_{n5}\text{-}CF(CF_3)\text{-}Y^3 \qquad (5b)$$

wherein each $X^2$ is the same and represents F or H, n5 represents an integer of 0 or 1 to 10, and $Y^3$ is as defined above.

In general formula (5b), n5 in terms of the stability of the resulting aqueous dispersion is preferably an integer of 0 or 1 to 5, more preferably 0, 1, or 2, and even more preferably 0 or 1. $Y^3$ is preferably - COOM in terms of that a suitable water solubility and the stability of the aqueous dispersion can be obtained, and M is preferably H or $NH_4$ in terms of that M unlikely remains as an impurity, and that the heat resistance of the resulting molded article is increased.

Examples of the compound represented by general formula (5b) include $CH_2=CFCF_2OCF(CF_3)COOM$ and $CH_2=CFCF_2OCF(CF_3)CF_2OCF(CF_3)COOM$, wherein M is as defined above.

Examples of the compound represented by general formula (5) also include compounds (5c) represented by general formula (5c):

$$CF_2=CFCF_2\text{-}O\text{-}Rf\text{-}Y^3 \qquad (5c)$$

wherein Rf and $Y^3$ are as described above.

More specifically, examples include

$CF_2=CFCF_2OCF_2CF_2CF_2-Y^3$,

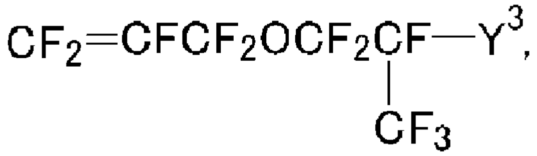

$CF_2=CFCF_2OCF_2CF_2CF_2CH_2-Y^3$,

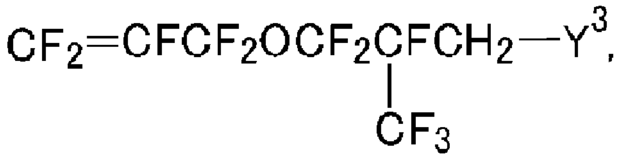

and the like.

In general formula (6), each X is -H or -F. X may be both -F, or at least one may be -H. For example, one may be -F and the other may be -H, or both may be -H.

In general formula (6), Y is -H, -F, an alkyl group, or a fluorine-containing alkyl group. The alkyl group is an alkyl group that does not contain a fluorine atom, and has one or more carbon atoms. The alkyl group preferably has 6 or less carbon atoms, more preferably 4 or less carbon atoms, and even more preferably 3 or less carbon atoms. The fluorine-containing alkyl group is an alkyl group containing at least one fluorine atom, and has one or more carbon atoms. The fluorine-containing alkyl group preferably has 6 or less carbon atoms, more preferably 4 or less carbon atoms, and even more preferably 3 or less carbon atoms. Y is preferably -H, -F, or $-CF_3$, and more preferably -F.

In general formula (6), at least one of X and Y preferably contains a fluorine atom. For example, X may be -H, and Y and Z may be -F.

In general formula (6), Rf is a fluorine-containing alkylene group having 1 to 40 carbon atoms or a fluorine-containing alkylene group having an ether bond and having 2 to 100 carbon atoms. The fluorine-containing alkylene group preferably has 2 or more carbon atoms. The fluorine-containing alkylene group preferably has 30 or less carbon atoms, more preferably 20 or less carbon atoms, and even more preferably 10 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

In general formula (6), $Y^3$ is -COCM, $-SO_3M$, or $-OSO_3M$ (M is H, a metal atom, $NR^7_4$, optionally substituted imidazolium, optionally substituted pyridinium, or optionally substituted phosphonium; and $R^7$ is H or an organic group and may be the same or different, and any two may be bonded to each other to form a ring).

The organic group of $R^7$ is preferably an alkyl group. $R^7$ is preferably H or a $C_{1-10}$ organic group, more preferably H or a $C_{1-4}$ organic group, and even more preferably H or a $C_{1-4}$ alkyl group. Examples of the metal atom include alkali metals (Group 1) and alkaline earth metals (Group 2), and Na, K, or Li is preferable. M is preferably -H, a metal atom, or $-NR^7_4$, more preferably -H, an alkali metal (Group 1), an alkaline earth metal (Group 2), or $-NR^7_4$, even more preferably -H, -Na, -K, -Li, or $-NH_4$, yet more preferably -Na, -K, or $-NH_4$, particularly preferably -Na or $-NH_4$, and most preferably $-NH_4$. $Y^3$ is preferably -COOM or $-SO_3M$, and more preferably -COOM.

The compound represented by general formula (6) is preferably at least one selected from the group consisting of compounds represented by general formulae (6a) to (6f):

$CF_2=CF-O-(CF_2)_{n1}-Y^3$ (6a)

wherein n1 represents an integer of 1 to 10, and $Y^3$ is as defined above,

$CF_2=CF-O-(CF_2C(CF_3)F)_{n2}-Y^3$ (6b)

wherein n2 represents an integer of 1 to 5, and $Y^3$ is as defined above,

$CF_2=CF-O-(CFX^1)_{n3}-Y^3$ (6c)

wherein $X^1$ represents F or $CF_3$, n3 represents an integer of 1 to 10, and $Y^3$ is as defined above,

$CF_2=CF-O-(CF_2CFX^1O)_{n4}-(CF2)_{n6}-Y^3$ (6d)

wherein n4 represents an integer of 1 to 10, n6 represents an integer of 1 to 3, and $Y^3$ and $X^1$ are as defined above,

$CF_2=CF-O-(CF_2CF_2CFX^1O)_{n5}-CF_2CF_2CF_2-Y^3$ (6e)

wherein n5 represents an integer of 0 to 10, and $Y^3$ and $X^1$ are as defined above, and

$CF_2=CF-O(-CF_2)_{n6}-O-CF_2-Y^3$ (6f)

wherein n6 represents an integer of 1 to 6, and $Y^3$ and $X^1$ are as defined above.

In general formula (6a), n1 is preferably an integer of 5 or less, and more preferably an integer of 2 or less. $Y^3$ is preferably -COOM in terms of that a suitable water solubility and the stability of the aqueous dispersion can be obtained, and M is preferably H or $NH_4$ in terms of that M unlikely remains as an impurity, and that the heat resistance of the resulting molded article is increased.

Examples of the compound represented by general formula (6a) include $CF_2=CF-O-CF_2COOM$, $CF_2=CF(OCF_2CF_2COOM)$, and $CF_2=CF(OCF_2CF_2CF_2COOM)$, wherein M is as defined above.

In general formula (6b), n2 is preferably an integer of 3 or less in terms of the stability of the resulting aqueous dispersion, $Y^3$ is preferably -COOM in terms of that a suitable water solubility and the stability of the aqueous dispersion can be obtained, and M is preferably H or $NH_4$ in terms of that M unlikely remains as an impurity, and that the heat resistance of the resulting molded article is increased.

In general formula (6c), n3 is preferably an integer of 5 or less in terms of water solubility, $Y^3$ is preferably -COOM in terms of that a suitable water solubility and the stability of the aqueous dispersion can be obtained, and M is preferably H or $NH_4$ in terms of an increased dispersion stability.

In general formula (6d), $X^1$ is preferably $-CF_3$ in terms of the stability of the aqueous dispersion, n4 is preferably an integer of 5 or less in terms of water solubility, $Y^3$ is preferably -COOM in terms of that a suitable water solubility and the stability of the aqueous dispersion can be obtained, and M is preferably H or $NH_4$.

Examples of the compound represented by general formula (6d) include $CF_2=CFOCF_2CF(CF_3)OCF_2CF_2COOM$, $CF_2=CFOCF_2CF(CF_3)OCF_2COOM$, and $CF_2=CFOCF_2CF(CF_3)OCF_2CF_2CF_2COOM$, wherein M represents H, $NH_4$, or an alkali metal.

In general formula (6e), n5 is preferably an integer of 5 or less in terms of water solubility, $Y^3$ is preferably -COOM in terms of that a suitable water solubility and the stability of the aqueous dispersion can be obtained, and M is preferably H or $NH_4$.

Examples of the compound represented by general formula (6e) include $CF_2=CFOCF_2CF_2CF_2COOM$, wherein M represents H, $NH_4$, or an alkali metal.

Examples of the compound represented by general formula (6f) include $CF_2=CFOCF_2CF_2CF_2OCF_2COOM$, wherein M represents H, $NH_4$, or an alkali metal.

In general formula (7), Rf is preferably a fluorine-containing alkylene group having 1 to 40 carbon atoms. In general formula (7), at least one of X and Y preferably contains a fluorine atom.

The compound represented by general formula (7) is preferably at least one selected from the group consisting of a compound represented by general formula (7a):

$CF_2=CF-(CF_2)_{n1}-Y^3$ (7a)

(wherein n1 represents an integer of 1 to 10, and $Y^3$ is as defined above) and a compound represented by general formula (7b):

$CF_2=CF-(CF_2C(CF_3)F)_{n2}-Y^3$ (7b)

(wherein n2 represents an integer of 1 to 5, and $Y^3$ is as defined above) .

$Y^3$ in general formula (7) is preferably $-SO_3M$ or -COOM, and M is preferably H, a metal atom, $NR^7_4$, optionally substituted imidazolium, optionally substituted pyridinium, or optionally substituted phosphonium. $R^7$ represents H or an organic group.

In general formula (7a), n1 is preferably an integer of 5 or less, and more preferably an integer of 2 or less. $Y^3$

is preferably -COOM in terms of that a suitable water solubility and the stability of the aqueous dispersion can be obtained, and M is preferably H or $NH_4$ in terms of that M unlikely remains as an impurity, and that the heat resistance of the resulting molded article is increased.

Examples of the compound represented by general formula (7a) include $CF_2$=$CFCF_2COOM$, wherein M is as defined above.

In general formula (7b), n2 is preferably an integer of 3 or less in terms of the stability of the resulting aqueous dispersion, $Y^3$ is preferably -COOM in terms of that a suitable water solubility and the stability of the aqueous dispersion can be obtained, and M is preferably H or $NH_4$ in terms of that M unlikely remains as an impurity, and that the heat resistance of the resulting molded article is increased.

The fluorine-containing compound (A) is preferably at least one selected from the group consisting of a compound represented by general formula (5), a compound represented by general formula (6), and a compound represented by general formula (7), and more preferably at least one selected from the group consisting of a compound represented by general formula (5) and a compound represented by general formula (6), and even more preferably a compound represented by general formula (5).

The compound represented by general formula (5) is preferably at least one selected from the group consisting of a compound represented by general formula (5a), a compound represented by general formula (5b), and a compound represented by general formula (5c). In particular, at least one selected from the group consisting of a compound represented by general formula (5a) and a compound represented by general formula (5b) is more preferable, and a compound represented by general formula (5a) is even more preferable.

In the polymerization of the fluorine-containing monomer, the amount of the fluorine-containing compound (A) based on the aqueous medium is preferably 3 to 5,000 mass ppm, more preferably 5 mass ppm or more, even more preferably 10 mass ppm or more, particularly preferably 20 mass ppm or more, and most preferably 30 mass ppm or more, and is more preferably 1,000 mass ppm or less, even more preferably 500 mass ppm or less, particularly preferably 200 mass ppm or less, and most preferably 100 mass ppm or less.

It is also preferable to regulate the amount of the fluorine-containing compound (A) according to the type of the polymerization initiator used in the polymerization and the polymerization temperature.

When using a non-redox polymerization initiator as the polymerization initiator and performing the polymerization at 40 to 70°C, the amount of the fluorine-containing compound (A) is preferably 3 to 300 mass ppm, more preferably 3 to 150 mass ppm, even more preferably 5 to 100 mass ppm, and most preferably 8 to 80 mass ppm based on the aqueous medium.

When using a non-redox polymerization initiator as the polymerization initiator and performing the polymerization at higher than 70°C and 98°C or lower, the amount of the fluorine-containing compound (A) is preferably 3 to 500 mass ppm, more preferably 3 to 200 mass ppm, even more preferably 5 to 120 mass ppm, and most preferably 20 to 110 mass ppm based on the aqueous medium.

When using a redox polymerization initiator as the polymerization initiator and performing the polymerization at 10°C or higher and lower than 40°C, the amount of the fluorine-containing compound (A) is preferably 3 to 300 mass ppm, more preferably 3 to 100 mass ppm, even more preferably 5 to 80 mass ppm, and most preferably 10 to 70 mass ppm based on the aqueous medium.

When using a redox polymerization initiator as the polymerization initiator and performing the polymerization at 40 to 70°C, the amount of the fluorine-containing compound (A) is preferably 3 to 500 mass ppm, more preferably 5 to 300 mass ppm, even more preferably 10 to 200 mass ppm, and most preferably 15 to 150 mass ppm based on the aqueous medium.

When using a redox polymerization initiator as the polymerization initiator and performing the polymerization at higher than 70°C and 98°C or lower, the amount of the fluorine-containing compound (A) is preferably 5 to 500 mass ppm, more preferably 8 to 300 mass ppm, even more preferably 15 to 200 mass ppm, and most preferably 20 to 150 mass ppm based on the aqueous medium.

With the amount of the fluorine-containing compound (A) being within the above range, the adhesion rate can be more reduced, and the polymerization time can be shortened.

The fluorine-containing compound (A) is preferably added before the polymerization initiator is added to start the polymerization reaction. Preferably, the fluorine-containing compound (A) is added only before the beginning of the polymerization reaction and not added after starting the polymerization.

In the production method of the present disclosure, the polymerization temperature for polymerizing the fluorine-containing monomer is preferably 10 to 120°C, and more preferably 20 to 100°C. From the viewpoint of the stability of the aqueous dispersion and reducing the adhesion rate, the polymerization temperature is preferably 15 to 60°C, more preferably 18 to 55°C, and even more preferably 20 to 50°C. The polymerization temperature is preferably 60 to 120°C, more preferably 60 to 100°C, and even more preferably 70 to 90°C because the polymerization rate is increased and, moreover, a fluorine-containing polymer that provides a molded article having excellent physical properties can be obtained.

In the production method of the present disclosure, the polymerization pressure for polymerizing the fluorine-containing monomer is preferably 0.5 to 10 MPaG, and more preferably 1 to 7 MPaG.

In the polymerization of the fluorine-containing monomer, a phosphoric acid salt, sodium hydroxide, potassium hydroxide, or the like may be used as a pH adjuster.

The aqueous medium is preferably acidic. By polymerizing the fluorine-containing monomer in the presence of a polymer (1) using an acidic aqueous medium, an even greater number of fluorine-containing polymer particles can be produced at a higher polymerization rate while further suppressing adhesion of the fluorine-containing polymer to a polymerization tank. The pH of the aqueous medium is preferably 7 or lower and more preferably 6 or lower, and is preferably 3 or higher.

In the production method of the present disclosure, the fluorine-containing monomer may be polymerized in the presence or absence of fluorine-containing monomer polymerization seed particles.

The "fluorine-containing monomer polymerization seed particles" are obtained by polymerizing the fluorine-containing monomer in an aqueous medium, and are caused to be present at the time of the second polymerization in which the type and the proportion of existing components such as monomers and additives (e.g., a polymerization initiator) constituting the polymerization reaction system, the reaction conditions, and the like are different. The fluorine-containing monomer polymerization seed particles act as so-called seed particles at the time of polymerizing the fluorine-containing monomer, and constitute the polymerization of the fluorine-containing monomer in the presence of the seed particles, i.e., seed polymerization. The production method of the present disclosure may be a method in which such seed polymerization is not carried out when polymerizing the fluorine-containing monomer.

In the production method of the present disclosure, the fluorine-containing monomer is polymerized in the presence of the fluorine-free compound (1), the polymerization initiator, and the aqueous medium, and thus adhesion of a polymer (a fluorine-containing polymer) to a polymerization tank can be suppressed. The adhesion rate of the polymer to a polymerization tank is preferably 8 mass% or less, more preferably 4 mass% or less, even more preferably 2 mass% or less, and most preferably 1 mass% or less.

The adhesion rate of the polymer is the ratio of the mass of polymer deposits adhering to a polymerization tank after completion of polymerization to the total amount of the polymer (the fluorine-containing polymer) after completion of polymerization (the rate of adhesion to a polymerization tank). Polymer deposits include a polymer adhering to the inside of a polymerization tank such as the inner wall of a polymerization tank and a stirring blade after an aqueous dispersion is removed from the polymerization tank after completion of polymerization, and a polymer that is freed from the aqueous dispersion due to aggregation and floats or precipitates without being dispersed in the aqueous dispersion. The mass of polymer deposits is the mass after water contained in the polymer deposits is dried and removed at 120°C.

Polymer adhesion rate (mass%) = Mass of polymer deposits / Mass of resulting polymer (including deposits) × 100

Mass of resulting polymer = Mass of aqueous dispersion × Solid concentration (mass%) of aqueous dispersion / 100 + Mass of polymer deposits

In one embodiment of the production method of the present disclosure, the fluorine-containing monomer is polymerized in the presence of a fluorine-free surfactant (a hydrocarbon surfactant). In one embodiment of the production method of the present disclosure, the fluorine-containing monomer is polymerized in the absence of a fluorine-free surfactant (a hydrocarbon surfactant). According to the production method of the present disclosure, a sufficient number of fluorine-containing polymer particles can be produced at a high polymerization rate, while suppressing adhesion of the fluorine-containing polymer to a polymerization tank, even when the fluorine-containing monomer is polymerized in the absence of the fluorine-free surfactant.

In one embodiment of the production method of the present disclosure, the fluorine-containing monomer is polymerized in the presence of a fluorine-containing surfactant (provided that the fluorine-containing compound (A) is excluded). In one embodiment of the production method of the present disclosure, the fluorine-containing monomer is polymerized in the absence of a fluorine-containing surfactant (provided that the fluorine-containing compound (A) is excluded) . According to the production method of the present disclosure, a sufficient number of fluorine-containing polymer particles can be produced at a high polymerization rate, while suppressing adhesion of the fluorine-containing polymer to a polymerization tank, even when the fluorine-containing monomer is polymerized in the absence of the fluorine-containing surfactant.

The expression "substantially in the absence of a fluorine-containing surfactant" as used herein means that the proportion of the fluorine-containing surfactant contained based on the aqueous medium is 10 mass ppm or less, and the fluorine-containing surfactant contained is preferably 1 mass ppm or less, more preferably 100 mass ppb or less, even more preferably 10 mass ppb or less, and particularly preferably 1 mass ppb or less.

The fluorine-containing surfactant may be an anionic fluorine-containing surfactant. The anionic fluorine-containing surfactant may be, for example, a surfactant containing a fluorine atom, in which the total number of carbon atoms in the portion excluding the anionic group is 20 or less.

The fluorine-containing surfactant may also be a fluorine-containing surfactant in which the molecular weight of the anionic moiety is 800 or less. The "anionic moiety" means a portion of the fluorine-containing surfactant excluding the cation. For example, in the case of $F(CF_2)_{n1}COOM$ represented by formula (I) as will be described below, the anionic moiety is the "$F(CF_2)_{n1}COO$" moiety.

The fluorine-containing surfactant may also be a fluorine-containing surfactant having a LogPOW of 3.5 or less. The LogPOW is a partition coefficient between 1-octanol and water, and is represented by LogP wherein P represents a ratio of the fluorine-containing surfactant concentration in octanol/the fluorine-containing surfactant concentration in water attained when an octanol/water (1:1) mixture containing the fluorine-containing surfactant is phase-separated.

The LogPOW is calculated by performing HPLC on standard substances (heptanoic acid, octanoic acid, nonanoic acid, and decanoic acid) having a known octanol/water partition coefficient under conditions having column: TOSOH ODS-120T column (φ4.6 mm × 250 mm, manufactured by Tosoh Corporation), eluent: acetonitrile/0.6 mass% $HClO_4$ solution = 1/1 (vol/vol%), flow rate: 1.0 ml/min, sample volume: 300 μL, column temperature: 40°C, detection light: UV210 nm to construct a calibration curve concerning each elution time and known octanol/water partition coefficient, and determining the HPLC elution time of a sample liquid based on the calibration curve.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent. No. 3250808, U.S. Patent. No. 3271341, Japanese Patent Laid-Cpen No. 2003-119204, International Publication No. WO 2005/042593, International Publication No. WO 2008/060461, International Publication No. WO 2007/046377, Japanese Patent Laid-Cpen No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

The anionic fluorine-containing surfactant may be a compound represented by the following general formula ($N^0$):

$$X^{n0}\text{-}Rf^{n0}\text{-}Y^0 \quad (N^0)$$

wherein $X^{n0}$ is H, Cl, or F; $Rf^{n0}$ is an alkylene group that has 3 to 20 carbon atoms, that is linear, branched, or cyclic, and H of which is partially or entirely replaced with F, the alkylene group may contain one or more ether bonds, and H may be partially replaced with Cl; and $Y^0$ is an anionic group.

The anionic group $Y^0$ may be -COCM, $-SO_2M$, or $-SO_3M$, and may be - COOM or $-SO_3M$.

M is H, a metal atom, $NR^7_4$, optionally substituted imidazolium, optionally substituted pyridinium, or optionally substituted phosphonium, and $R^7$ is -H or an organic group.

Examples of the metal atom include alkali metals (Group 1) and alkaline earth metals (Group 2), such as Na, K, or Li.

$R^7$ may be -H or a $C_{1-10}$ organic group, may be -H or a $C_{1-4}$ organic group, and may be -H or a $C_{1-4}$ alkyl group.

M may be H, a metal atom, or $NR^7_4$, may be H, an alkali metal (Group 1), an alkaline earth metal (Group 2), or $NR^7_4$, and may be H, Na, K, Li, or $NH_4$.

In $Rf^{n0}$, 50% or more of H may be replaced with fluorine.

Examples of the compound represented by general formula ($N^0$) include a compound represented by the following general formula ($N^1$):

$$x^{n0}\text{-}(CF_2)_{n1}\text{-}Y^0 \qquad (N^1)$$

(wherein $X^{n0}$ is H, Cl, or F, m1 is an integer of 3 to 15, and $Y^0$ is as defined above); a compound represented by the following general formula ($N^2$):

$$Rf^{n1}\text{-}O\text{-}(CF\,(CF_3)CF_2O)_{m2}CFX^{n1}\text{-}Y^0 \qquad (N^2)$$

(wherein $Rf^{n1}$ is a perfluoroalkyl group having 1 to 5 carbon atoms, m2 is an integer of 0 to 3, $X^{n1}$ is F or $CF_3$, and $Y^0$

is as defined above); a compound represented by the following general formula (N3) :

$Rf^{n2}(CH_2)_{m3}$-$(Rf^{n3})_q$-$Y^0$ (N3)

(wherein $Rf^{n2}$ is a partially or completely fluorinated alkyl group having 1 to 13 carbon atoms and optionally containing an ether bond and/or a chlorine atom, m3 is an integer of 1 to 3, $Rf^{n3}$ is a linear or branched perfluoroalkylene group having 1 to 3 carbon atoms, q is 0 or 1, and $Y^0$ is as defined above); a compound represented by the following general formula (N4) :

$Rf^{n4}$-O-$(CY^{n1}Y^{n2})_pCF_2$-$Y^0$ ($N^4$)

(wherein $Rf^{n4}$ is a linear or branched partially or completely fluorinated alkyl group having 1 to 12 carbon atoms and optionally containing an ether bond, $Y^{n1}$ and $Y^{n2}$ are the same or different and are each independently H or F, p is 0 or 1, and $Y^0$ is as defined above) ; and a compound represented by the following general formula ($N^5$):

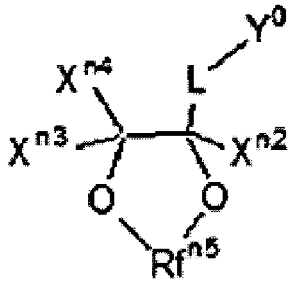

($N^5$)

(wherein $X^{n2}$, $X^{n3}$, and $X^{n4}$ may be the same or different and are each independently H, F, or a linear or branched, partially or fully fluorinated alkyl group having 1 to 6 carbon atoms and optionally containing an ether bond, $Rf^{n5}$ is a linear or branched, partially or fully fluorinated alkylene group having 1 to 3 carbon atoms and optionally containing an ether bond, L is a linking group, and $Y^0$ is as defined above, provided that the total number of carbon atoms of $X^{n2}$, $X^{n3}$, $X^{n4}$, and $Rf^{n5}$ is 18 or less).

Specific examples of the compound represented by general formula ($N^0$)include perfluorocarboxylic acid (I) represented by the following general formula (I), ω-H perfluorocarboxylic acid (II) represented by the following general formula (II), perfluoropolyether carboxylic acid (III) represented by the following general formula (III), perfluoroalkylalkylenecarboxylic acid (IV) represented by the following general formula (IV), perfluoroalkoxyfluorocarboxylic acid (V) represented by the following general formula (V), perfluoroalkylsulfonic acid (VI) represented by the following general formula (VI), ω-H perfluorosulfonic acid (VII) represented by the following general formula (VII), perfluoroalkylalkylene sulfonic acid (VIII) represented by the following general formula (VIII), alkylalkylenecarboxylic acid (IX) represented by the following general formula (IX), fluorocarboxylic acid (X) represented by the following general formula (X), alkoxyfluorosulfonic acid (XI) represented by the following general formula (XI), compound (XII) represented by the following general formula (XII), and compound (XIII) represented by the following general formula (XIII).

The perfluorocarboxylic acid (I) is represented by the following general formula (I):

$F(CF_2)_{n1}COOM$ (I)

wherein n1 is an integer of 3 to 14, M is H, a metal atom, $NR^7_4$, optionally substituted imidazolium, optionally substituted pyridinium, or optionally substituted phosphonium, and $R^7$ is H or an organic group.

The ω-H perfluorocarboxylic acid (II) is represented by the following general formula (II):

$H(CF_2)_{n2}COOM$ (II)

wherein n2 is an integer of 4 to 15; and M is as defined above.

The perfluoropolyethercarboxylic acid (III) is represented by the following general formula (III):

$Rf^1$-O-(CF $(CF_3)CF_2O)$n3CF $(CF_3)COOM$ (III)

wherein $Rf^1$ is a perfluoroalkyl group having 1 to 5 carbon atoms, n3 is an integer of 0 to 3, and M is as defined above.

The perfluoroalkylalkylenecarboxylic acid (IV) is represented by the following general formula (IV):

$$Rf^2(CH_2)_{n4}Rf^3COOM \quad (IV)$$

wherein $Rf^2$ is a perfluoroalkyl group having 1 to 5 carbon atoms, $Rf^3$ is a linear or branched perfluoroalkylene group having 1 to 3 carbon atoms, n4 is an integer of 1 to 3, and M is as defined above.

The alkoxyfluorocarboxylic acid (V) is represented by the following general formula (V):

$$Rf^4\text{-O-}CY^1Y^2CF_2\text{-COOM} \quad (V)$$

wherein $Rf^4$ is a linear or branched, partially or fully fluorinated alkyl group having 1 to 12 carbon atoms and optionally containing an ether bond and/or a chlorine atom, $Y^1$ and $Y^2$ are the same or different and are H or F, and M is as defined above.

The perfluoroalkylsulfonic acid (VI) is represented by the following general formula (VI):

$$F(CF_2)_{n5}SO_3M \quad (VI)$$

wherein n5 is an integer of 3 to 14, and M is as defined above.

The ω-H perfluorosulfonic acid (VII) is represented by the following general formula (VII):

$$H(CF_2)_{n6}SO_3M \quad (VII)$$

wherein n6 is an integer of 4 to 14, and M is as defined above.

The perfluoroalkylalkylenesulfonic acid (VIII) is represented by the following general formula (VIII):

$$Rf^5\ (CH_2)_{n7}SO_3M \quad (VIII)$$

wherein $Rf^5$ is a perfluoroalkyl group having 1 to 13 carbon atoms, n7 is an integer of 1 to 3, and M is as defined above.

The alkylalkylenecarboxylic acid (IX) is represented by the following general formula (IX):

$$Rf^6(CH_2)_{n8}COOM \quad (IX)$$

wherein $Rf^6$ is a linear or branched, partially or fully fluorinated alkyl group having 1 to 13 carbon atoms and optionally containing an ether bond, n8 is an integer of 1 to 3, and M is as defined above.

The fluorocarboxylic acid (X) is represented by the following general formula (X):

$$Rf^7\text{-O-}Rf^8\text{-O-}CF_2\text{-COOM} \quad (X)$$

wherein $Rf^7$ is a linear or branched, partially or fully fluorinated alkyl group having 1 to 6 carbon atoms and optionally containing an ether bond and/or a chlorine atom, $Rf^8$ is a linear or branched, partially or fully fluorinated alkyl group having 1 to 6 carbon atoms, and M is as defined above.

The alkoxyfluorosulfonic acid (XI) is represented by the following general formula (XI):

$$Rf^9\text{-O-}CY^1Y^2CF_2\text{-}SO_3M \quad (XI)$$

wherein $Rf^9$ is a linear or branched, partially or fully fluorinated alkyl group having 1 to 12 carbon atoms, optionally containing chlorine, and optionally containing an ether bond, $Y^1$ and $Y^2$ are the same or different and are H or F, and M is as defined above.

The compound (XII) is represented by the following general formula (XII):

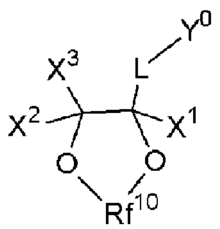

(XII)

wherein $X^1$, $X^2$, and $X^3$ may be the same or different, and each independently are H, F, or a linear or branched, partially or fully fluorinated alkyl group having 1 to 6 carbon atoms and optionally containing an ether bond, $Rf^{10}$ is a perfluoroalkylene group having 1 to 3 carbon atoms, L is a linking group, and $Y^0$ is an anionic group.

$Y^0$ may be -COCM, $-SO_2M$, or $-SO_3M$, and may be $-SO_3M$ or COOM, wherein M is defined above.

Examples of L include a single bond, and a partially or fully fluorinated alkylene group having 1 to 10 carbon atoms and optionally containing an ether bond.

The compound (XIII) is represented by the following general formula (XIII):

$$Rf^{n}\text{-O-}(CF_2CF(CF_3)O)_{n9}(CF_2O)_{n10}CF_2COOM \qquad \text{(XIII)}$$

wherein $Rf^{11}$ is a fluoroalkyl group having 1 to 5 carbon atoms and containing chlorine, n9 is an integer of 0 to 3, n10 is an integer of 0 to 3, and M is as defined above. Examples of the compound (XIII) include $CF_2ClO(CF_2CF(CF_3)O)_{n9}(CF_2O)_{n10}CF_2COONH_4$ (a mixture having an average molecular weight of 750, wherein n9 and n10 are as defined above).

The fluorine-containing surfactant may be a single fluorine-containing surfactant, or may be a mixture containing two or more fluorine-containing surfactants.

Examples of the fluorine-containing surfactant include compounds represented by the following formulae. The fluorine-containing surfactant may be a mixture of these compounds. In one embodiment of the above polymerization, a fluoromonomer is polymerized substantially in the absence of compounds represented by the following formulae:

$F(CF_2)_7COOM$,

$F(CF_2)_5COOM$,

$H(CF_2)_6COOM$,

$CF_3O(CF_2)_3OCHPCF_2COOM$,

$C_3F_7OCF(CF_3)CF_2OCF(CF_3)COOM$,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF(CF_3)CF_2OCF_2COOM$,

$CF_2ClCF(CF_3)OCF_2CF(CF_3)OCF_2COOM$,

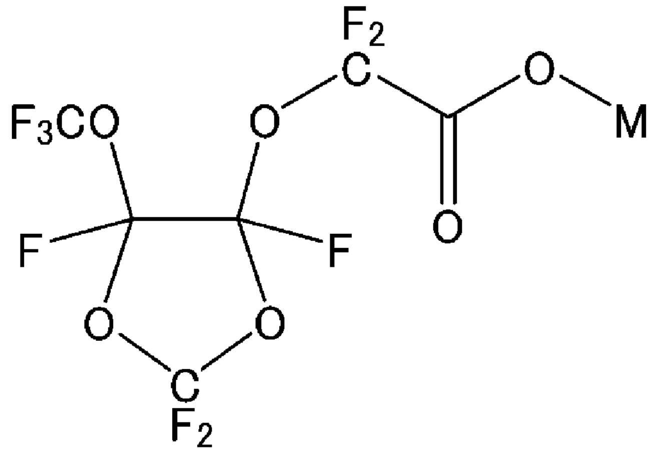

wherein M is H, a metal atom, $NR^7_4$, optionally substituted imidazolium, optionally substituted pyridinium, or optionally substituted phosphonium; and $R^7$ is H or an organic group.

According to the production method of the present disclosure, an aqueous dispersion of a fluorine-containing polymer such as a fluorine-containing elastomer is usually obtained. The production method of the present disclosure may be a method for producing an aqueous dispersion of a fluorine-containing polymer, and may be a method for producing an aqueous dispersion of a fluorine-containing elastomer. The resulting aqueous dispersion of a fluorine-containing polymer preferably has a solid concentration of 10 to 50 mass%, more preferably 15 to 40 mass%, and even more preferably 20 to 30 mass%, when polymerization is complete. By diluting or concentrating the resulting aqueous dispersion of a fluorine-containing polymer by a known method, the solid concentration of the aqueous dispersion of a fluorine-containing polymer may be regulated.

The solid concentration of the aqueous dispersion of a fluorine-containing polymer can be determined by drying 1 g of the aqueous dispersion under 150°C and 180-minute conditions, measuring the mass of the heating residue, and calculating the proportion of the mass of the heating residue to the mass of the aqueous dispersion.

The aqueous dispersion of a fluorine-containing polymer obtained by the production method of the present disclosure may contain fluorine-containing polymer particles. The average particle size of fluorine-containing polymer particles is preferably 10 to 800 nm, more preferably 50 to 500 nm, and more preferably 70 to 300 nm. The average particle size of fluorine-containing polymer particles is a cumulant average diameter and can be measured by dynamic light scattering.

The number of fluorine-containing polymer particles contained in the aqueous dispersion of a fluorine-containing polymer is preferably $1.0\times10^{12}$ particles/cc or more, more preferably $5.0\times10^{12}$ particles/cc or more, and even more preferably $1.0\times10^{13}$ particles/cc or more. The number of particles (the number of polymer particles) can be calculated in accordance with the following expression:

$$\text{Number of polymer particles} = \left\{\frac{\text{Solid concentration of aqueous dispersion (mass\%)}}{100 - \textit{Solid concentration of aqueous dispersion (mass\%)}}\right\} \Big/ \left\{\frac{4}{3}\times 3.14\times\left(\frac{\text{Average particle size (nm)}}{2}\times 10^{-9}\right)^3 \times \text{Specific gravity} \times 10^6\right\}$$

The number of fluorine-containing polymer particles obtained by the expression is the number of particles per 1 cc of water. The specific gravity is the specific gravity of the fluorine-containing polymer. The specific gravity of the fluorine-containing polymer can be determined in accordance with JIS Z 8807:2012.

A treatment such as coagulation or heating may be performed on the aqueous dispersion of a fluorine-containing polymer such as a fluorine-containing elastomer obtained by the production method of the present disclosure.

Coagulation can be carried out by adding an alkaline earth or earth metal salt to the aqueous dispersion. Examples of the alkaline earth or earth metal salt include a sulfuric acid salt, a nitric acid salt, a hydrochloric acid salt, and an acetic acid salt of calcium, magnesium, and aluminum.

The coagulated fluorine-containing polymer may be washed with water to remove a small amount of impurities such as a buffer and a salt present in the fluorine-containing polymer, and then the washed fluorine-containing polymer may be dried. The drying temperature is preferably 40 to 200°C, more preferably 60 to 180°C, and more preferably 80 to 150°C.

The fluorine-containing polymer obtained by the production method of the present disclosure may contain a monomer unit based on the fluorine-free compound (1) in addition to a unit based on the fluorine-containing monomer and a unit based on the fluorine-free monomer that is used as necessary. The content of the monomer unit based on the fluorine-free compound (1) in the fluorine-containing polymer is preferably 0.0009 to 1.5 mass%, more preferably 0.0015 mass% or more, even more preferably 0.0030 mass% or more, particularly preferably 0.0045 mass% or more, and most preferably 0.0060 mass% or more, and is more preferably 0.3 mass% or less, even more preferably 0.15 mass% or less, particularly preferably 0.09 mass% or less, and most preferably 0.06 mass% or less, based on all monomer units. When the content of the monomer unit based on the fluorine-free compound (1) is excessive, the properties required of the resulting fluorine-containing polymer may be impaired.

The present disclosure also relates to a fluorine-containing elastomer containing a monomer unit based on the fluorine-free compound (1). The fluorine-containing elastomer of the present disclosure can be suitably produced by the production method of the present disclosure. The fluorine-containing elastomer of the present disclosure can have the same configuration as that of the fluorine-containing elastomer obtained by the production method of the present disclosure, and preferable embodiments are also the same.

The fluorine-free compound (1), which forms the monomer unit based on the fluorine-free compound (1), may be the fluorine-free compound (1) used in the production method of the present disclosure. In particular, the fluorine-free compound represented by general formula (1-1) is preferable. In general formula (1), Z is preferably $-SO_3M$ or $-OSO_3M$.

The content of the monomer unit based on the fluorine-free compound (1) in the fluorine-containing elastomer of the present disclosure is preferably 0.0009 to 1.5 mass%, more preferably 0.0015 mass% or more, even more preferably 0.0030 mass% or more, particularly preferably 0.0045 mass% or more, and most preferably 0.0060 mass% or more, and is more preferably 0.3 mass% or less, even more preferably 0.15 mass% or less, particularly preferably 0.09 mass% or less, and most preferably 0.06 mass% or less, based on all monomer units. When the content of the monomer unit based on the fluorine-free compound (1) is excessive, the properties required of the fluorine-containing elastomer may be impaired.

The content of the monomer unit based on the fluorine-free compound (1) in the fluorine-containing elastomer of the present disclosure can be calculated by any suitable combination of NMR, FT-IR, elemental analysis, and X-ray fluorescence analysis according to the type of monomer.

The fluorine-containing elastomer of the present disclosure contains a unit that is based on the fluorine-containing monomer in addition to the monomer unit based on the fluorine-free compound (1). The fluorine-containing elastomer of the present disclosure is preferably an elastomer containing a VdF unit or a TFE unit in addition to the monomer unit based on the fluorine-free compound (1), and is more preferably an elastomer containing the monomer unit based on the fluorine-free compound (1) and a VdF unit.

The fluorine-containing elastomer of the present disclosure preferably contains a $-CH_2I$ structure. Whether the $-CH_2I$ structure is contained can be verified by a $^1H$-NMR spectrum. The fluorine-containing elastomer containing a $-CH_2I$ structure can be obtained by iodine transfer polymerization.

In the fluorine-containing elastomer of the present disclosure, the amount of the $-CH_2I$ structure is preferably 0.05 to 1.50 mol% based on 100 mol% of the $-CH_2-$ structure. The amount of the $-CH_2I$ structure is more preferably 0.08 mol% or more and even more preferably 0.12 mol% or more, and is more preferably 1.20 mol% or less, even more preferably 1.00 mol% or less, and particularly preferably 0.80 mol% or less. The amount of the $-CH_2I$ structure can be determined by a $^1H$-NMR spectrum.

The fluorine-containing elastomer of the present disclosure more preferably contains a $-CF_2CH_2I$ structure. The fluorine-containing elastomer containing the $-CF_2CH_2I$ structure can be obtained by producing a VdF-based fluorine-containing elastomer by iodine transfer polymerization.

In the fluorine-containing elastomer of the present disclosure, the amount of the $-CF_2CH_2I$ structure is preferably 0.05 to 1.50 mol% based on 100 mol% of the $-CH_2-$ structure. The amount of the $-CF_2CH_2I$ structure is more preferably 0.08 mol% or more and even more preferably 0.12 mol% or more, and is more preferably 1.20 mol% or less, even more preferably 1.00 mol% or less, and particularly preferably 0.80 mol% or less. The amount of the $-CF_2CH_2I$ structure can be determined in the same manner as the method for determining the amount of the $-CF_2CH_2I$ structure in the fluorine-containing polymer (the fluorine-containing elastomer) obtained by the production method of the present disclosure.

The fluorine-containing elastomer of the present disclosure preferably has a Mooney viscosity at 100°C (ML1 + 10 (100°C)) of 130 or less. The Mooney viscosity is more preferably 110 or less, and even more preferably 90 or less. The Mooney viscosity is more preferably 10 or more, and even more preferably 20 or more. Here, the Mooney viscosity is a value measured in accordance with JIS K 6300-1.2013.

The form of the fluorine-containing elastomer of the present disclosure is not limited, and may be gum, crumb, powder, pellet, or the like. Gum is a small mass of particles made of the fluorine-containing elastomer, and crumb is in the form of an amorphous mass as a result of the fluorine-containing elastomer being unable to maintain a small particulate form as a gum at room temperature and fusing to each other. Gum or crumb is suitably obtained by coagulation, drying,

or the like by a conventionally known method from the aqueous dispersion obtained by the production method of the present disclosure.

The present disclosure also relates to an aqueous dispersion containing a fluorine-containing elastomer and an aqueous medium. The aqueous dispersion of the present disclosure can be suitably produced by the production method of the present disclosure. The aqueous dispersion of the present disclosure can have the same configuration as that of the aqueous dispersion obtained by the production method of the present disclosure, and preferable embodiments are also the same.

The fluorine-containing elastomer contained in the aqueous dispersion of the present disclosure can have the same configuration as that of the fluorine-containing elastomer obtained by the production method of the present disclosure, and preferable embodiments are also the same.

The aqueous medium contained in the aqueous dispersion of the present disclosure is not limited as long as it contains water, and it may be a medium containing water and a fluorine-free organic solvent such as alcohol, ether, or ketone and/or a fluorine-containing organic solvent having a boiling point of 40°C or lower.

The content of the fluorine-containing elastomer in the aqueous dispersion of the present disclosure is preferably 10 to 50 mass%, more preferably 15 to 40 mass%, and even more preferably 20 to 30 mass%. The content (the solid concentration) of the fluorine-containing elastomer in the aqueous dispersion can be determined by drying 1 g of the aqueous dispersion under 150°C and 180-minute conditions, measuring the mass of the heating residue, and calculating the proportion of the mass of the heating residue to the mass of the aqueous dispersion.

The aqueous dispersion of the present disclosure may contain fluorine-containing elastomer particles. The average particle size of fluorine-containing elastomer particles is preferably 10 to 800 nm, more preferably 50 to 500 nm, and more preferably 70 to 300 nm. The average particle size of fluorine-containing elastomer particles is a cumulant average diameter and can be measured by dynamic light scattering.

The number of fluorine-containing elastomer particles contained in the aqueous dispersion of the present disclosure is preferably $1.0\times10^{12}$ particles/cc or more, more preferably $5.0\times10^{12}$ particles/cc or more, and even more preferably $1.0\times10^{13}$ particles/cc or more. The number of particles can be determined in the same manner as the method for calculating the number of fluorine-containing polymer particles contained in the aqueous dispersion of the fluorine-containing polymer obtained by the production method of the present disclosure.

In one embodiment of the aqueous dispersion of the present disclosure, a fluorine-free surfactant (a hydrocarbon surfactant) is contained. In one embodiment of the aqueous dispersion of the present disclosure, the aqueous dispersion is substantially free of the fluorine-free surfactant (the hydrocarbon surfactant). In the present disclosure, "substantially free of the fluorine-free surfactant" means that the content of the fluorine-free surfactant (the hydrocarbon surfactant) in the aqueous dispersion is 10 mass ppm or less, preferably 1 mass ppm or less, more preferably 100 mass ppb or less, even more preferably 10 mass ppb or less, yet more preferably 1 mass ppb or less, and particularly preferably less than the detection limit of measurement by liquid chromatography-mass spectrometry (LC/MS/MS). The content of the fluorine-free surfactant (the hydrocarbon surfactant) can be quantified by a known method. For example, it can be quantified by LC/MS/MS analysis.

In one embodiment of the aqueous dispersion of the present disclosure, a fluorine-containing surfactant is contained (provided that the fluorine-containing compound (A) is excluded) . The aqueous dispersion containing a fluorine-containing surfactant has an advantage that it can be stably produced with high productivity using the fluorine-containing surfactant (provided that the fluorine-containing compound (A) is excluded). Examples of the fluorine-containing surfactant include those exemplified as fluorine-containing surfactants that can be present at the time of polymerization.

In one embodiment of the aqueous dispersion, the fluorine-containing surfactant is substantially not contained (provided that the fluorine-containing compound (A) is excluded) . An aqueous dispersion that is substantially free of the fluorine-containing surfactant needs to be produced by polymerizing the fluorine-containing monomer without using a fluorine-containing surfactant (provided that the fluorine-containing compound (A) is excluded), and such an aqueous dispersion can be produced by the production method of the present disclosure involving the fluorine-free compound (1).

In the present disclosure, "substantially free of a fluorine-containing surfactant" means that the content of the fluorine-containing surfactant (provided that the fluorine-containing compound (A) is excluded) in the aqueous dispersion is 10 mass ppm or less, preferably 1 mass ppm or less, more preferably 100 mass ppb or less, yet more preferably 10 mass ppb or less, further preferably 1 mass ppb or less, and particularly preferably less than the detection limit of measurement by liquid chromatography-mass spectrometry (LC/MS/MS). The content of the fluorine-containing surfactant (provided that the fluorine-containing compound (A) is excluded) can be quantified by a known method. For example, it can be quantified by LC/MS/MS analysis.

When the fluorine-containing polymer obtained by the production method of the present disclosure is a fluorine-containing elastomer, a fluorine-containing elastomer composition can be produced by adding a cross-linking agent, a filler, and the like to the resulting fluorine-containing elastomer. The fluorine-containing elastomer composition can also be produced by adding a cross-linking agent, a filler, and the like to the fluorine-containing elastomer of the present

disclosure. The type and the amount of the cross-linking agent and the filler are not limited, and the cross-linking agent and the filler can be used within a known range.

The method for obtaining the fluorine-containing elastomer composition is not limited as long as the method is capable of uniformly mixing the fluorine-containing elastomer with a cross-linking agent, a filler, and the like. An example may be a method involving kneading a powder obtained by coagulating the fluorine-containing elastomer alone and, if necessary, another additive or a compounding agent with a kneader such as an open roll.

When the fluorine-containing elastomer is an uncrosslinked elastomer, example of the crosslinking system therefor include a peroxide crosslinking system, a polyol crosslinking system, or a polyamine crosslinking system, and the crosslinking system is preferably at least one selected from the group consisting of a peroxide crosslinking system and a polyol crosslinking system. From the viewpoint of chemical resistance, a peroxide crosslinking system is preferable, and from the viewpoint of heat resistance, a polyol crosslinking system is preferable.

Accordingly, the cross-linking agent is preferably at least one cross-linking agent selected from the group consisting of a polyol cross-linking agent and a peroxide cross-linking agent, and more preferably a peroxide cross-linking agent.

The amount of the cross-linking agent contained is suitably selected according to the type of the cross-linking agent and the like, and is preferably 0.2 to 6.0 parts by mass, more preferably 0.2 to 5.0 parts by mass, and even more preferably 0.3 to 3.0 parts by mass based on 100 parts by mass of the fluorine-containing elastomer.

Peroxide crosslinking can be carried out by using an uncrosslinked elastomer capable of peroxide crosslinking as a fluorine-containing elastomer and an organic peroxide as a cross-linking agent.

The uncrosslinked elastomer capable of peroxide crosslinking is not limited, and may be an uncrosslinked elastomer having a site capable of peroxide crosslinking. The site capable of peroxide crosslinking is not limited, and examples include a site having an iodine atom and a site having a bromine atom.

The organic peroxide may be an organic peroxide capable of readily producing peroxy radicals in the presence of heat and a redox system, and examples include 1,1-bis(t-butylperoxy)-3,5,5-trimethylcyclohexane, 2,5-dimethylhexane-2,5-dihydroperoxide, di-t-butyl peroxide, t-butyl cumyl peroxide, dicumyl peroxide, $\alpha,\alpha$-bis(t-butylperoxy)-p-diisopropylbenzene, 2,5-dimethyl-2,5-di(t-butylperoxy)hexane, 2,5-dimethyl-2,5-di(t-butylperoxy)-hexyne-3, benzoyl peroxide, t-butyl peroxybenzene, t-butyl peroxymaleate, t-butyl peroxyisopropyl carbonate, and t-butyl peroxybenzoate. Among these, 2,5-dimethyl-2,5-di(t-butylperoxy)hexane and 2,5-dimethyl-2,5-di(t-butylperoxy)-hexyne-3 are preferable.

The amount of the organic peroxide contained is preferably 0.1 to 15 parts by mass and more preferably 0.3 to 5 parts by mass based on 100 parts by mass of the fluorine-containing elastomer.

When the cross-linking agent is an organic peroxide, the fluorine-containing elastomer composition preferably further contains a cross-linking aid. Examples of the cross-linking aid include triallyl cyanurate, triallyl isocyanurate (TAIC), triacrylformal, triallyl trimellitate, N,N'-m-phenylene bismaleimide, dipropagil terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, N,N-diallylacrylamide, 1,6-divinyldodecafluorohexane, hexaallyl phosphoramide, N,N,N',N'-tetraallyl phthalamide, N,N,N',N'-tetraallyl malonamide, trivinyl isocyanurate, 2,4,6-trivinylmethyltrisiloxane, tri(5-norbornene-2-methylene)cyanurate, triallyl phosphite, and trimethallyl isocyanurate. Among these, triallyl isocyanurate (TAIC) is preferable in terms of excellent crosslinkability, mechanical properties, and flexibility.

The amount of the cross-linking aid contained is preferably 0.01 to 10 parts by mass, more preferably 0.01 to 7.0 parts by mass, and even more preferably 0.1 to 5.0 parts by mass based on 100 parts by mass of the fluorine-containing elastomer. An amount of the cross-linking aid of less than 0.01 parts by mass results in poor mechanical properties and poor flexibility. An amount exceeding 10 parts by mass tends to result in inferior heat resistance and also poor durability of a molded article.

Polyol crosslinking can be carried out by using an uncrosslinked elastomer capable of polyol crosslinking as a fluorine-containing elastomer and a polyhydroxy compound as a cross-linking agent. In the polyol crosslinking system, the amount of the polyhydroxy compound contained is preferably 0.01 to 10 parts by mass based on 100 parts by mass of the uncrosslinked elastomer capable of polyol crosslink. When the amount of the polyhydroxy compound contained is in such a range, polyol crosslinking can be sufficiently promoted. The amount is more preferably 0.02 to 8 parts by mass. The amount is even more preferably 0.03 to 4 parts by mass.

The uncrosslinked elastomer capable of polyol crosslinking is not limited, and may be an uncrosslinked elastomer having a site capable of polyol crosslinking. The site capable of polyol crosslinking is not limited, and may be, for example, a site having a vinylidene fluoride (VdF) unit. The method for introducing the crosslinking site may be a method involving copolymerizing a monomer that provides a crosslinking site at the time of polymerization of an uncrosslinked elastomer.

A suitable polyhydroxy compound may be a polyhydroxy aromatic compound in terms of excellent heat resistance.

The polyhydroxy aromatic compound is not limited, and examples include 2,2-bis(4-hydroxyphenyl)propane

(hereinafter referred to as bisphenol A), 2,2-bis(4-hydroxyphenyl)perfluoropropane (hereafter referred to as bisphenol AF, and bisphenol AF is available from, for example, FUJIFILM Wako Pure Chemical Corporation, Central Glass Co., Ltd., or the like), resorcin, 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (hereinafter referred to as bisphenol B), 4,4-bis(4-hydroxyphenyl)valeric acid, 2,2-bis(4-hydroxyphenyl)tetrafluorodichloropropane, 4,4'-dihydroxydiphenyl sulfone, 4,4'-dihydroxydiphenylketone, tri(4-hydroxyphenyl)methane, 3,3',5,5'-tetrachlorobisphenol A, and 3,3',5,5'-tetrabromobisphenol A. These polyhydroxy aromatic compounds may be alkali metal salts, alkaline earth metal salts, and the like, and when the copolymer is coagulated with acid, the metal salts are preferably not used. The amount of the polyhydroxy aromatic compound contained is 0.1 to 15 parts by mass and preferably 0.5 to 5 parts by mass based on 100 parts by mass of the uncrosslinked elastomer.

When the cross-linking agent is a polyhydroxy compound, the fluorine-containing elastomer composition preferably further contains a crosslinking accelerator. The crosslinking accelerator promotes formation of an intramolecular double bond in the dehydrofluorination reaction of the polymer main chain and addition of a polyhydroxy compound to the formed double bond.

The crosslinking accelerator may be used in combination with an acid acceptor such as magnesium oxide or with a cross-linking aid.

Examples of the crosslinking accelerator include onium compounds, and among onium compounds, the crosslinking accelerator is preferably at least one selected from the group consisting of ammonium compounds such as a quaternary ammonium salt, phosphonium compounds such as a quaternary phosphonium salt, oxonium compounds, sulfonium compounds, cyclic amines, and monofunctional amine compounds, and more preferably at least one selected from the group consisting of quaternary ammonium salts and quaternary phosphonium salts.

The quaternary ammonium salt is not limited, and examples include 8-methyl-1,8-diazabicyclo[5,4,0]-7-undecenium chloride, 8-methyl-1,8-diazabicyclo[5,4,0]-7-undecenium iodide, 8-methyl-1,8-diazabicyclo[5,4,0]-7-undecenium hydroxide, 8-methyl-1,8-diazabicyclo[5,4,0]-7-undecenium methyl sulfate, 8-ethyl-1,8-diazabicyclo[5,4,0]-7-undecenium bromide, 8-propyl-1,8-diazabicyclo[5,4,0]-7-undecenium bromide, 8-dodecyl-1,8-diazabicyclo[5,4,0]-7-undecenium chloride, 8-dodecyl-1,8-diazabicyclo[5,4,0]-7-undecenium hydroxide, 8-eicosyl-1,8-diazabicyclo[5,4,0]-7-undecenium chloride, 8-tetracosyl-1,8-diazabicyclo[5,4,0]-7-undecenium chloride, 8-benzyl-1,8-diazabicyclo[5,4,0]-7-undecenium chloride (hereinafter referred to as DBU-B, and DBU-B is available from, for example, FUJIFILM Wako Pure Chemical Corporation), 8-benzyl-1,8-diazabicyclo[5,4,0]-7-undecenium hydroxide, 8-phenethyl-1,8-diazabicyclo[5,4,0]-7-undecenium chloride, 8-(3-phenylpropyl)-1,8-diazabicyclo[5,4,0]-7-undecenium chloride, tetrabutylammonium hydrogensulfate, tetrabutylammonium hydroxide, tetrabutylammonium chloride, and tetrabutylammonium bromide. Among these, DBU-B is preferable in terms of crosslinkability, mechanical properties, and flexibility.

The quaternary phosphonium salt is not limited, and examples include tetrabutylphosphonium chloride, benzyltriphenylphosphonium chloride (hereinafter referred to as BTPPC), benzyltrimethylphosphonium chloride, benzyltributylphosphonium chloride, tributylallylphosphonium chloride, tributyl-2-methoxypropylphosphonium chloride, and benzylphenyl(dimethylamino)phosphonium chloride, and among these, benzyltriphenylphosphonium chloride (BTPPC) is preferable in terms of crosslinkability, mechanical properties, and flexibility.

The crosslinking accelerator may be a solid solution of a quaternary ammonium salt and bisphenol AF, a solid solution of a quaternary phosphonium salt and bisphenol AF, or a chlorine-free crosslinking accelerator disclosed in Japanese Patent Laid-Cpen No. 11-147891.

The amount of the crosslinking accelerator contained is preferably 0.01 to 8.00 parts by mass and more preferably 0.02 to 5.00 parts by mass based on 100 parts by mass of the uncrosslinked elastomer. The amount is even more preferably 0.03 to 3.00 parts by mass. When the amount of the crosslinking accelerator is less than 0.01 parts by mass, there is a possibly that the crosslinking of the uncrosslinked elastomer does not sufficiently proceed, and the resulting molded article has poor heat resistance and the like. When the amount exceeds 8.00 parts by mass, there is a possibility that the fluorine-containing elastomer composition has poor mold processability, and there is a tendency that elongation with respect to mechanical properties is reduced, and flexibility is also reduced.

The acid acceptor is used to neutralize an acidic substance produced during polyol crosslinking, and specific examples include magnesium oxide, calcium hydroxide (such as NICC 5000 (manufactured by Inoue Calcium Corporation), CALDIC #2000, CALDIC #1000 (manufactured by Ohmi Chemical Industry Co., Ltd.)), calcium oxide, litharge (lead oxide), zinc oxide, dibasic lead phosphite, and hydrotalcite, and the acid acceptor is preferably at least one selected from the group consisting of high-activity magnesium oxide and low-activity magnesium.

Polyamine crosslinking can be carried out by using a fluorine-containing elastomer capable of polyamine crosslinking as a fluorine-containing elastomer and a polyamine compound as a cross-linking agent.

The fluorine-containing elastomer capable of polyamine crosslinking is not limited, and may be a fluorine-containing elastomer having a site capable of polyamine crosslinking. The site capable of polyamine crosslinking is not limited, and may be, for example, a site having a vinylidene fluoride (VdF) unit. The method for introducing the crosslinking site may be a method involving copolymerizing a monomer that provides a crosslinking site at the time of polymerization

of a fluorine-containing elastomer.

Examples of the polyamine compound include hexamethylenediamine carbamate, N,N'-dicinnamylidene-1,6-hexamethylenediamine, and 4,4'-bis(aminocyclohexyl)methane carbamate. Among these, N,N'-dicinnamylidene-1,6-hexamethylenediamine is preferable.

The fluorine-containing elastomer composition may contain at least one polyfunctional compound. The polyfunctional compound is a compound having two or more functional groups having the same or different structures within one molecule. The functional group contained in the polyfunctional compound may be a functional group generally known to have reactivity, such as a carbonyl group, a carboxyl group, a haloformyl group, an amide group, an olefin group, an amino group, an isocyanate group, a hydroxy group, and an epoxy group.

The fluorine-containing elastomer composition may contain an ordinary additive that is added to an elastomer as necessary, such as a filler (such as carbon black or barium sulfate), a processing aid (such as wax), a plasticizer, a colorant, a stabilizer, an adhesive aid, an adhesion-imparting agent (such as coumarone resin or coumarone-indene resin), a mold release agent, an electroconductivity imparting agent, a thermal conductivity imparting agent, a surface non-sticking agent, a flexibility imparting agent, a heat resistance improving agent, a flame retarder, and like various additives, and such additives are used as long as the effects of the present disclosure are not impaired.

The content of the filler such as carbon black is not limited, and is preferably 0 to 300 parts by mass, more preferably 1 to 150 parts by mass, even more preferably 2 to 100 parts by mass, and particularly preferably 2 to 75 parts by mass based on 100 parts by mass of the fluorine-containing elastomer.

The content of the processing aid such as wax is preferably 0 to 10 parts by mass and more preferably 0 to 5 parts by mass based on 100 parts by mass of the fluorine-containing elastomer. When a processing aid, a plasticizer, and a mold release agent are used, the mechanical properties and the sealability of the resulting molded article are tend to be impaired, and thus the contents thereof need to be regulated such that the characteristics of the intended molded article to be obtained are acceptable.

The molded article can be obtained from the fluorine-containing elastomer composition. The molded article can be obtained by molding and crosslinking the fluorine-containing elastomer composition. The fluorine-containing elastomer composition can be molded by a conventionally known method. The molding and crosslinking methods and conditions are within the scope of known methods and conditions for the adopted molding and crosslinking. The order of molding and crosslinking is not limited, and the composition may be molded and then crosslinked, may be crosslinked and then molded, or simultaneously molded and crosslinked.

Examples of the molding method include, but are not limited to, pressure molding involving a metal mold or the like, casting, injection molding, extrusion, and molding involving a rotocure. The crosslinking method adopted may be a steam crosslinking method, an ordinary method in which the crosslinking reaction is started by heating, a radiation crosslinking method, or the like, and, in particular, the crosslinking reaction by heating is preferable. Non-limiting specific crosslinking conditions are suitably determined according to the type of a crosslinking agent to be used, usually within a temperature range of 140 to 250°C and a crosslinking time of 1 min to 24 hr.

By heating the resulting molded article with an oven or the like, mechanical properties and high-temperature compression set properties can be improved. As for non-limiting specific crosslinking conditions, crosslinking conditions are suitably determined according to the type of a crosslinking agent to be used, usually within a temperature range of 140 to 300°C and a range of 30 min to 72 hr.

The resulting molded article can be used as various components in various fields such as automobile industry, aircraft industry, and semiconductor industry.

Examples of the fields where the molded article is used include a semiconductor-related field, an automobile field, an aircraft field, a space/rocket field, a ship field, a chemical product field such as chemical plants, a pharmaceutical field such as drugs, a photography field such as developing machines, a printing field such as printing machines, a painting field such as painting equipment, an analytical/physicochemical machinery field such as analytical instruments and measurement instruments, a food equipment field including food plant equipment and household products, a beverage and food manufacturing apparatus field, a drug manufacturing apparatus field, a medical component field, a chemical-reagent transport equipment field, a nuclear power plant equipment field, a steel field such as steel plate processing equipment, a general industrial field, an electrical field, a fuel cell field, an electronic component field, an optical equipment component field, a space equipment component field, a petrochemical plant equipment field, an energy resource searching and mining equipment component field for oil, gas, and the like, a petroleum refining field, and a petroleum transport equipment component field.

Examples of the usage of the molded article include various sealing materials and packings, such as rings, packings, gaskets, diaphragms, oil seals, bearing seals, lip seals, plunger seals, door seals, lip and face seals, gas delivery plate seals, wafer support seals, and barrel seals. The molded article as a sealing material can be used in applications where excellent non-stickiness and low-friction properties are required.

Also, the molded article can be used as a tube, a hose, a roll, various types of rubber roll, a flexible joint, a rubber plate, a coating, a belt, a damper, a valve, a valve seat, a valve body, a chemical resistant coating material, a

laminating material, a lining material, and the like.

The cross-sectional shape of the ring, packing, and seal may be any of various shapes, and, specifically, it may be, for example, a square shape, an O-shape, or a ferrule, or may be an irregular shape such as a D-shape, an L-shape, a T-shape, a V-shape, an X-shape, or a Y-shape.

In the semiconductor-related field, the molded article can be used in, for example, a semiconductor manufacturing apparatus, a liquid crystal panel manufacturing apparatus, a plasma panel manufacturing apparatus, a plasma display panel manufacturing apparatus, a plasma-addressed liquid crystal panel manufacturing apparatus, an organic EL panel manufacturing apparatus, a field emission display panel manufacturing apparatus, a solar cell substrate manufacturing apparatus, and a semiconductor transport apparatus. Examples of such apparatuses include a CVD apparatus, a gas control apparatus such as a semiconductor gas control apparatus, a dry etching apparatus, a wet etching apparatus, a plasma etching apparatus, a reactive ion etching apparatus, a reactive ion beam etching apparatus, a sputter etching apparatus, an ion beam etching apparatus, an oxidation diffusion apparatus, a sputtering apparatus, an ashing apparatus, a plasma ashing apparatus, a cleaning apparatus, an ion injection apparatus, a plasma CVD apparatus, a ventilation apparatus, an exposure apparatus, a polishing apparatus, a film forming apparatus, a dry etching cleaning apparatus, a UV/$O_3$ cleaning apparatus, an ion beam cleaning apparatus, a laser beam cleaning apparatus, a plasma cleaning apparatus, a gas etching cleaning apparatus, an extraction cleaning apparatus, a Soxhlet extraction cleaning apparatus, a high temperature high pressure extraction cleaning apparatus, a microwave extraction cleaning apparatus, a supercritical extraction cleaning apparatus, a cleaning apparatus involving hydrofluoric acid, hydrochloric acid, sulfuric acid, ozone water, or the like, a stepper, a coater/developer, a CMP apparatus, an excimer laser exposure machine, chemical solution piping, gas piping, an apparatus for carrying out plasma treatment such as $NF_3$ plasma treatment, $O_2$ plasma treatment, and fluorine plasma treatment, a heat treatment film forming apparatus, a wafer transport apparatus, a wafer cleaning apparatus, a silicon wafer cleaning apparatus, a silicon wafer treatment apparatus, an apparatus used in LP-CVD process, an apparatus used in lamp annealing process, and an apparatus used in reflow process.

Specific examples of usage in the semiconductor-related field include various sealing materials such as an O-ring and a gasket for a gate valve, a quartz window, a chamber, a chamber lid, a gate, a bell jar, a coupling, and a pump; various sealing materials such as an O-ring for a resist developer and stripper, a hose, and a tube; a lining and a coating for a resist developer tank, a stripper tank, a wafer cleaning solution tank, and a wet etching tank; a diaphragm for a pump; a roll for wafer transport; a hose and a tube for a wafer cleaning solution; a sealing material for a clean facility, such as a sealant for a clean facility such as a clean room; a sealing material for a storage room for storing semiconductor manufacturing apparatuses and devices such as wafers; and a diaphragm for transferring a chemical solution used in a semiconductor manufacturing process.

In the automobile field, the molded article can be used in an engine body, a main motor system, a valve train system, a lubrication/cooling system, a fuel system, an intake/exhaust system, a transmission system of a drive system, a steering system of a chassis, a brake system, and an electrical component such as a basic electrical component, a control system electrical component, and an equipment electrical component. The automobile field also includes motorcycles.

As for the engine body and its peripherals described above, the molded article can be used for various sealing materials that are required to have heat resistance, oil resistance, fuel oil resistance, engine cooling antifreeze resistance, and steam resistance, and examples of such sealing materials include seals such as gaskets, shaft seals, and valve stem seals, non-contact or contact type packings such as self-seal packings, piston rings, split-ring packings, mechanical seals and oil seals, bellows, diaphragms, hoses, tubes, and various sealing materials used for electric wires, cushioning materials, anti-vibration materials, and belt AT apparatuses.

Specific examples of usage in the fuel system include an O-ring used for a fuel injector, a cold start injector, a fuel line quick connector, a sender flange quick connector, a fuel pump, a fuel tank quick connector, a gasoline mixing pump, a gasoline pump, a tube body of a fuel tube, a connector of a fuel tube, an injector, and the like; a seal used for an intake manifold, a fuel filter, a pressure regulating valve, a canister, a fuel tank cap, a fuel pump, a fuel tank, a fuel tank sender unit, a fuel injection apparatus, a fuel high pressure pump, a fuel line connector system, a pump timing control valve, a suction control valve, a solenoid sub-assembly, a fuel cut valve, and the like; a canister purge solenoid valve seal, an onboard refueling vapor recovery (ORVR) valve seal, a fuel pump oil seal, a fuel sender seal, a fuel tank rollover valve seal, a filler seal, an injector seal, a filler cap seal, and a filler cap valve seal; a hose such as a fuel hose, a fuel supply hose, a fuel return hose, a vapor (evaporation) hose, a vent (breather) hose, a filler hose, a filler neck hose, a hose in a fuel tank (in-tank hose), a carburetor control hose, a fuel inlet hose, and a fuel breather hose; a gasket used for a fuel filter, a fuel line connector system, and the like, and a flange gasket used for a carburetor and the like; a line material for a steam recovery line, a fuel feed line, a vapor/ORVR line, and the like; a diaphragm used for a canister, an ORVR, a fuel pump, a fuel tank pressure sensor, a gasoline pump, a carburetor sensor, a composite air controller (CAC), a pulsation damper, a canister, an autocock, and the like, and a pressure regulator diaphragm of a fuel injector; a fuel pump valve, a carburetor needle valve, a rollover check valve, and a check valve; a tube used in a vent (breather) and a fuel tank; a tank packing for a fuel tank or the like, and a packing for a carburetor acceleration pump piston; a fuel

sender anti-vibration component for a fuel tank; an O-ring and a diaphragm for controlling a fuel pressure; an accelerator pump cup; an in-tank fuel pump mount; an injector cushion ring of a fuel injector; an injector seal ring; a needle valve core valve of a carburetor; an acceleration pump piston of a carburetor; a valve seat of a compound air controller (CAC); a fuel tank body; and a seal component for a solenoid valve.

Specific examples of usage in the brake system include a diaphragm used for a master back, a hydraulic brake hose air brake, a brake chamber of an air brake, and the like; a hose used for a brake hose, a brake oil hose, a vacuum brake hose, and the like; various sealing materials such as an oil seal, an O-ring, a packing, and a brake piston seal; a breather valve and a vacuum valve for a master back and a check valve for a brake valve; a piston cup (rubber cup) for a master cylinder, and a brake cup; and a boot for a master cylinder and a vacuum booster of a hydraulic brake, and a wheel cylinder of a hydraulic brake, and an O-ring and a grommet for an anti-lock brake system (ABS).

Specific examples of usage in the basic electrical component include an insulator and a sheath of an electric wire (harness), a tube of a harness exterior component, and a grommet for a connector.

Specific examples of usage in the control system electrical component include a coating material of various sensor wires.

Specific examples of usage in the equipment electrical component include an O-ring and a packing for a car air conditioner, a gasket for a cooler hose, a high pressure air conditioner hose, and an air conditioner hose, a gasket for an electronic throttle unit, a plug boot for direct ignition, and a diaphragm for a distributor. The molded article can also be used to adhere an electrical component.

Specific examples of usage in the intake/exhaust system include a packing used for an intake manifold, an exhaust manifold, and the like, and a throttle body packing for a throttle; a diaphragm used for EGR (exhaust gas recirculation), pressing control (BPT), a wastegate, a turbo wastegate, an actuator, an actuator for a variable turbine geometry (VTG) turbo, an exhaust purification valve, and the like; a hose such as an EGR (exhaust gas recirculation) control hose, an emission control hose, a turbo oil hose (supply) and a turbo oil hose (return) of a turbocharger, a turbo air hose, an intercooler hose, a turbocharger hose, a hose connected to a compressor of a turbo engine equipped with an intercooler, an exhaust gas hose, an air intake hose, a turbo hose, and a DPF (diesel particulate filter) sensor hose; an air duct and a turbo air duct; an intake manifold gasket; and a sealing material EGR, a sealing material used for an afterburn prevention valve seat of an AB valve, a turbine shaft seal (of a turbocharger and the like), and a groove component of a rocker cover and air suction manifold used in automobile engines.

In addition, in exhaust gas control components, the molded article can be used as a seal used for a steam recovery canister, a catalytic converter, an exhaust gas sensor, an oxygen sensor, and the like, and a seal for a solenoid armature of steam recovery and steam canister; and an intake manifold gasket.

In addition, in components relating to diesel engines, the molded article can be used as an O-ring seal for a direct injection injector, a rotary pump seal, a control diaphragm, a fuel hose, a diaphragm for EGR, a priming pump, and a boost compensator, and the like. It can also be used as an O-ring, a sealing material, a hose, a tube, a diaphragm, a gasket material, and a pipe used for a urea SCR system, a urea water tank body of a urea SCR system, a sealing material for a urea water tank, and the like.

Specific examples of usage in the transmission system include a transmission-related bearing seal, oil seal, O-ring, packing, and torque converter hose.

Examples also include a transmission oil seal, and a transmission oil hose, an ATF hose, an O-ring, and a packing of an AT.

The transmission includes an AT (automatic transmission), an MT (manual transmission), a CVT (continuously variable transmission), a DCT (dual clutch transmission), and the like.

Examples also include an oil seal, a gasket, an O-ring, and a packing for a manual or automatic transmission, an oil seal, a gasket, an O-ring, and a packing for a continuously variable transmission (a belt type or a toroidal type), a packing for an ATF linear solenoid, an oil hose for a manual transmission, an ATF hose for an automatic transmission, and a CVTF hose for a continuously variable transmission (a belt type or a toroidal type).

Specific examples of usage in the steering system include a power steering oil hose and a high pressure power steering hose.

Examples of usage in the engine body of an automobile engine include gaskets such as a cylinder head gasket, a cylinder head cover gasket, an oil pan packing, and a general-purpose gasket, seals such as an O-ring, a packing, and a timing belt cover gasket, hoses such as a control hose, anti-vibration rubber of an engine mount, a control valve diaphragm, and a camshaft oil seal.

In the main motor system of an automobile engine, the molded article can be used for a shaft seal such as a crankshaft seal and a camshaft seal, and the like.

In the valve train system of an automobile engine, the molded article can be used as a valve stem oil seal of an engine valve, a valve seat of a butterfly valve, and the like.

In the lubrication/cooling system of an automobile engine, the molded article can be used as an engine oil cooler hose, an oil return hose, and a seal gasket of an engine oil cooler, a water hose around a radiator, a radiator

seal, a radiator gasket, a radiator O-ring, a vacuum pump oil hose of a vacuum pump, a radiator hose, a radiator tank, a diaphragm for oil pressure, a fan coupling seal, and the like.

Thus, specific examples of usage in the automobile field include an engine head gasket, an oil pan gasket, a manifold packing, an oxygen sensor seal, an oxygen sensor bush, a nitrogen oxide ($NO_x$) sensor seal, a nitrogen oxide ($NO_x$) sensor bush, a sulfur oxide sensor seal, a temperature sensor seal, a temperature sensor bush, a diesel particle filter sensor seal, a diesel particle filter sensor bush, an injector O-ring, an injector packing, a fuel pump O-ring and diaphragm, a gearbox seal, a power piston packing, a cylinder liner seal, a valve stem seal, a static valve stem seal, a dynamic valve stem seal, an automatic transmission front pump seal, a rear axle pinion seal, a universal joint gasket, a speedometer pinion seal, a foot brake piston cup, a torque transmission apparatus O-ring and oil seal, a discharge gas afterburner seal and bearing seal, an afterburner hose, a carburetor sensor diaphragm, an anti-vibration rubber (such as an engine mount, an exhaust part, a muffler hanger, a suspension bush, a center bearing, and a strut bumper rubber), a suspension anti-vibration rubber (such as a strut mount and a bush), a drive system anti-vibration rubber (such as a damper), a fuel hose, an EGR tube and hose, a twin cab tube, a carburetor needle valve core valve, a carburetor flange gasket, an oil hose, an oil cooler hose, an ATF hose, a cylinder head gasket, a water pump seal, a gearbox seal, a needle valve tip, a motorcycle reed valve reed, an automobile engine oil seal, a gasoline hose gun seal, a car air conditioner seal, an engine intercooler rubber hose, a seal of fuel line connector systems, a CAC valve, a needle tip, an electric wire around an engine, a filler hose, a car air conditioner O-ring, an intake gasket, a fuel tank material, a distributor diaphragm, a water hose, a clutch hose, a PS hose, an AT hose, a master back hose, a heater hose, an air conditioner hose, a ventilation hose, an oil filler cap, a PS rack seal, a rack & pinion boot, a CVJ boot, a ball joint dust cover, a strut dust cover, a weather strip, a glass run, a center unit packing, a body sight welt, a bumper rubber, a door latch, a dash insulator, a high tension cord, a flat belt, a poly V belt, a timing belt, a toothed belt, a V-ribbed belt, a tire, a wiper blade, a diaphragm and a plunger for an LPG vehicle regulator, a diaphragm and a valve for a CNG vehicle regulator, a DME compatible rubber component, an auto tensioner diaphragm and boot, an idle speed control diaphragm and valve, an auto speed control actuator, a negative pressure pump diaphragm, a check valve and plunger, an O.P.S. diaphragm and O-ring, a gasoline pressure relief valve, an engine cylinder sleeve O-ring and gasket, a wet cylinder sleeve O-ring and gasket, a differential gear seal and gasket (gear oil seal and gasket), a power steering apparatus seal and gasket (PSF seal and gasket), a shock absorber seal and gasket (SAF seal and gasket), a constant velocity joint seal and gasket, a wheel bearing seal and gasket, a metal gasket coating agent, a caliper seal, a boot, a wheel bearing seal, and a bladder used in vulcanization molding of a tire.

In the aircraft field, the space/rocket field, and the ship field, the molded article can be used especially in a fuel system and a lubricating oil system.

In the aircraft field, the molded article can be used as, for example, various aircraft sealing components, various aircraft components in aircraft engine oil applications, a jet engine valve stem seal, gasket, and O-ring, a rotating shaft seal, a hydraulic equipment gasket, a fire wall seal, a fuel supply hose, gasket, and O-ring, an aircraft cable, oil seal, and shaft seal, and the like.

In the space/rocket field, the molded article can be used as, for example, a lip seal, a diaphragm, and an O-ring for a spacecraft, a jet engine, a missile, and the like, a gas turbine engine oil-resistant O-ring, a vibration isolation table pad for missile ground control, and the like.

In the ship field, the molded article can be used as, for example, a screw propeller shaft stern seal, a diesel engine intake/exhaust valve stem seal, a valve seal of a butterfly valve, a valve seat and a shaft seal of a butterfly valve, a shaft seal of a butterfly valve, a stern tube seal, a fuel hose, a gasket, an engine O-ring, a ship cable, a ship oil seal, a ship shaft seal, and the like.

In the chemical product field such as chemical plants and the pharmaceutical field such as drugs, the molded article can be used in a process where a high level of chemical resistance is required, such as a process of producing chemical products such as drugs, agrochemicals, coating materials, and resins.

Specific examples of usage in the chemical product and pharmaceutical fields include seals used in a chemical apparatus, a pump and a flow meter for chemical reagents, piping for chemical reagents, a heat exchanger, an agrochemical sprayer, an agrochemical transfer pump, gas piping, a fuel cell, an analytical instrument and physicochemical instrument (such as column fitting for analytical instruments and measurement instruments), an expansion joint of a flue gas desulfurization apparatus, a nitric acid plant, a power plant turbine, and the like, a seal used in a medical sterilization process, a seal for a plating solution, a belt roller seal for paper making, a wind tunnel joint seal; an O-ring used in a chemical apparatus such as a reactor and a stirrer, an analytical instrument and measurement instrument, a chemical pump, a pump housing, a valve, a rotary meter, and the like, an O-ring for a mechanical seal, and an O-ring for compressor sealing; a packing used in a tube joint part or the like of a high temperature vacuum dryer, a gas chromatography, and a pH meter, and a glass cooler packing for a sulfuric acid manufacturing apparatus; a diaphragm used in a diaphragm pump, an analytical instrument, a physicochemical instrument, and the like; a gasket used in an analytical instrument and a measurement instrument; a fitting wheel (ferrule) used in an analytical instrument and a measurement instrument; a valve seat; a U cup; a lining used in a chemical apparatus, a gasoline tank, a wind tunnel, and the like, and a corrosion-resistant lining for an anodized aluminum processing tank; a coating of a masking jig for plating; a valve component of an analytical instrument and a physicochemical instrument; an expansion joint of a flue gas desulfurization plant; an acid resistant hose against concentrated sulfuric acid and the like, a chlorine gas transfer hose, an oil-resistant hose, a rainwater drain hose for benzene and toluene storage tanks; a chemical resistant tube and a medical tube used in an analytical instrument and a physicochemical instrument; a trichlorethylene-resistant roll for fiber dyeing and a dyeing roll; a medical plug for drug; a medical rubber plug; a chemical solution bottle, a chemical solution tank, a bag, a chemical container; and protective equipment such as a glove and a boot that are resistant to strong acids and solvents.

In the photography field such as a developing machine, the printing field such as a printing machine, and the painting field such as painting equipment, the molded article can be used as a roll, a belt, a seal, a valve component, and the like of a dry copier.

Specific examples of usage in the photography field, the printing field, and the painting field include a surface layer of a transfer roll of a copier, a cleaning blade of a copier, and a copier belt; a roll (such as a fixing roll, a crimping roll, and a pressure roll) and a belt for OA equipment such as a copier, a printer, and a facsimile; a roll, a roll blade, and a belt of a PPC copier; a roll of a film developer and an X-ray film developer; a printing roll, a scraper, a tube, a valve component, and a belt for a printing machine; an ink tube, a roll, and a belt of a printer; a coating roll, a scraper, a tube, and a valve component of painting and coating equipment; and a development roll, a gravure roll, a guide roll, a guide roll for a magnetic tape manufacturing coating line, a gravure roll for a magnetic tape manufacturing coating line, a coating roll, and the like.

In the food plant equipment and the food equipment field including household products, the molded article can be used in a food manufacturing process and for food transfer equipment or food storage equipment.

Specific examples of usage in the food equipment field include a seal for a plate-type heat exchanger, a solenoid valve seal for an automatic vending machine, a jar pot packing, a sanitary pipe packing, a pressure cooker packing, a water heater seal, a heat exchanger gasket, a diaphragm and a packing for a food processing treatment apparatus, a rubber material for a food processing treatment machine (e.g., various seals such as a heat exchanger gasket, a diaphragm, and an O-ring, piping, a hose, a sanitary packing, a valve packing, and a filling packing used as a joint between the mouth of a bottle or the like and a filler during filling). Examples also include a packing, a gasket, a tube, a diaphragm, a hose, and a joint sleeve used for products such as alcoholic beverages and soft drinks, a filling apparatus, a food sterilizer, a brewing apparatus, a water heater, and various automatic food vending machines.

In the nuclear power plant equipment field, the molded article can be used for a check valve and a pressure reducing valve around a nuclear reactor, a seal for a uranium hexafluoride enricher, and the like.

Specific examples of usage in the general industrial field include a sealing material for hydraulic equipment such as a machine tool, a construction machine, and a hydraulic machine; a seal and a bearing seal of a hydraulic and lubrication machine; a sealing material used for a mandrel and the like; a seal used for a window of a dry cleaner and the like; a seal and a (vacuum) valve seal for a cyclotron, a proton accelerator seal, a seal for an automatic packaging machine, a diaphragm of a pump for an analyzer of sulfur dioxide gas and chlorine gas in air (pollution measuring equipment), a snake pump lining, a roll and a belt for a printer, a transport belt (a conveyor belt), a squeezing roll for acid-washing of an iron plate and the like, a robot cable, a solvent squeezing roll for aluminum rolling line and the like, a coupler O-ring, an acid resistant cushioning material, a dust seal and a lip rubber for a sliding part of a cutting machine, a gasket for garbage incinerator, a friction material, a metal or rubber surface modifier, and a covering material. The molded article can also be used as a gasket and a sealing material for an apparatus used in a papermaking process, a sealant for a clean room filter unit, an architectural sealant, a protective coating agent for concrete, cement, and the like, a glass cloth impregnating material, a polyolefin processing aid, a polyethylene moldability improving additive, a fuel tank for a small generator, a lawnmower, and the like, and a pre-coated metal obtained by applying a primer treatment to a metal plate. In addition, the molded article can be used as a sheet and a belt by impregnating a woven fabric therewith and baking it.

Specific examples of usage in the steel field include an iron plate processing roll for iron plate processing equipment.

Specific examples of usage in the electrical field include an insulating oil cap for the Shinkansen bullet train, a benching seal for a liquid-sealed transformer, a transformer seal, an oil well cable jacket, a seal for an oven such as an electric furnace, a window frame seal for a microwave oven, a sealing material used when bonding a wedge and a neck of CRT, a sealing material for a halogen lamp, a fixing agent for an electrical component, a sealing material for end treatment of a sheathed heater, and a sealing material used as an insulation and moisture proof treatment of a lead wire terminal of electrical equipment. The molded article can also be used as a covering material of an oil resistant/heat resistant electric wire, a highly heat resistant wire, a chemical resistant wire, a highly insulated wire, a high voltage transmission line, a cable, an electric wire used in a geothermal power generation apparatus, an electric wire used around an automobile engine, and the like. The molded article can also be used as an oil seal and a shaft seal of a vehicle cable. Moreover, the molded article can also be used as an electrical insulation material (such as a material used as an insulation spacer of various electric apparatuses, an insulation tape used in a joint, a terminal part, and the

like of a cable, and a heat-shrinkable tube), and an electric and electronic apparatus materials used in a high temperature atmosphere (such as a lead wire material for a motor and a wire material around a high temperature furnace). The molded article can also be used in a sealing layer and a protective film (a back sheet) of a solar cell.

In the fuel cell field, the molded article can be used as a sealing material between electrodes or between an electrode and a separator, a seal, a packing, a separator, and the like of a pipe for hydrogen, oxygen, produced water, and the like in solid polymer fuel cells, phosphate fuel cells, and the like.

In the electronic component field, the molded article can be used as a heat dissipation material raw material, an electromagnetic wave shielding material raw material, a gasket for a computer hard disk drive (magnetic recorder), and the like. The molded article can also be used as a cushioning rubber (a crash stopper) for a hard disk drive, a binder for an electrode active material of a nickel-metal hydride secondary battery, a binder for an active material of a lithium-ion battery, a polymer electrolyte for a lithium secondary battery, a binder for the positive electrode of an alkaline rechargeable battery, a binder for an EL element (an electroluminescence element), a binder for the electrode active material of a capacitor, an encapsulating agent, a sealant, a film and a sheet for a covering material for the quartz of an optical fiber, an optical fiber covering material, and the like, a potting, a coating, and an adhesive seal for electronic components and circuit boards such as a CMOS electronic circuit, a transistor, an integrated circuit, an organic transistor, a light emitting element, an actuator, a memory, a sensor, a coil, a capacitor, and a resistor, a fixative for an electronic component, a modifying agent for an encapsulating agent such as epoxy, a coating agent for a printed circuit board, a modifying agent for a printed wiring board prepreg resin such as epoxy, an anti-scattering material for a light bulb and the like, a gasket for a computer, a cooling hose for a large computer, a packing such as a gasket or an O-ring for a secondary battery and especially a lithium secondary battery, a sealing layer for covering one or both outer surfaces of an organic EL structure, a connector, and a damper.

In the chemical reagent transport equipment field, the molded article can be used as a safety valve and a shipping valve for trucks, trailers, tank trucks, ships, and the like.

In the energy resource searching and mining equipment component field for oil, gas, and the like, the molded article can be used as various sealing materials used when mining oil, natural gas, and the like, an electric connector boot used in oil wells, and the like.

Specific examples of usage in the energy resource search and mining equipment component field include a drill bit seal, a pressure regulating diaphragm, a horizontal drilling motor (stator) seal, a stator bearing (shaft) seal, a sealing material used in a blowout prevention apparatus (BOP), a sealing material used in a rotary blowout prevention apparatus (pipe wiper), a sealing material and a gas-liquid connector used in MWD (real-time drilling information detection system), a logging tool seal used in a logging apparatus (such as an O-ring, a seal, a packing, a gas-liquid connector, and a boot), an inflatable packer and a completion packer and a packer seal used therein, a seal and a packing used in a cementing apparatus, a seal used in a perforator, a seal and a packing and a motor lining used in a mud pump, an underground auditory detector cover, a U-cup, a composition seating cup, a rotating seal, a laminated elastomeric bearing, a flow control seal, a sand volume control seal, a safety valve seal, a seal of a hydraulic fracturing apparatus, a seal and a packing for a linear packer and a linear hanger, a wellhead seal and packing, a seal and a packing for a chalk and a valve, a sealing material for LWD (logging while excavation), a diaphragm used in oil exploration and oil drilling applications (such as a diaphragm for supplying lubricating oil to oil drilling bits), and a seal element for gate valves, electronic boots, and perforation guns.

In addition, the molded article can be used in a joint seal for a kitchen, a bathroom, a washroom, and the like; a ground sheet of an outdoor tent; a seal for a stamp material; a rubber hose for a gas heat pump and a Freon-resistant rubber hose; an agricultural film, lining, and weather resistance cover; a tank of a laminated steel sheet or the like used in the fields of construction and household electric appliances, and the like.

Moreover, the molded article can also be used as an article combined with a metal such as aluminum. Examples of such usage include a door seal, a gate valve, a pendulum valve, a solenoid tip, and also a piston seal and a diaphragm combined with a metal, a metal rubber component combined with a metal, such as a metal gasket.

The molded article can also be used as a rubber component, a brake shoe, a brake pad, and the like of bicycles.

One form of the molded article of the present disclosure is a belt. Such a belt is also one aspect of the present disclosure.

Examples of the belt are as follows: a power transmission belt (including a flat belt, a V-belt, a V-ribbed belt, a toothed belt, and the like), a flat belt used as a transport belt (a conveyor belt) at various high-temperature sites, e.g., around an engine of agricultural machinery, a machine tool, industrial machinery, and the like; a conveyor belt for transporting bulk and particulate materials such as coal, crushed stone, earth and sand, ore, wood chips, and the like in a high temperature environment; a conveyor belt used in a steel mill such as a blast furnace; a conveyor belt in applications exposed to a high temperature environment in precision equipment assembly plants, food factories, and the like; a V-belt and a V-ribbed belt for agricultural machinery, general equipment (such as OA equipment, printing machines, and commercial dryers), automobiles, and the like; a transmission belt for a transfer robot; a toothed belt such as a transmission belt for food machines and machine tools; and a toothed belt used in an automobile, OA equipment,

medical equipment, a printing machine, and the like.

In particular, a timing belt is a representative example of a toothed belt for automobiles.

The belt may have a single-layer structure or a multi-layer structure.

In the case of a multi-layer structure, the belt may be composed of a layer made of the molded article and a layer made of another material.

In a belt having a multi-layer structure, examples of the layer made of another material include a layer made of another rubber, a layer made of a thermoplastic resin, various fiber-reinforced layers, canvas, and a metal foil layer.

The molded article can also be used as an industrial anti-vibration pad, an anti-vibration mat, a railway slab mat, a pad, an automobile anti-vibration rubber, and the like. Examples of the automobile anti-vibration rubber include anti-vibration rubbers for an engine mount, a motor mount, a member mount, a strut mount, a bush, a damper, a muffler hanger, a center bearing, and the like.

Examples of another usage include a joint member for a flexible joint, an expansion joint, and the like, a boot, and a grommet. In the ship field, examples include marine pumps.

The joint member refers to a joint used in piping and piping equipment, and used in applications for preventing vibration and noise produced from the piping system, absorbing expansion, contraction and displacement resulting from a temperature change and a pressure change, absorbing a dimensional change, mitigating and preventing the influences of earthquakes and land subsidence, and the like.

The flexible joint and the expansion joint can be preferably used as complex-shape molded articles for, for example, shipbuilding piping, for mechanical piping of a pump, a compressor, and the like, for chemical plant piping, for electrical piping, for civil engineering and water piping, and for automobiles.

The boot can be preferably used as a complex-shape molded article for various industrial boots, e.g., a boot for an automobile such as a constant velocity joint boot, a dust cover, a rack and pinion steering boot, a pin boot, and a piston boot, a boot for agricultural machinery, a boot for an industrial vehicle, a boot for construction machinery, a boot for hydraulic machinery, a boot for pneumatic machinery, a boot for a centralized lubricator, a boot for liquid transfer, a boot for fire extinguishing, and a boot for transferring various types of liquefied gas.

The molded article can also be used for a diaphragm for a filter press, a diaphragm for a blower, a diaphragm for supplying water, a diaphragm for a liquid storage tank, a diaphragm for a pressure switch, a diaphragm for an accumulator, a diaphragm for an air spring such as a suspension, and the like.

By adding the molded article to rubber or resin, an antislipping agent for obtaining a molded article or a coating film that is unlikely to be slippery in a wetting environment of rain, snow, ice, sweat, or the like can be obtained.

The molded article can also be used as, for example, a cushioning material for hot press molding when producing decorative plywood, a printed circuit board, an electrical insulation board, and a rigid polyvinyl chloride laminate made of melamine resin, phenol resin, epoxy resin, or the like.

In addition, the molded article can also contribute to impermeability of various supports such as weapon-related sealing gaskets and protective clothes against contact with invasive chemicals.

The molded article can also be used as an O (square)-ring, a V-ring, an X-ring, a packing, a gasket, a diaphragm, an oil seal, a bearing seal, a lip seal, a plunger seal, a door seal, a lip and face seal, a gas delivery plate seal, a wafer support seal, a barrel seal, and other various sealing materials used for sealing lubricating oil (such as engine oil, transmission oil, and gear oil) containing amine-type additives (in particular, amine-type additives used as antioxidants and detergent dispersants) used in transportation systems such as automobiles and ships, and fuel oil and grease (in particular, urea-based grease), and can also be used as a tube, a hose, various rubber rolls, a coating, a belt, a valve body of a valve, and the like. The molded article can also be used as a laminating material and a lining material.

The molded article can also be used for a coating material for a heat-resistant, oil-resistant electric wire used as a lead wire of a sensor that comes into contact with transmission oil and/or engine oil of an internal combustion engine of an automobile and the like and that detects the oil temperature and/or the oil pressure, and in a high-temperature oil atmosphere inside an oil pan or the like of an automatic transmission or an engine.

In addition, the molded article of the present disclosure may be used after forming a vulcanized film thereon. Specific examples include applications such as a non-stick oil resistant roll for a copier, a weather strip for preventing weathering and freezing, an infusion rubber stopper, a vial rubber stopper, a mold release agent, a non-stick lightweight transport belt, an adhesion preventing coating on a play gasket of an automobile engine mount, a synthetic fiber coating processing, a bolt member or a joint having thin packing-coated layer, and the like.

The automobile-related component applications of the molded article of the present disclosure also include an application as components of motorcycles having the same structure.

Examples of automobile-related fuel include light oil, gasoline, and fuel for diesel engines (including biodiesel fuel).

The molded article can also be used as a sealing material for a rolling bearing.

Examples of the rolling bearing include a ball bearing, a roller bearing, a bearing unit, and a linear bearing.

Examples of the ball bearing include a radial ball bearing, a thrust ball bearing, and a thrust angular contact

ball bearing.

Examples of the radial ball bearing include a deep groove ball bearing, an angular contact ball bearing, a four-point contact ball bearing, and a self-aligning ball bearing.

The deep groove ball bearing is used in, for example, electric motors, household electric appliances, and OA equipment.

Examples of the angular contact ball bearing include a single-row angular contact ball bearing, a matched mounting angular contact ball bearing, and a double-row angular contact ball bearing, and the single-row angular contact ball bearing is used in electric motors, household electric appliances and OA equipment, and in hydraulic pumps, vertical pumps, and the like that are subjected to an axial load in addition to a radial load. The matched mounting angular contact ball bearing is used for the main shaft, the grinding spindle, and the like of a machine tool required to have an increased rotational accuracy and rigidity of the shaft. The double-row angular contact ball bearing is used in an electromagnetic clutch for an automobile air conditioner, and the like.

The four-point contact ball bearing is used in, for example, a speed reducer that receives an axial load from both directions and in which a large space for the bearing width is not available.

The self-aligning ball bearing is used in a place where it is difficult to align the shaft and the housing, a power transmission shaft that readily deflects, and the like.

The thrust ball bearing includes a single direction thrust ball bearing and a double direction thrust ball bearing, and the molded article is applicable to conventionally known applications in which such ball bearings are used.

The thrust angular contact ball bearing is used in combination with a double-row cylindrical roller bearing to receive the axial load of the main shaft of a machine tool.

Examples of the roller bearing include a radial roller bearing and a thrust roller bearing.

Examples of the radial roller bearing include a cylindrical roller bearing, a needle roller bearing, a tapered roller bearing, and a self-aligning roller bearing.

The cylindrical roller bearing is used in general machinery, a machine tool, an electric motor, a speed reducer, a train wheel axle, an aircraft, and the like.

The needle roller bearing is used in general machinery, an automobile, and an electric motor.

The tapered roller bearing is used in a machine tool, a wheel axle for an automobile and a train, a rolling mill, a speed reducer, and the like.

The self-aligning roller bearing is used in general machinery, a rolling mill, a paper making machine, a wheel axle, and the like.

Examples of the thrust roller bearing include a thrust cylindrical roller bearing, a thrust needle roller bearing, a thrust tapered roller bearing, and a thrust self-aligning roller bearing.

The thrust cylindrical roller bearing is used in a machine tool, general machinery, and the like.

The thrust needle roller bearing is used in an automobile, a pump, general machinery, and the like.

The thrust tapered roller bearing is used in general machinery, a rolling mill, and the like.

The thrust self-aligning roller bearing is used in a crane, an extruder, general machinery, and the like.

In particular, the molded article of the present disclosure is particularly suitable as a sealing material, a sliding member, or a non-stick member.

In addition to being crosslinked and used as a molded article, the fluorine-containing elastomer composition can be used as various components in various industrial fields. Accordingly, applications of the fluorine-containing elastomer composition will now be described next.

The fluorine-containing elastomer composition can be used for, for example, surface modifiers for metal, rubber, plastic, glass, and the like; sealing materials and covering materials required to have heat resistance, chemical resistance, oil resistance, and non-stickiness, such as metal gaskets and oil seals; non-stick covering materials such as rolls for OA equipment and belts for OA equipment belts, or bleed barriers; and coating woven fabric sheets and belts by impregnation and baking.

The fluorine-containing elastomer composition, by being configured to have highly viscosity and high concentration, can be used as a sealing material, a lining, and a sealant having a complex shape by an ordinary method; by being configured to have low viscosity, can be used to form a thin film of several micrometers; and, by being configured to have medium viscosity, can be used to coat a pre-coated metal, an O-ring, a diaphragm, and a reed valve.

Moreover, the fluorine-containing elastomer composition can be used to coat a conveyor roll or belt for a woven fabric or a paper sheet, a printing belt, a chemical resistant tube, a chemical stopper, a fuel hose, and the like.

Examples of usable article substrates to be covered with the fluorine-containing elastomer composition include metals such as iron, stainless steel, copper, aluminum, and brass; glass products such as glass plates, and woven fabrics and non-woven fabrics of glass fiber; molded articles of, and items covered with, general-purpose and heat-resistant resins such as polypropylene, polyoxymethylene, polyimide, polyamideimide, polysulfone, polyethersulfone, and polyether ether ketone; molded articles of, and items covered with, general-purpose rubber such as SBR, butyl rubber, NBR, and EPDM, and heat-resistant rubber such as silicone rubber and fluoroelastomer; and woven fabrics and

non-woven fabrics of natural fiber and synthetic fiber.

Covered items formed from the fluorine-containing elastomer composition can be used in fields where heat resistance, solvent resistance, lubricity, and non-stickiness are required, and specific examples of applications include rolls (such as fixing rolls, and crimping rolls) and conveyor belts for OA equipment such as copiers, printers, and facsimiles; sheets and belts; and O-rings, diaphragms, chemical resistant tubes, fuel hoses, valve seals, gaskets for chemical plants, and engine gaskets.

The fluorine-containing elastomer composition can also be used as a coating material or an adhesive by being dissolved in a solvent. The fluorine-containing elastomer composition can also be used as an emulsified dispersion (latex) or as a coating material.

The fluorine-containing elastomer composition is used as, for example, a sealing material and a lining for various apparatuses, pipes, and the like, and a surface-treating agent for structures made of inorganic and organic substrates such as metal, ceramic, glass, stone, concrete, plastic, rubber, wood, paper, and fiber.

The fluorine-containing elastomer composition can be applied to a substrate and the like by dispenser coating or screen printing coating.

The fluorine-containing elastomer composition may be used as a coating composition to cast film or to impregnate a substrate such as fabric, plastic, metal, or an elastomer.

In particular, the fluorine-containing elastomer composition can be used in the form of a latex for producing covered fabric, protective gloves, impregnated fibers, O-ring coverings, covers for fuel system quick connecting O-rings, covers for fuel system seals, covers for fuel tank rollover valve diaphragms, covers for fuel tank pressure sensor diaphragms, covers for oil filter and fuel filter seals, covers for fuel tank sender seals and sender head fitting seals, covers for copier fixing mechanism rolls, and polymer coating material compositions.

The fluorine-containing elastomer composition is useful for covering silicone rubber, nitrile rubber, and other elastomers. To increase the thermal stability thereof as well as both the permeation resistance and the chemical resistance of substrate elastomers, the fluorine-containing elastomer composition is also useful for covering components made from such elastomers. Other applications include coverings for heat exchangers, expansion joints, vats, tanks, fans, flue ducts and other conduits, and storage structures such as concrete storage structures. The fluorine-containing elastomer composition may be applied to the exposed cross-section of a multi-layer component structure in, for example, a method for producing a hose structure and a diaphragm. A sealing member at a connecting part and a joint is often made of a rigid material, and the fluorine-containing elastomer composition provides an improved frictional interface and an enhanced dimensional interference fit, with reduced trace leakage, along a sealed surface. The latex thereof increases seal durability in a variety of automobile system applications.

The fluorine-containing elastomer composition can be used in the production of a power steering system, a fuel system, an air conditioning system, and any joint where a hose and a tube are connected to another component. The fluorine-containing elastomer composition is further useful in the repair of manufacturing defects (and damage resulting from use) in a multi-layer rubber structure such as a three-layer fuel hose. The fluorine-containing elastomer composition is also useful for coating a thin steel sheet that may be formed or embossed before or after a coating material is applied. For example, multiple layers of covered steel can be assembled to form a gasket between two rigid metal members. A sealing effect is obtained by applying the fluorine-containing elastomer composition between the layers. This process can be used to produce an engine head gasket and an exhaust manifold gasket to provide reduced bolt force and strain of assembled components while providing good fuel saving and reduced leakage due to reduced cracks, deflections, and hole strains.

In addition, the fluorine-containing elastomer composition can also be used as a coating agent; a substrate-integrated gasket and packing formed by dispenser-molding the composition onto a substrate containing an inorganic material such as metal or ceramic; a multi-layer article obtained by being coated onto a substrate containing an inorganic material such as metal or ceramic; and the like.

The fluorine-containing elastomer composition is also suitable as a wiring material for electronic devices that are light and bendable, and can be used in known electronic components. Examples include electronic components such as CMOS electronic circuits, transistors, integrated circuits, organic transistors, light emitting elements, actuators, memories, sensors, coils, capacitors, and resistors. Due to the use thereof, flexible electronic devices can be obtained, such as solar cells, various displays, sensors, actuators, electronic artificial skin, sheet-shaped scanners, braille displays, and wireless power transmission sheets.

While embodiments have been described above, it will be understood that various changes in form and details can be made without departing from the gist and scope of the claims.

## EXAMPLES

Next, embodiments of the present disclosure will now be described by way of Examples, but the present disclosure is not limited only to the Examples.

Various numerical values in the Examples were measured by the following methods.

Solid concentration of aqueous dispersion

One gram of an aqueous dispersion was dried in an air dryer under 150°C and 180-minute conditions, and the mass of the heating residue was measured to determine the proportion (mass%) of the mass of the heating residue to the mass (1 g) of the aqueous dispersion.

Polymer adhesion rate

The ratio (adhesion rate to a polymerization tank) of the mass of polymer deposits adhering to the polymerization tank after completion of polymerization to the total amount of a polymer (fluorine-containing elastomer) after completion of polymerization was determined by the following formula.

Polymer adhesion rate (mass%) = Mass of polymer deposits / Mass of resulting polymer (including polymer deposits) × 100

Mass of resulting polymer = Mass of aqueous dispersion × Solid concentration (mass%) of aqueous dispersion / 100 + Mass of polymer deposits

Polymer deposits include a polymer adhering to the inside of the polymerization tank such as the inner wall of the polymerization tank and a stirring blade after an aqueous dispersion is removed from the polymerization tank after completion of polymerization, and a polymer that is freed from the aqueous dispersion due to aggregation and is floating or precipitated without being dispersed in the aqueous dispersion. The mass of polymer deposits is the mass after water contained in the polymer deposits is dried and removed at 120°C.

Average particle size

As for the average particle size (the cumulant average diameter) of fluorine-containing elastomer particles in an aqueous dispersion, measurement was carried out by dynamic light scattering using ELSZ-1000S (manufactured by Otsuka Electronics Co., Ltd.), and the average particle size was calculated by a cumulant method.

Number of particles (number of fluorine-containing elastomer particles in aqueous dispersion)

The number of particles was calculated by the following expression:

$$\text{Number of polymer particles} = \left\{\frac{\text{Solid concentration of aqueous dispersion (mass\%)}}{100 - \mathit{Solid\ concentration\ of\ aqueous\ dispersion\ (mass\%)}}\right\} / \left\{\frac{4}{3} \times 3.14 \times \left(\frac{\text{Average particle size (nm)}}{2} \times 10^{-9}\right)^{3} \times \text{Specific gravity} \times 10^{6}\right\}$$

wherein the average particle size is a cumulant average size as calculated by the method described above, and the number of polymer particles (the number of fluorine-containing elastomer particles) is the number of particles per 1 cc of water, with the specific density of all fluorine-containing elastomers in the Examples and Comparative Examples being 1.8.

Mooney viscosity

The Mooney viscosity was measured at 100°C in accordance with JIS K 6300-1.2013 using a Mooney viscometer MV 2000E manufactured by ALPHA TECHNOLOGIES.

Copolymerization composition

The copolymerization composition was determined by NMR analysis. The amount of the $-CF_2CH_2I$ structure based on 100 mol% of the $-CH_2-$ structure was calculated by A/B*100 from integrated value A of all peak intensities observed in a chemical shift region of 3.75 to 4.05 ppm derived from $-CH_2I$ and integrated value B of all peak intensities observed in chemical shift regions of 2.3 to 2.7 ppm and 2.9 to 3.75 ppm derived from $-CH_2-$ in an NMR spectrum.

Example 1

First, 1,500 g of deionized water and 0.075 g of sodium allylsulfonate were added to an SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain a molar ratio of vinylidene fluoride [VDF]/tetrafluoroethylene [TFE]/hexafluoropropylene [HFP] (= 19/11/70 mol%) and an inner pressure of the polymerization tank of 2.03 MPaG while being stirred.

Then, an aqueous polymerization initiator solution obtained by dissolving 0.030 g of ammonium persulfate (APS) in deionized water was introduced under pressure of nitrogen gas to initiate a reaction. When the internal pressure dropped to 2.00 MPaG as the polymerization progressed, a mixed monomer of VDF/TFE/HFP (= 50/20/30 mol%) was introduced such that the internal pressure was constant at 2.03 MPaG.

When 10 g of the mixed monomer was added, 2.45 g of diiodine compound $I(CF_2)_4I$ was introduced under pressure of nitrogen gas. Moreover, each time when 150 g and 300 g of the mixed monomer were added, an aqueous sodium allylsulfonate solution (having a sodium allylsulfonate content of 0.075 g) was introduced under pressure of nitrogen gas.

Each time at 3.0 hours, 6.0 hours, and 9.0 hours after starting the polymerization, 0.015 g of an aqueous polymerization initiator solution of APS was introduced under pressure of nitrogen gas.

When 502 g of the mixed monomer was added, stirring was stopped, and depressurization was carried out until the polymerization tank reached atmospheric pressure. The polymerization tank was cooled to give an aqueous dispersion having a solid concentration of 23.3 mass%. Table 1 shows the polymer adhesion rate, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 52.8. The copolymer composition examined by NMR analysis was VDF/TFE/HFP = 54/20/26 (mol%). Also, the NMR analysis confirmed that the fluorine-containing elastomer contained 0.31 mol% of the $-CF_2CH_2I$ structure based on 100 mol% of the $-CH_2-$ structure.

Example 2

Polymerization was carried out in the same manner as Example 1 except that 0.300 g of a 25 mass% aqueous sodium vinylsulfonate solution (having a sodium vinylsulfonate content of 0.075 g) was added in place of 0.075 g of sodium allylsulfonate before starting the polymerization, and a 25 mass% aqueous sodium vinylsulfonate solution (having a sodium vinylsulfonate content of 0.075 g) was added in place of an aqueous sodium allylsulfonate solution (having a sodium allylsulfonate content of 0.075 g) after starting the polymerization.

The polymerization tank was cooled to give an aqueous dispersion having a solid concentration of 23.2 mass%. Table 1 shows the polymer adhesion rate, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 47.6. The copolymer composition examined by NMR analysis was VDF/TFE/HFP = 54/20/26 (mol%). Also, the NMR analysis confirmed that the fluorine-containing elastomer contained 0.32 mol% of the $-CF_2CH_2I$ structure based on 100 mol% of the $-CH_2-$ structure.

Example 3

First, 1,500 g of deionized water, 0.090 g of a 25 mass% aqueous sodium vinylsulfonate solution, and 0.150 g of a 50 mass% aqueous solution of $CH_2=CF-CF_2OCF(CF_3)CF_2OCF(CF_3)COONH_4$ (which may be referred to as "fluorine-containing compound 1") were added to an SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain a molar ratio of vinylidene fluoride [VDF]/tetrafluoroethylene [TFE]/hexafluoropropylene [HFP] (= 19/11/70 mol%) and an

inner pressure of the polymerization tank of 2.03 MPaG while being stirred.

Then, an aqueous polymerization initiator solution obtained by dissolving 0.030 g of ammonium persulfate (APS) in deionized water was introduced under pressure of nitrogen gas to initiate a reaction. When the internal pressure dropped to 2.00 MPaG as the polymerization progressed, a mixed monomer of VDF/TFE/HFP (= 50/20/30 mol%) was introduced such that the internal pressure was constant at 2.03 MPaG.

When 10 g of the mixed monomer was added, 2.45 g of diiodine compound $I(CF_2)_4I$ was introduced under pressure of nitrogen gas. Moreover, each time when 150 g and 300 g of the mixed monomer were added, 0.255 g of a 25 mass% aqueous sodium vinylsulfonate solution was introduced under pressure of nitrogen gas.

Each time at 3.0 hours and 6.0 hours after starting the polymerization, 0.015 g of an aqueous polymerization initiator solution of APS was introduced under pressure of nitrogen gas.

When 501 g of the mixed monomer was added, stirring was stopped, and depressurization was carried out until the polymerization tank reached atmospheric pressure. The polymerization tank was cooled to give an aqueous dispersion having a solid concentration of 22.9 mass%. Table 1 shows the polymer adhesion rate, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 51.0. The copolymer composition examined by NMR analysis was VDF/TFE/HFP = 53/21/26 (mol%). Also, the NMR analysis confirmed that the fluorine-containing elastomer contained 0.33 mol% of the $-CF_2CH_2I$ structure based on 100 mol% of the $-CH_2-$ structure.

[Table 1]

Table 1

| | | Example 1 | Example 2 | Example 3 |
|---|---|---|---|---|
| Fluorine-free compound (1) | | Sodium allylsulfonate | Sodium vinylsulfonate | Sodium vinylsulfonate |
| Fluorine-containing compound (A) | | - | - | Fluorine-containing compound 1 |
| Reaction time | min. | 759 | 600 | 448 |
| Polymer adhesion rate | mass% | 0.3 | 0.1 | 0.1 |
| Solid concentration | mass% | 23.3 | 23.2 | 22.9 |
| Mass of aqueous dispersion | 9 | 1968 | 1989 | 2046 |
| Average particle size | nm | 165 | 140 | 152 |
| Number of particles | particle/cc | $7.16 \times 10^{13}$ | $1.18 \times 10^{14}$ | $8.98 \times 10^{13}$ |

Example 4

First, 1,500 g of deionized water and 0.075 g of sodium allylsulfonate were added to an SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain a molar ratio of vinylidene fluoride [VDF]/hexafluoropropylene [HFP] (= 50/50 mol%) and an inner pressure of the polymerization tank of 2.00 MPaG while being stirred.

Then, an aqueous polymerization initiator solution obtained by dissolving 0.072 g of ammonium persulfate (APS) in deionized water was introduced under pressure of nitrogen gas, to thereby start polymerization. When the internal pressure dropped to 1.98 MPaG as the polymerization progressed, a mixed monomer of VDF/HFP (= 78/22 mol%) was introduced such that the internal pressure was constant at 2.00 MPaG.

When 10 g of the mixed monomer was added, 2.16 g of diiodine compound $I(CF_2)_4I$ was introduced under pressure of nitrogen gas.

Each time at 3.0 hours and 6.0 hours after starting the polymerization, 0.072 g of an aqueous polymerization

initiator solution of APS was introduced under pressure of nitrogen gas.

When 500 g of the mixed monomer was added, stirring was stopped, and depressurization was carried out until the polymerization tank reached atmospheric pressure. The polymerization tank was cooled to give an aqueous dispersion. Table 2 shows the polymer adhesion rate, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 54.7. The copolymer composition examined by NMR analysis was VDF/HFP = 78/22 (mol%). Also, the NMR analysis confirmed that the fluorine-containing elastomer contained 0.15 mol% of the $-CF_2CH_2I$ structure based on 100 mol% of the $-CH_2-$ structure.

Example 5

First, 1,500 g of deionized water and 0.075 g of sodium allylsulfonate were added to an SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain a molar ratio of vinylidene fluoride [VDF]/hexafluoropropylene [HFP] (= 50/50 mol%) and an inner pressure of the polymerization tank of 2.00 MPaG while being stirred.

Then, an aqueous polymerization initiator solution obtained by dissolving 0.072 g of ammonium persulfate (APS) in deionized water was introduced under pressure of nitrogen gas. When the internal pressure dropped to 1.98 MPaG as the polymerization progressed, a mixed monomer of VDF/HFP (= 78/22 mol%) was introduced such that the internal pressure was constant at 2.00 MPaG.

When 10 g of the mixed monomer was added, 2.16 g of diiodine compound $I(CF_2)_4I$ was introduced under pressure of nitrogen gas.

Each time when 150 g and 300 g of the mixed monomer were added, an aqueous sodium allylsulfonate solution (having a sodium allylsulfonate content of 0.075 g) was introduced under pressure of nitrogen gas.

Each time at 3.0 hours and 6.0 hours after starting the polymerization, 0.072 g of an aqueous polymerization initiator solution of APS was introduced under pressure.

When 500 g of the mixed monomer was added, stirring was stopped, and depressurization was carried out until the polymerization tank reached atmospheric pressure. The polymerization tank was cooled to give an aqueous dispersion. Table 2 shows the polymer adhesion rate, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 57.5. The copolymer composition examined by NMR analysis was VDF/HFP = 79/21 (mol%). Also, the NMR analysis confirmed that the fluorine-containing elastomer contained 0.15 mol% of the $-CF_2CH_2I$ structure based on 100 mol% of the $-CH_2-$ structure.

[Table 2]

**Table 2**

| | | Example 4 | Example 5 |
|---|---|---|---|
| Fluorine-free compound (1) | | Sodium allylsulfonate | Sodium allylsulfonate |
| Reaction time | min. | 390 | 423 |
| Polymer adhesion rate | mass% | 0.8 | 0.5 |
| Solid concentration | mass% | 24.9 | 24.6 |
| Mass of aqueous dispersion | 9 | 1956 | 1980 |
| Average particle size | nm | 150 | 148 |
| Number of particles | particle/cc | $1.03 \times 10^{14}$ | $1.07 \times 10^{14}$ |

Comparative Example 1

First, 1,500 g of deionized water was added to an SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain a molar ratio of vinylidene fluoride [VDF]/hexafluoropropylene [HFP] (= 50/50 mol%) and an inner pressure of the polymerization tank of 2.00 MPaG while being stirred.

Then, an aqueous polymerization initiator solution obtained by dissolving 0.072 g of ammonium persulfate (APS) in deionized water was introduced under pressure of nitrogen gas. When the internal pressure dropped to 1.98 MPaG as the polymerization progressed, a mixed monomer of VDF/HFP (= 78/22 mol%) was introduced such that the internal pressure was constant at 2.00 MPaG.

When 10 g of the mixed monomer was added, 2.16 g of diiodine compound $I(CF_2)_4I$ was introduced under pressure of nitrogen gas.

Each time at 3.0 hours and 6.0 hours after starting the polymerization, 0.072 g of an aqueous polymerization initiator solution of APS was introduced under pressure of nitrogen gas.

When 500 g of the mixed monomer was added, stirring was stopped, and depressurization was carried out until the polymerization tank reached atmospheric pressure. The polymerization tank was cooled to give an aqueous dispersion. Table 3 shows the polymer adhesion rate, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 47.5. The copolymer composition examined by NMR analysis was VDF/HFP = 78/22 (mol%).

Comparative Example 2

First, 1,500 g of deionized water and 0.075 g of sodium dodecylsulfate were added to an SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain a molar ratio of vinylidene fluoride [VDF]/hexafluoropropylene [HFP] (= 50/50 mol%) and an inner pressure of the polymerization tank of 2.00 MPaG while being stirred.

Then, an aqueous polymerization initiator solution obtained by dissolving 0.072 g of ammonium persulfate (APS) in deionized water was introduced under pressure of nitrogen gas. When the internal pressure dropped to 1.98 MPaG as the polymerization progressed, a mixed monomer of VDF/HFP (= 78/22 mol%) was introduced such that the internal pressure was constant at 2.00 MPaG.

When 10 g of the mixed monomer was added, 2.16 g of diiodine compound $I(CF_2)_4I$ was introduced under pressure of nitrogen gas.

Each time at 3.0 hours, 6.0 hours, and 9.0 hours after starting the polymerization, 0.072 g of an aqueous polymerization initiator solution of APS was introduced under pressure of nitrogen gas.

When 500 g of the mixed monomer was added, stirring was stopped, and depressurization was carried out until the polymerization tank reached atmospheric pressure. The polymerization tank was cooled to give an aqueous dispersion. Table 3 shows the polymer adhesion rate, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 42.8. The copolymer composition examined by NMR analysis was VDF/HFP = 79/21 (mol%).

[Table 3]

Table 3

| | | Comparative Example 1 | Comparative Example 2 | |
|---|---|---|---|---|
| Hydrocarbon surfactant | | - | Sodium dodecyl sulfate | |
| Reaction time | min. | 433 | 654 | |

(continued)

| | | Comparative Example 1 | Comparative Example 2 | |
|---|---|---|---|---|
| Hydrocarbon surfactant | | - | Sodium dodecyl sulfate | |
| Polymer adhesion rate | mass% | 3.7 | 1.6 | |
| Solid concentration | mass% | 24.4 | 24.8 | |
| of aqueous dispersion | g | 1925 | 1957 | |
| Average particle size | nm | 379 | 362 | |
| Number of particles | particle/cc | $6.22 \times 10^{12}$ | $7.34 \times 10^{12}$ | |

Crosslinking characteristics

The fluorine-containing elastomers obtained in Examples 2 and 3 were kneaded to have the formulations shown in Table 4 to give fluorine-containing elastomer compositions. Concerning the resulting fluorine-containing elastomer compositions, a crosslinking curve was determined using a rubber vulcanization tester MDRH2030 (manufactured by M&K Co., Ltd.) at the time of press crosslinking, and the minimum viscosity (ML), the maximum torque level (MH), the induction time (T10), and the optimum vulcanization time (T90) were determined. Further, the fluorine-containing elastomer compositions were crosslinked by press crosslinking and oven crosslinking following the press crosslinking to give crosslinked molded article sheets.

Kneading method: Roll kneading
Press crosslinking: 160°C for 10 minutes
Oven crosslinking: 180°C for 4 hours

Materials shown in Table 4 are as follows.

MT carbon: Thermax N-990 manufactured by Cancarb Limited
TAIC: Triallyl isocyanurate, TAIC, manufactured by Nihon Kasei CO., LTD
Perhexa 25B: 2,5-Dimethyl-2,5-di(t-butylperoxy)hexane, manufactured by NOF CORPORATION

Ordinary-state properties

Using the crosslinked molded article sheets, test pieces having a dumbbell No. 6 shape were prepared in accordance with JIS K 6251, and the 100% modulus (M100), the tensile strength at break (TB), and the elongation at break (EB) of the prepared test pieces in ordinary state were measured.

Hardness

A test piece having a dumbbell No. 6 shape was prepared in the same manner as above, and the hardness (Shore A) of the prepared test piece was measured in accordance with JIS K 6253 (a peak value, 1 sec, 3 sec).

Compression set

Using the fluorine-containing elastomer compositions, press crosslinking and oven crosslinking were carried out under the above conditions to prepare O rings (P-24 size), and the compression set of the prepared O rings was measured in accordance with JIS K 6262 under conditions of 200°C, 72 hours, and 25% compression.
The results of the above measurements are shown in Table 4.

[Table 4]

Table 4

| | | | Example 2 | Example 3 |
|---|---|---|---|---|
| Formulation | Fluorine-containing elastomer | phr | 100 | 100 |
| | MT carbon | phr | 20 | 20 |
| | TAIC | phr | 4 | 4 |
| | Perhexa 258 | phr | 1.5 | 1.5 |
| Crosslinking characteristics 160°C | ML | dNm | 0.6 | 0.7 |
| | MH | dNm | 24.2 | 26.3 |
| | T10 | min | 1.4 | 1.2 |
| | T90 | min | 5.7 | 3.7 |
| Crosslinking conditions | Press crosslinking | | 160°C×10min | |
| | Oven crosslinking | | 180°C×4h | |
| Ordinary-state properties | M100 | MPa | 3.2 | 3.3 |
| | TB | MPa | 25.8 | 25.3 |
| | EB | % | 360 | 320 |
| Hardness | ShoreA peak | point | 67 | 67 |
| | ShoreA 1sec | point | 65 | 65 |
| | ShoreA 3sec | point | 64 | 64 |
| Compression set | | % | 30 | 24 |

Example 6

First, 1,500 g of deionized water and 1.712 g of a 4.38 mass% aqueous monosodium vinylphosphonate solution were added to an SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain a molar ratio of vinylidene fluoride [VDF]/tetrafluoroethylene [TFE]/hexafluoropropylene [HFP] (= 19/11/70 mol%) and an inner pressure of the polymerization tank of 2.03 MPaG while being stirred.

Then, an aqueous polymerization initiator solution obtained by dissolving 0.030 g of ammonium persulfate (APS) in deionized water was introduced under pressure of nitrogen gas to start a reaction. When the internal pressure dropped to 2.00 MPaG as the polymerization progressed, a mixed monomer of VDF/TFE/HFP (= 50/20/30 mol%) was introduced such that the internal pressure was constant at 2.03 MPaG.

When 10 g of the mixed monomer was added, 2.45 g of diiodine compound $I(CF_2)_4I$ was introduced under pressure of nitrogen gas.

Each time at 2.5 hours, 6.0 hours, 9.0 hours, and 11.0 hours after starting the polymerization, 0.03 g of an aqueous polymerization initiator solution of APS was introduced under pressure of nitrogen gas.

When 500 g of the mixed monomer was added, stirring was stopped, and depressurization was carried out until the polymerization tank reached atmospheric pressure. The polymerization tank was cooled to give an aqueous dispersion. Table 5 shows the polymer adhesion rate, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 49.5. The copolymer composition examined by NMR analysis was VDF/TFE/HFP = 54/20/26 (mol%). Also, the NMR analysis confirmed that the fluorine-containing elastomer contained 0.31 mol% of the $-CF_2CH_2I$ structure based on 100 mol% of the $-CH_2-$ structure.

Using the fluorine-containing elastomer, a fluorine-containing elastomer composition was prepared, and the crosslinking characteristics and the like were evaluated by the above methods. The results are shown in Table 6.

Heat aging test

A test piece having a dumbbell No. 6 shape was prepared using a crosslinked molded article sheet. After the test piece was heat-treated at 250°C for 72 hours, the 100% modulus (M100), the tensile strength at break (TB), the elongation at break (EB), and the hardness of the heat-treated test piece were measured by the methods described above. Table 6 shows the rate of change in M100, TB, and EB of the heat-treated test piece relative to the measured values of ordinary-state properties. Table 6 also shows the difference between the hardness (Shore A change) of the test piece before and after the heat treatment.

Example 7

First, 1,500 g of deionized water, 0.300 g of a 25 mass% aqueous sodium vinylsulfonate solution, and 0.150 g of a 50 mass% aqueous fluorine-containing compound 1 solution were added to an SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain a molar ratio of vinylidene fluoride [VDF]/tetrafluoroethylene [TFE]/hexafluoropropylene [HFP] (= 19/11/70 mol%) and an inner pressure of the polymerization tank of 2.03 MPaG while being stirred.
Then, an aqueous polymerization initiator solution obtained by dissolving 0.030 g of ammonium persulfate (APS) in deionized water was introduced under pressure of nitrogen gas to start a reaction. When the internal pressure dropped to 2.00 MPaG as the polymerization progressed, a mixed monomer of VDF/TFE/HFP (= 50/20/30 mol%) was introduced such that the internal pressure was constant at 2.03 MPaG.
When 10 g of the mixed monomer was added, 2.45 g of diiodine compound $I(CF_2)_4I$ was introduced under pressure of nitrogen gas.
Each time at 3.0 hours and 6.0 hours after starting the polymerization, 0.015 g of an aqueous polymerization initiator solution of APS was introduced under pressure of nitrogen gas.
When 500 g of the mixed monomer was added, stirring was stopped, and depressurization was carried out until the polymerization tank reached atmospheric pressure. The polymerization tank was cooled to give an aqueous dispersion. Table 5 shows the polymer adhesion rate, the solid concentration of the aqueous dispersion, the mass of the aqueous dispersion, the average particle size, and the number of particles.
An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 52.4. The copolymer composition examined by NMR analysis was VDF/TFE/HFP = 53/21/26 (mol%). Also, the NMR analysis confirmed that the fluorine-containing elastomer contained 0.32 mol% of the $-CF_2CH_2I$ structure based on 100 mol% of the $-CH_2-$ structure.
Using the fluorine-containing elastomer, a fluorine-containing elastomer composition was prepared, and the crosslinking characteristics and the like were evaluated by the above methods. The results are shown in Table 6.

Example 8

Polymerization was carried out in the same manner as Example 7 except that the amount of the 25 mass% aqueous sodium vinylsulfonate solution added was changed to 0.150 g.
When 502 g of the mixed monomer was added, stirring was stopped, and depressurization was carried out until the polymerization tank reached atmospheric pressure. The polymerization tank was cooled to give an aqueous dispersion. Table 5 shows the polymer adhesion rate, the solid concentration of the aqueous dispersion, the mass of the aqueous dispersion, the average particle size, and the number of particles.
An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 54.0. The copolymer composition examined by NMR analysis was VDF/TFE/HFP = 53/21/26 (mol%). Also, the NMR analysis confirmed that the fluorine-containing elastomer contained 0.27 mol% of the $-CF_2CH_2I$ structure based on 100 mol% of the $-CH_2-$ structure.
Using the fluorine-containing elastomer, a fluorine-containing elastomer composition was prepared, and the crosslinking characteristics and the like were evaluated by the above methods. The results are shown in Table 6.

Example 9

Polymerization was carried out in the same manner as Example 8 except that 0.150 g of a 25 mass% aqueous sodium vinylsulfonate solution was not added before starting the polymerization, 0.150 g of a 25 mass% aqueous sodium vinylsulfonate solution was introduced under pressure of nitrogen gas when 5 g of the mixed monomer was added after

starting the polymerization, and 3.0 hours after starting the polymerization, 0.015 g of an aqueous polymerization initiator solution of APS was introduced under pressure of nitrogen gas.

When 502 g of the mixed monomer was added, stirring was stopped, and depressurization was carried out until the polymerization tank reached atmospheric pressure. The polymerization tank was cooled to give an aqueous dispersion. Table 5 shows the polymer adhesion rate, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 53.2. The copolymer composition examined by NMR analysis was VDF/TFE/HFP = 53/22/25 (mol%). Also, the NMR analysis confirmed that the fluorine-containing elastomer contained 0.33 mol% of the $-CF_2CH_2I$ structure based on 100 mol% of the $-CH_2-$ structure.

Using the fluorine-containing elastomer, a fluorine-containing elastomer composition was prepared, and the crosslinking characteristics and the like were evaluated by the above methods. The results are shown in Table 6.

[Table 5]

Table 5

| | | Example 6 | Example 7 | Example 8 | Example 9 |
|---|---|---|---|---|---|
| Fluorine-free compound (1) | | Monosodium vinylphosphonate | Sodium vinylsulfonate | Sodium vinylsulfonate | Sodium vinylsulfonate |
| Fluorine-containing compound (A) | | - | Fluorine-containing compound 1 | Fluorine containing compound 1 | Fluorine-containing compound 1 |
| Reaction time | min. | 814 | 450 | 393 | 398 |
| Polymer adhesion rate | mass% | 0.7 | 0.1 | 0.2 | 0.2 |
| Solid concentration | mass% | 22.9 | 24.0 | 23.8 | 23.4 |
| Mass of aqueous dispersion | g | 1958 | 1985 | 1993 | 1990 |
| Average particle size | nm | 208 | 117 | 134 | 151 |
| Number of particles | particle/cc | $3.50 \times 10^{13}$ | $2.08 \times 10^{14}$ | $1.39 \times 10^{14}$ | $9.50 \times 10^{13}$ |

[Table 6]

Table 6

| | | | Example 6 | Example 7 | Example 8 | Example 9 |
|---|---|---|---|---|---|---|
| Formulation | Fluorine-containing elastomer | phr | 100 | 100 | 100 | 100 |
| | MT carbon | phr | 20 | 20 | 20 | 20 |
| | TAIC | phr | 4 | 4 | 4 | 4 |
| | Perhexa 25B | phr | 1.5 | 1.5 | 1.5 | |

(continued)

| | | | Example 6 | Example 7 | Example 8 | Example 9 |
|---|---|---|---|---|---|---|
| Crosslinking characteristics 160°C | ML | dNm | 0.7 | 0.8 | 0.8 | 0.8 |
| | MH | dNm | 26.5 | 26.8 | 27.2 | 27.5 |
| | T10 | min | 1.1 | 1.1 | 1.2 | 1.2 |
| | T90 | min | 3.4 | 3.5 3.4 | | 3.3 |
| Crosslinking conditions | Press crosslinking | | 160°C×10min | | | |
| | Oven crosslinking | | 180°C×4h | | | |
| Ordinary-state properties | M100 | MPa | 3.3 3.2 | | 3.2 | 3.2 |
| | TB | MPa | 25.2 | 20.8 | 21.5 | 24.2 |
| | EB | % | 302 | 266 | 278 | 293 |
| Hardness | ShoreA peak | point | 67 | 67 | 68 | 67 |
| | ShoreA 1sec | point | 65 | 65 | 66 | 65 |
| | ShoreA 3sec | point | 64 | 64 | 65 | 64 |
| Compression set | | % | 23 | 21 | 18 | 19 |
| Heat aging test 250°C×72h | M100 Rate of change | % | -37 | -32 | -20 | -18 |
| | TB Rate of change | % | -70 | -58 | -35 | -42 |
| | EB Rate of change | % | 106 | 99 | 61 | 39 |
| | ShoreA change peak | point | 1.6 | 1.3 | 0.6 | 2 |
| | ShoreA change 1sec | point | 07 | 0.5 | 0.3 | 1.5 |
| | ShoreA change 3sec | point | -0.4 | -0.7 | -0.4 | 0.7 |

Example 10

First, 1,500 g of deionized water, 3.0 g of a 5 mass% aqueous solution of fluorine-containing compound 1, and 0.09 g of a 25 mass% aqueous solution of sodium vinylsulfonate were added to an SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain vinylidene fluoride [VDF]/hexafluoropropylene [HFP] (= 50/50 mol%) and 2.00 MPaG while being stirred.

Then, an aqueous polymerization initiator solution obtained by dissolving 0.072 g of ammonium persulfate (APS) in deionized water was introduced under pressure of nitrogen gas. When the internal pressure dropped to 1.98 MPaG as the polymerization progressed, a mixed monomer of VDF/HFP (= 78/22 mol%) was introduced such that the internal pressure was constant at 2.00 MPaG.

When 10 g of the mixed monomer was added, 2.16 g of diiodine compound $I(CF_2)_4I$ was introduced under pressure of nitrogen gas.

Each time when 150 g and 300 g of the mixed monomer were added, 0.105 g of a 25% aqueous sodium vinylsulfonate solution was introduced under pressure.

Then, 3.0 hours after the initiation of polymerization, 0.072 g of an aqueous polymerization initiator solution of APS was introduced under pressure.

When 500 g of the mixed monomer was added, stirring was stopped, and depressurization was carried out until the polymerization tank reached atmospheric pressure. The polymerization tank was cooled to give an aqueous dispersion. Table 7 shows the polymer adhesion rate, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 56.3. The copolymer composition examined by NMR analysis was VDF/HFP = 78/22 (mol%). Also, the NMR analysis confirmed that the fluorine-containing elastomer

contained 0.15 mol% of the $-CF_2CH_2I$ structure based on 100 mol% of the $-CH_2-$ structure.

Example 11

First, 1,500 g of deionized water, 1.5 g of a 5 mass% aqueous solution of fluorine-containing compound 1, and 0.15 g of a 25 mass% aqueous solution of sodium vinylsulfonate were added to an SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain vinylidene fluoride [VDF]/hexafluoropropylene [HFP] (= 50/50 mol%) and 2.00 MPaG while being stirred.

Then, an aqueous polymerization initiator solution obtained by dissolving 0.072 g of ammonium persulfate (APS) in deionized water was introduced under pressure of nitrogen gas. When the internal pressure dropped to 1.98 MPaG as the polymerization progressed, a mixed monomer of VDF/HFP (= 78/22 mol%) was introduced such that the internal pressure was constant at 2.00 MPaG.

When 10 g of the mixed monomer was added, 2.16 g of diiodine compound $I(CF_2)_4I$ was introduced under pressure of nitrogen gas.

Then, 3.0 hours after the initiation of polymerization, 0.072 g of an aqueous polymerization initiator solution of APS was introduced under pressure.

When 500 g of the mixed monomer was added, stirring was stopped, and depressurization was carried out until the polymerization tank reached atmospheric pressure. The polymerization tank was cooled to give an aqueous dispersion. Table 7 shows the polymer adhesion rate, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 60.2. The copolymer composition examined by NMR analysis was VDF/HFP = 79/21 (mol%). Also, the NMR analysis confirmed that the fluorine-containing elastomer contained 0.12 mol% of the $-CF_2CH_2I$ structure based on 100 mol% of the $-CH_2-$ structure.

[Table 7]

Table 7

| | | Example 10 | Example 11 |
|---|---|---|---|
| Fluorine-free compound (1) | | Sodium vinylsulfonate | Sodium vinylsulfonate |
| Fluorine-containing compound (A) | | Fluorine-containing compound 1 | Fluorine-containing compound 1 |
| Reaction time | min. | 255 | 301 |
| Polymer adhesion rate | mass% | 0.6 | 0.2 |
| Solid concentration | mass% | 24.8 | 25.5 |
| Mass of aqueous dispersion | 9 | 1985 | 1977 |
| Average particle size | nm | 117 | 123 |
| Number of particles | partide/cc | $2.15\times10^{14}$ | $1.92\times10^{14}$ |

Example 12

Polymerization was carried out in the same manner as Example 7 except that 1.144 g of a 3.28% aqueous ammonium vinylsulfonate solution was added before starting the polymerization in place of 0.300 g of a 25 mass% aqueous sodium vinylsulfonate solution, and 3.0 hours after starting the polymerization, 0.015 g of an aqueous polymerization initiator solution of APS was introduced under pressure of nitrogen gas.

When 503 g of the mixed monomer was added, stirring was stopped, and depressurization was carried out until the polymerization tank reached atmospheric pressure. The polymerization tank was cooled to give an aqueous dispersion. Table 8 shows the polymer adhesion rate, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 53.6. The copolymer composition examined by NMR analysis was VDF/TFE/HFP = 53/22/25 (mol%). Also, the NMR analysis confirmed that the fluorine-containing elastomer contained 0.33 mol% of the $-CF_2CH_2I$ structure based on 100 mol% of the $-CH_2-$ structure.
Using the fluorine-containing elastomer, a fluorine-containing elastomer composition was prepared, and the crosslinking characteristics and the like were evaluated by the above methods. The results are shown in Table 9.

Example 13

Polymerization was carried out in the same manner as in Example 12 except that 0.750 g of a 10 mass% aqueous solution of $CH_2=CF-CF_2OCF(CF_3)COONH_4$ (which may be referred to as "fluorine-containing compound 2") was added before starting the polymerization in place of 0.150 g of a 50 mass% aqueous solution of fluorine-containing compound 1.
When 501 g of the mixed monomer was added, stirring was stopped, and depressurization was carried out until the polymerization tank reached atmospheric pressure. The polymerization tank was cooled to give an aqueous dispersion. Table 8 shows the polymer adhesion rate, the solid concentration of the aqueous dispersion, the mass of the aqueous dispersion, the average particle size, and the number of particles.
An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 53.2. The copolymer composition examined by NMR analysis was VDF/TFE/HFP = 53/22/25 (mol%). Also, the NMR analysis confirmed that the fluorine-containing elastomer contained 0.34 mol% of the $-CF_2CH_2I$ structure based on 100 mol% of the $-CH_2-$ structure.
Using the fluorine-containing elastomer, a fluorine-containing elastomer composition was prepared, and the crosslinking characteristics and the like were evaluated by the above methods. The results are shown in Table 9.

[Table 8]

Table 8

| | | Example 12 | Example 13 |
|---|---|---|---|
| Fluorine-free compound (1) | | Ammonium vinylsulfonate | Ammonium vinylsulfonate |
| Fluorine-containing compound (A) | | Fluorine-containing compound 1 | Fluorine-containing compound 2 |
| Reaction time | min. | 315 | 313 |
| Polymer adhesion rate | mass% | 0.37 | 0.16 |
| Solid concentration | mass% | 23.4 | 23.1 |
| Mass of aqueous dispersion | g | 1974 | 1966 |
| Average particle size | nm | 135 | 129 |
| Number of particles | particle/cc | $1.33 \times 10^{14}$ | $1.48 \times 10^{14}$ |

[Table 9]

Table 9

| | | | Example 12 | Example 13 |
|---|---|---|---|---|
| Formulation | Fluorine-containing elastomer | phr | 100 | 100 |
| | MT carbon | phr | 20 | 20 |
| | TAIC | phr | 4 | 4 |
| | 258 | phr | 1.5 | 1.5 |

(continued)

| | | | Example 12 | Example 13 |
|---|---|---|---|---|
| Crosslinking characteristics 160°C | Perhexa ML | dNm | 0.9 | 0.9 |
| | MH | dNm | 27.6 | 27.6 |
| | T10 | min | 1.2 | 1.2 |
| | T90 | min | 3.7 | 3.8 |
| Crosslinking conditions | Press crosslinking | | 160°C×10min | |
| | Oven crosslinking | | 180°C×4h | |
| Ordinary-state properties | M100 | MPa | 2.9 | 2.9 |
| | TB | MPa | 24.3 | 24.2 |
| | EB | % | 317 | 309 |
| Hardness | ShoreA peak | point | 67 | 67 |
| | ShoreA 1sec | point | 66 | 65 |
| | ShoreA 3sec | point | 65 | 64 |
| Compression set | | % | 18 | 21 |

## Claims

**1.** A method for producing a fluorine-containing polymer, comprising polymerizing a fluorine-containing monomer in the presence of a fluorine-free compound (1) represented by general formula (1), a polymerization initiator, and an aqueous medium to produce the fluorine-containing polymer:

General formula (1) : $CX^1X^2=CX^3\text{-R-Z}$

wherein $X^1$, $X^2$, and $X^3$ are each independently H or an alkyl group;

R is single bond or an alkylene group;
a total number of carbon atoms of $X^1$, $X^2$, $X^3$, and R is 0 to 5;
Z is $-SO_3M$, $-OSO_3M$, $-P(=O)(OM)_2$, $-OP(O)(OM)_2$, or $-B(OM)_2$;
M is H, a metal atom, $NR^1_4$, optionally substituted imidazolium, optionally substituted pyridinium, or optionally substituted phosphonium; and
$R^1$ is independently H or an organic group, and any two $R^1$ may be bonded to each other to form a ring.

**2.** The production method according to claim 1, wherein the fluorine-containing polymer is a fluorine-containing elastomer.

**3.** The production method according to claim 2, wherein the fluorine-containing elastomer has a Mooney viscosity (ML1 + 10 (100°C)) of 10 to 130.

**4.** The production method according to any one of claims 1 to 3,
wherein an amount of the fluorine-free compound (1) is 3 to 5,000 mass ppm based on the aqueous medium.

**5.** The production method according to any one of claims 1 to 4,
wherein the fluorine-free compound (1) is a fluorine-free compound represented by general formula (1-1):

General formula (1-1) : $CH_2=CX^4\text{-}R^2\text{-Z}$

wherein $X^4$ is H or $CH_3$, $R^2$ is single bond or an alkylene group having 1 to 3 carbon atoms, and Z is as described above.

**6.** The production method according to any one of claims 1 to 5, wherein Z is $-SO_3M$ or $-OSO_3M$, wherein M is as

described above.

7. The production method according to any one of claims 1 to 6, wherein the fluorine-containing polymer comprises vinylidene fluoride unit or tetrafluoroethylene unit.

8. The production method according to any one of claims 1 to 7, wherein the fluorine-containing polymer comprises vinylidene fluoride unit.

9. The production method according to any one of claims 1 to 8, wherein the fluorine-containing monomer is polymerized also in the presence of a fluorine-containing compound (A) represented by general formula (A):

General formula (A): $CX^iX^k=CX^jR^a-(CZ^1Z^2)_k-Y^3$ (A)

wherein $X^i$, $X^j$, and $X^k$ are each independently F, Cl, H, or $CF_3$;

$Y^3$ is a hydrophilic group;
$R^a$ is a linking group;
$Z^1$ and $Z^2$ are each independently H, F, or $CF_3$; and
k is 0 or 1,
provided that at least one of $X^i$, $X^k$, $X^j$, $R^a$, $Z^1$, and $Z^2$ comprises fluorine atom, and provided that when k is 0, Ra is a linking group other than single bond.

10. The production method according to any one of claims 1 to 9, wherein the fluorine-containing monomer is polymerized also in the presence of a chain transfer agent.

11. The production method according to any one of claims 1 to 10, wherein the fluorine-free compound (1) is caused to be present before the polymerization initiator is caused to be present in the polymerization system to start a polymerization reaction.

12. A fluorine-containing elastomer comprising a monomer unit based on a fluorine-free compound (1) represented by general formula (1):

General formula (1): $CX^1X^2=CX^3-R-Z$

wherein $X^1$, $X^2$, and $X^3$ are each independently H or an alkyl group;

R is single bond or an alkylene group;
a total number of carbon atoms of $X^1$, $X^2$, $X^3$, and R is 0 to 5;
Z is $-SO_3M$, $-OSO_3M$, $-P(=O)(CM)_2$, $-OP(O)(CM)_2$, or $-B(OM)_2$;
M is H, a metal atom, $NR^1_4$, optionally substituted imidazolium, optionally substituted pyridinium, or optionally substituted phosphonium; and
$R^1$ is independently H or an organic group, and any two $R^1$ may be bonded to each other to form a ring.

13. The fluorine-containing elastomer according to claim 12, further comprising a $-CH_2I$ structure.

14. An aqueous dispersion comprising the fluorine-containing elastomer according to claim 12 or claim 13 and an aqueous medium.

## INTERNATIONAL SEARCH REPORT

International application No.
PCT/JP2020/048933

A. CLASSIFICATION OF SUBJECT MATTER
C08F 214/18(2006.01)i; C08F 2/24(2006.01)i; C08F 2/38(2006.01)i
FI: C08F214/18; C08F2/38; C08F2/24 A

According to International Patent Classification (IPC) or to both national classification and IPC

B. FIELDS SEARCHED

Minimum documentation searched (classification system followed by classification symbols)
C08F214/ 18; C08F2/24; C08F2/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | WO 2019/065640 A1 (AGC INC.) 04 April 2019 (2019-04-04) table 1, comparative example 1, etc. | 1-14 |
| X | WO 2019/065644 A1 (AGC INC.) 04 April 2019 (2019-04-04) table 1, comparative example 1, etc. | 1-14 |
| X<br>A | JP 3-033148 A (DAINIPPON INK AND CHEMICALS, INCORPORATED) 13 February 1991 (1991-02-13) page 3, upper right column, lines 3-19, page 5, lower right column, lines 17-18, examples 1-3, 5-6, 7-12, comparative examples 1, 3, 7-8, 10, etc. | 1-3, 5-14<br>4 |
| X<br>A | JP 2-240155 A (DAINIPPON INK AND CHEMICALS, INCORPORATED) 25 September 1990 (1990-09-25) page 2, lower right column, lines 3-16, page 4, upper right column, lines 1-8, examples 1-8, comparative examples 2-5, 7-8, 10, etc. | 1-3, 5-14<br>4 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 March 2021 (05.03.2021) | 23 March 2021 (23.03.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/048933

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2001-354728 A (DAINIPPON INK AND CHEMICALS, INCORPORATED) 25 December 2001 (2001-12-25) paragraphs [0015], [0032], examples 1-2, etc. | 1-3, 5-14<br>4 |

Form PCT/ISA/210 (continuation of second sheet) (January 2015)

**INTERNATIONAL SEARCH REPORT**
Information on patent family members

International application No.
PCT/JP2020/048933

| Patent Documents referred in the Report | Publication Date | Patent Family | Publication Date |
|---|---|---|---|
| WO 2019/065640 A1 | 04 Apr. 2019 | CN 111148773 A | |
| WO 2019/065644 A1 | 04 Apr. 2019 | CN 111148774 A | |
| JP 3-033148 A | 13 Feb. 1991 | (Family: none) | |
| JP 2-240155 A | 25 Sep. 1990 | (Family: none) | |
| JP 2001-354728 A | 25 Dec. 2001 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2004510850 W
- JP 53003495 A
- US 20070015864
- US 20070015865
- US 20070015866
- US 20070276103
- US 20070117914
- US 2007142541
- US 20080015319
- US 3250808 A
- US 3271341 A
- JP 2003119204 A
- WO 2005042593 A
- WO 2008060461 A
- WO 2007046377 A
- JP 2007119526 A
- WO 2007046482 A
- WO 2007046345 A
- US 20140228531
- WO 2013189824 A
- WO 2013189826 A
- JP 11147891 A

### Non-patent literature cited in the description

- **KOBUNSHI RONBUNSHU.** *Japanese Journal of Polymer Science and Technology,* October 1992, vol. 49 (10), 765-783